(19) Europäisches Patentamt
European Patent Office
Office européen des brevets

(11) **EP 4 102 446 A1**

(12) **EUROPEAN PATENT APPLICATION**
published in accordance with Art. 153(4) EPC

(43) Date of publication:
**14.12.2022 Bulletin 2022/50**

(21) Application number: **21751486.8**

(22) Date of filing: **04.02.2021**

(51) International Patent Classification (IPC):
**G06Q 50/08** (2012.01)

(52) Cooperative Patent Classification (CPC):
**G06Q 50/08**

(86) International application number:
**PCT/JP2021/004066**

(87) International publication number:
**WO 2021/157645 (12.08.2021 Gazette 2021/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.02.2020 JP 2020018327**

(71) Applicant: **TADANO LTD.**
**Takamatsu-shi, Kagawa 761-0185 (JP)**

(72) Inventor: **UENO, Shunsuke**
**Takamatsu-shi, Kagawa 761-0185 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **PERFORMANCE INFORMATION SERVER, WORK MACHINE DISPLAY OPERATION APPLICATION, MACHINE TYPE INFORMATION PROVISION METHOD, MACHINE TYPE INFORMATION ACQUISITION METHOD, AND MACHINE TYPE INFORMATION ACQUISITION SYSTEM**

(57) The performance information server includes: a request acquisition unit that acquires, from a work machine display operation application operating on a terminal capable of displaying an image including a work machine, a request including a conveyance condition under which the work machine conveys a load; a storage unit that stores specification data of the work machine in mapping with model information of a work machine; a control unit that acquires model information of a work machine having a capability to convey the load under the conveyance condition by referring to the specification data; and a response presentation unit that presents a response including the model information acquired by the control unit to the work machine display operation application.

FIG. 2

**Description**

Technical Field

The present invention relates to a performance information server, a work machine display operation application, a method for providing model information, a method for acquiring model information, and a model information acquisition system.

Background Art

Recently, in the construction industry, applications such as 3D-computer aided design (CAD) and building information modeling (BIM) have been used for building design and work planning (See Patent Literature 1). Such an application generates a 3D image of a building or a work machine and displays it on a display unit. In particular, BIM is also used at the time of creating a work plan using, for example, a crane, a bulldozer, and a truck.

When creating a work plan, the BIM operator selects a work machine (e.g., crane) for performing a predetermined work. Conventionally, the BIM operator selects a work machine, which has a capability to perform the predetermined work, from a list of work machines pre-stored in the BIM. When the capability of the work machine is greater than that required for the predetermined work, the work machine is desirable from the viewpoint of work safety, but the work machine may be costly. On the other hand, when the capability of the work machine is less than that required for the predetermined work, the safety of action will be reduced and the work machine is undesirable.

Citation List

Patent Literature

Patent Literature 1: JP 2006-318112A

Summary of the Invention

Problems to be Solved by the Invention

The present invention has been made in view of the above circumstances, and the object thereof is to provide a technology capable of selecting a work machine suitable for work.

Solutions to Problems

One aspect of the performance information server according to the present invention includes:

a request acquisition unit that acquires, from a work machine display operation application operating on a terminal capable of displaying an image including a work machine, a request including a conveyance condition under which the work machine conveys a load;
a storage unit that stores specification data of the work machine in mapping with model information of a work machine;
a control unit that acquires model information of a work machine having a capability to convey the load under the conveyance condition by referring to the specification data; and
a response presentation unit that presents a response including the model information acquired by the control unit to the work machine display operation application.

One aspect of the work machine display operation application according to the present invention is a work machine display operation application operating on a terminal capable of displaying an image including a work machine, including:

a request issuance function unit that sends a request including a conveyance condition, under which the work machine conveys a load, to a performance information server;
a response acquisition function unit that acquires from the performance information server a response including model information of a work machine which has a capability to convey the load under the conveyance condition; and
a control function unit that reflects contents of the response on a display of a display unit of the terminal.

One aspect of the method for providing model information according to the present invention is a method for providing model information that is executed by a performance information server connected to a terminal where a work machine display operation application capable of displaying an image of a work machine on a display unit operates, wherein the performance information server pre-stores specification data of a work machine in mapping with model information of a work machine, the method including:

acquiring a request including a conveyance condition, under which the work machine conveys a load, from the work machine display operation application;

acquiring model information of a work machine, which has a capability to convey the load under the conveyance condition, by referring to the specification data; and

presenting a response including the acquired model information to the work machine display operation application.

One aspect of the method for acquiring model information according to the present invention is a method for acquiring model information that is executed by a work machine display operation application capable of displaying an image of a work machine on a display unit, including:

receiving input of a conveyance condition under which the work machine conveys a load;

sending a request including the conveyance condition to a performance information server connected to the work machine display operation application; and

receiving a response, which includes model information of a work machine having a capability to convey the load under the conveyance condition, from the performance information server.

One aspect of the model information acquisition system according to the present invention includes: a work machine display operation application operating on a terminal capable of displaying an image including a work machine; and a performance information server connected to the terminal, wherein:

the work machine display operation application

receives input of a conveyance condition under which the work machine conveys a load, and

sends a request including the conveyance condition to the performance information server; and

the performance information server

pre-stores specification data of the work machine in mapping with model information of a work machine,

acquires the request from the work machine display operation application,

acquires model information of a work machine, which has a capability to convey the load under the conveyance condition, by referring to the specification data, and

presents a response including the acquired model information to the work machine display operation application.

Effects of the Invention

The present invention allows the selection of an appropriate work machine for work.

Brief Description of Drawings

FIG. 1 is a diagram illustrating a configuration of a BIM assistance system according to an embodiment.

FIG. 2 is a functional block diagram of the BIM assistance system according to the embodiment.

FIG. 3 is a block diagram illustrating an example of a hardware configuration of a client terminal according to the embodiment.

FIG. 4 is a block diagram illustrating an example of a hardware configuration of a server according to the embodiment.

FIG. 5 is a view presenting an example of a performance data table.

FIG. 6A is a diagram illustrating an example of a flow of data between the client terminal and the server.

FIG. 6B is a diagram illustrating an example of a flow of data between the client terminal and the server.

FIG. 6C is a diagram illustrating an example of a flow of data between the client terminal and the server.

FIG. 6D is a diagram illustrating an example of a flow of data between the client terminal and the server.

FIG. 7A is a flowchart presenting an example of an operation of the BIM assistance system.

FIG. 7B is a view illustrating a part of a toolbar of a BIM application.

FIG. 7C is a view illustrating an example of a crane selection screen.

FIG. 7D is a view illustrating an example of the crane selection screen.

FIG. 7E is a view illustrating an example of the crane selection screen.

FIG. 7F is a view illustrating an example of a crane adjustment screen.
FIG. 8A is a view illustrating an example of an image displayed on the display unit.
FIG. 8B is a view illustrating an example of an image displayed on the display unit.
FIG. 8C is a view illustrating an example of an image displayed on the display unit.
FIG. 9 is a flowchart presenting an example of the operation of the BIM assistance system.
FIG. 10A is a view illustrating an example of an image displayed on the display unit.
FIG. 10B is a view illustrating an example of an image displayed on the display unit.
FIG. 10C is a view illustrating an example of an image displayed on the display unit.
FIG. 11 is a flowchart presenting an example of the operation of the BIM assistance system.
FIG. 12A is a view illustrating an example of an image displayed on the display unit.
FIG. 12B is a view illustrating an example of an image displayed on the display unit.
FIG. 13A is a view illustrating an example of an image of an unbent boom.
FIG. 13B is a view illustrating an example of an image of a bent boom.
FIG. 13C is a view illustrating an example of an image of a bent boom.
FIG. 14 is a flowchart presenting an example of the operation of the BIM assistance system.
FIG. 15A is a view illustrating an example of an image displayed on the display unit.
FIG. 15B is a view illustrating an example of an image displayed on the display unit.
FIG. 16A is a view illustrating an example of an image displayed on the display unit.
FIG. 16B is a view illustrating an example of an image displayed on the display unit.
FIG. 16C is a view illustrating an example of an image displayed on the display unit.
FIG. 16D is a view illustrating an example of an image displayed on the display unit.
FIG. 16E is a view illustrating an example of an image displayed on the display unit.
FIG. 17A is a view illustrating an example of an image displayed on the display unit.
FIG. 17B is a view illustrating an example of an image displayed on the display unit.
FIG. 17C is a view illustrating an example of an image displayed on the display unit.
FIG. 17D is a view illustrating an example of an image displayed on the display unit.
FIG. 17E is a view illustrating an example of an image displayed on the display unit.
FIG. 18A is a view illustrating an example of an image displayed on the display unit.
FIG. 18B is a view illustrating an example of an image displayed on the display unit.
FIG. 18C is a view illustrating an example of an image displayed on the display unit.
FIG. 18D is a view illustrating an example of an image displayed on the display unit.
FIG. 18E is a view illustrating an example of an image displayed on the display unit.
FIG. 19 is a flowchart presenting an example of the operation of the BIM assistance system.
FIG. 20A is a view illustrating an example of an image displayed on the display unit.
FIG. 20B is a view illustrating an example of an image displayed on the display unit.
FIG. 20C is a view illustrating an example of an image displayed on the display unit.
FIG. 21 is a flowchart presenting an example of the operation of the BIM assistance system.
FIG. 22A is a view illustrating an example of an image displayed on the display unit.
FIG. 22B is a view illustrating an example of an image displayed on the display unit.
FIG. 22C is a view illustrating an example of an image displayed on the display unit.
FIG. 23 is a view illustrating an example of a work plan.
FIG. 24 is a flowchart presenting an example of the operation of the BIM assistance system.
FIG. 25A is a view illustrating an example of an input screen displayed on the display unit.
FIG. 25B is a view illustrating an example of a list of model information displayed on the display unit.
FIG. 26 is a view illustrating an example of an image displayed on the display unit.
FIG. 27 is a flowchart presenting an example of the operation of the BIM assistance system.
FIG. 28 is a view illustrating an example of an input screen displayed on the display unit.
FIG. 29 is a view illustrating an example of an image displayed on the display unit.
FIG. 30 is a view illustrating an example of fuel consumption information displayed on the display unit.
FIG. 31 is a flowchart presenting an example of the operation of the BIM assistance system.
FIG. 32 is a view illustrating an example of an image displayed on the display unit.
FIG. 33 is a view illustrating an example of fuel consumption information displayed on the display unit.
FIG. 34 is a flowchart presenting an example of the operation of the BIM assistance system.
FIG. 35 is a view illustrating an example of an image displayed on the display unit.
FIG. 36 is a view illustrating an example of exhaust gas information displayed on the display unit.
FIG. 37 is a flowchart presenting an example of the operation of the BIM assistance system.
FIG. 38 is a view illustrating an example of an image displayed on the display unit.
FIG. 39 is a view illustrating an example of an image displayed on the display unit.

FIG. 40 is a view illustrating an example of an image displayed on the display unit.
FIG. 41 is a view illustrating a configuration of a crane assistance system according to a reference example.
FIG. 42 is a functional block diagram of the crane assistance system according to the reference example.
FIG. 43 is a flowchart presenting an example of the operation of the crane assistance system.

Description of Embodiments

Embodiments of the present invention will be described in detail below with reference to the drawings. The present embodiment will be described below with reference to the drawings. Throughout the present description, identical elements are given the identical reference signs unless otherwise indicated. The matters described below together with the accompanying drawings are intended to illustrate exemplary embodiments and not intended to illustrate only one embodiment. For example, when an order of an operation is illustrated in an embodiment, the order of the operation may be changed as appropriate to an extent that the overall operation is consistent.

[Embodiment]

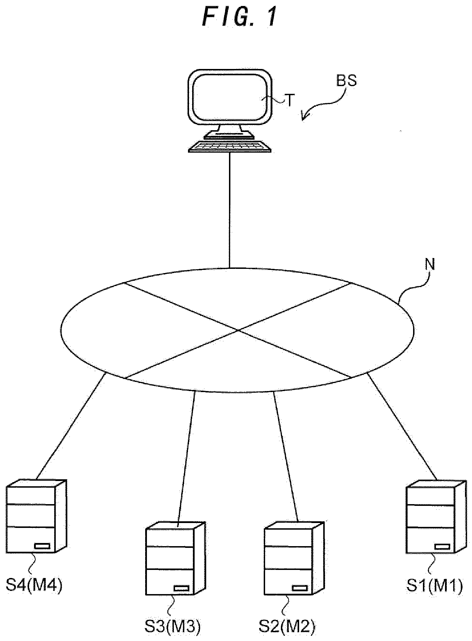

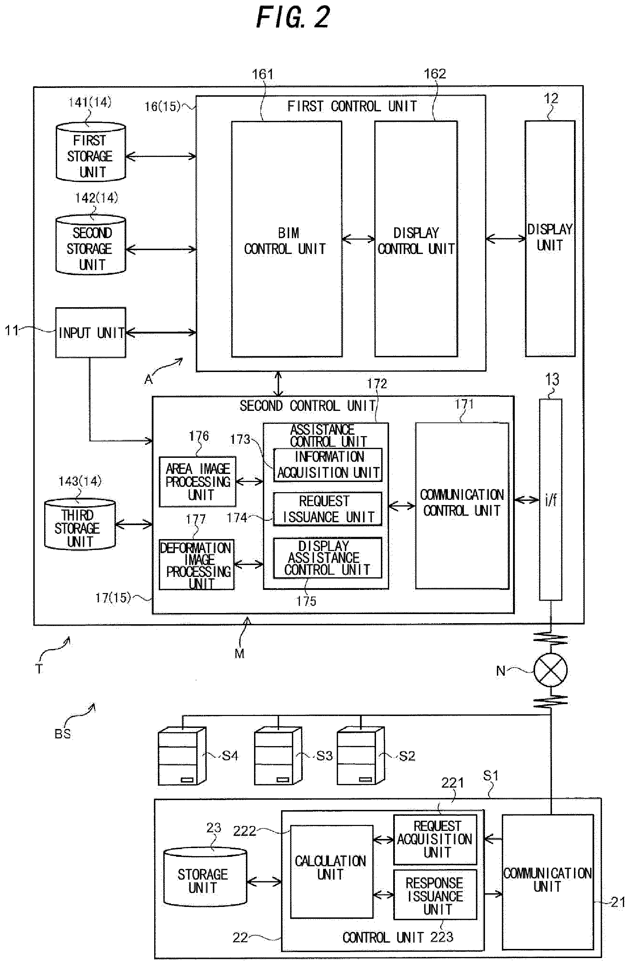

FIG. 1 is a diagram illustrating the configuration of a BIM assistance system BS according to the embodiment. FIG. 2 is a block diagram illustrating the configuration of the BIM assistance system BS according to the embodiment.

<Outline of BIM Assistance System>

The system configuration of the BIM assistance system BS according to the present embodiment will be described below with reference to FIGS. 1 and 2. The BIM assistance system BS corresponds to an example of performance information calculation system, model information acquisition system, environmental load information acquisition system, and movement route information acquisition system.

The BIM assistance system BS has a client terminal T and a plurality of servers S1 to S4 as a hardware configuration. Note that the BIM assistance system BS of the present embodiment is a client-server type BIM assistance system in which the client terminal T and the servers S1 to S4 are connected via a network N. The number of client terminals and servers in the BIM assistance system BS is not limited to that in the illustrated case.

A BIM application A is installed in the client terminal T. The BIM application A corresponds to an example of an image generation application, a work machine display operation application, and an image generation module. The BIM application A has an image generation application assistance module M (hereinafter simply referred to as "assistance module M") as an add-in. The client terminal T in which the assistance module M is incorporated corresponds to an example of a terminal and a display assistance device. The assistance module M may correspond to an example of the work machine display operation application. Further, the combined application of the BIM application A and the assistance module M may correspond to an example of the image generation application or work machine display operation application.

The BIM application A is software specialized for BIM. The BIM application A may be various software for BIM that can plan, design, build, and/or manage construction (building, infrastructure, and the like).

Note that the image generation application and work machine display operation application according to the present invention is not limited to software specialized for BIM, and may be, for example, construction information modeling (CIM), and 2D-CAD and 3D-CAD for design of building. The image generation application may be a virtual reality (VR) simulator that simulates a work machine such as a crane in a virtual space. Note that CIM may be regarded as being included in BIM.

The assistance module M corresponds to an example of an operation assistance module, and operates in cooperation with the BIM application A that generates an image of a work machine to be displayed on a display unit 12.

Such an assistance module M has a function of acquiring model information of the work machine from the servers S1 to S4 (hereinafter referred to as "model information acquisition function"), which has the capability required for conveying a load under predetermined conveyance conditions, by using a request-response type communication protocol (e.g., HTTPS protocol). Therefore, the BIM application A and client terminal T, in which the assistance module M is incorporated, also include the model information acquisition function.

Further, the assistance module M also has a function of acquiring information on the environmental load at a time when conveying a load under predetermined conveyance conditions from the servers S1 to S4 (hereinafter referred to as "environmental load information acquisition function"), by using a request-response type communication protocol (e.g., HTTPS protocol). Therefore, the BIM application A and client terminal T, in which the assistance module M is incorporated, also have the environmental load information acquisition function.

Further, the assistance module M has a function of acquiring information on the movement route of the work machine when the work machine displayed on the display unit 12 of the client terminal T moves under movement conditions from the servers S1 to S4 by using a request-response type communication protocol (e.g., HTTPS protocol). The information on the movement route of the work machine includes information on the post-movement position of the work machine and information on the post-movement direction of the work machine when the work machine has moved under the movement conditions.

In addition, the information on the movement route may be, for example, the route from the entrance of the work site to the arrangement position of the work machine at the work site.

Further, the assistance module M also has a function of acquiring performance information of the work machine displayed on the display unit 12 from the servers S1 to S4 (hereinafter referred to as "performance information acquisition function") by using a request-response type communication protocol (e.g., HTTPS protocol).

Each of the servers S1 to S4 corresponds to an example of a performance information server, and has a function of acquiring model information of a work machine having the capability required for conveying a load under predetermined conveyance conditions on the basis of a request acquired from the assistance module M. In addition, the servers S1 to S4 have a function of presenting a response including the model information of the acquired work machine to the assistance module M (client terminal T) (hereinafter referred to as "model information provision function").

Further, each of the servers S1 to S4 has a function of acquiring information on the environmental load at a time when a work machine conveys a load under predetermined conveyance conditions on the basis of a request acquired from the assistance module M. In addition, the servers S1 to S4 also have a function of presenting a response including the information on the acquired environmental load to the assistance module M (client terminal T) (hereinafter referred to as "environmental load information provision function").

In addition, each of the servers S1 to S4 also has a function of presenting, to the assistance module M (client terminal T), a response including information on the movement route (e.g., information on the post-movement position of the work machine and information on the post-movement direction of the work machine) of the work machine displayed on the display unit 12 of the client terminal T at a time when the work machine moves under predetermined movement conditions based on the request obtained from the assistance module M (hereinafter referred to as "movement information provision function").

Further, each of the servers S1 to S4 also has a function of acquiring performance information of a work machine on the basis of a request acquired from the assistance module M. The servers S1 to S4 also have a function of presenting a response including the acquired performance information to the assistance module M whose request has been received (hereinafter referred to as "performance information provision function").

The above-described performance information includes, for example, information on the rated total load, information on the moment load factor, information on the maximum lowering angle of the boom, information on the operating radius, deformation image information of the boom, deformation image information of the jib, information on the work area image of the work machine, information on the reaction force of the outrigger jack, attitude information of the work machine, information on whether or not work is possible in consideration of the ground strength, and information on the movement route of the load (see column C in Table 2 described later). The performance information includes a determination result of whether or not the work machine can perform a desired work. When the work machine is a crane, the performance information includes information on the movement route of the load.

The assistance module M acquires an attitude condition defining the attitude of the work machine in the image of the work machine displayed on the display unit 12. Hereinafter, the image of the work machine is simply referred to as "work machine image". The attitude of the work machine is simply referred to as "attitude of the work machine image". Furthermore, an attitude condition defining the attitude of the work machine image is simply referred to as "attitude condition of the work machine image".

Further, the assistance module M transmits, to all the servers S1 to S4 or a server specified from the servers S1 to S4, a request including the conveyance conditions under which the work machine conveys a load. For example, the assistance module M transmits a request including information on the weight of the load to be conveyed by the work machine, the position of the conveyance source of the load, the position of the conveyance destination of the load, and the arrangement position of the work machine as conveyance conditions to all the servers S1 to S4 or a server specified from the servers S1 to S4.

Further, the assistance module M transmits a request including information on the model of the work machine, the weight of the load to be conveyed by the work machine, the position of the conveyance source of the load, the position of the conveyance destination of the load, and the arrangement position of the work machine as conveyance conditions to a server specified from the servers S1 to S4.

Further, the assistance module M transmits a request including the model information of the work machine and the movement conditions of the work machine to the server specified from the servers S1 to S4.

The assistance module M transmits a request including an attitude condition, a performance information request for specifying performance information of the work machine, and model information of the work machine to the specified server from the servers S1 to S4.

The assistance module M may specify a server, to which a request is transmitted, by including server specifying information specifying a server corresponding to the work machine image in the request. The server specifying information is the Uniform Resource Identifier (URI) of the server, for example.

The assistance module M receives, from the server, a response including performance information specified by the performance information request. Then, the assistance module M reflects the received performance information on the image displayed on the display unit 12 or the work machine image displayed on the display unit 12.

The servers S1 to S4 acquire, from the client terminal T having the assistance module M, a request including the conveyance conditions under which the work machine conveys a load. For example, the servers S1 to S4 acquire a request including information on the weight of the load to be conveyed by the work machine, the position of the conveyance source of the load, the position of the conveyance destination of the load, and the arrangement position of the work machine as conveyance conditions from the client terminal T having the assistance module M. The servers S1 to S4 each store the model information of the work machine of the corresponding manufacturer.

In addition, the servers S1 to S4, after acquiring the request, acquire the model information of the work machine that has the capability required to convey the load under the conveyance conditions included in the request based on the specification data. Then, the servers S1 to S4 present the response including the acquired model information of the work machine to the client terminal T.

The servers S1 to S4 acquire a request including information on the model of the work machine, the weight of the load to be conveyed by the work machine, the position of the conveyance source of the load, the position of the conveyance destination of the load, and the arrangement position of the work machine as conveyance conditions from the client terminal T having the assistance module M.

In addition, the servers S1 to S4, after acquiring the request, acquire the information on the environmental load of the work machine at the time when conveying the load under the conveyance conditions included in the request. Then, the servers S1 to S4 present the response including the acquired information on the environmental load to the client terminal T.

The servers S1 to S4 acquire, from the client terminal T having the assistance module M, a request including the model information of the work machine and the movement conditions of the work machine.

Further, the servers S1 to S4, after acquiring the request, acquire the information on the movement route of the work machine (for example, information on the post-movement position of the work machine and information on the post-movement direction of the work machine) at the time when the work machine has moved under the movement conditions included in the request. Then, the servers S1 to S4 present the response including the acquired information on the movement route of the work machine to the client terminal T.

Further, the servers S1 to S4 acquire, from the client terminal T having the assistance module M described above, a request including an attitude condition of the work machine image, a performance information request specifying the performance information of the work machine, and a request including model information. Such the servers S1 to S4 store in advance the calculation expression used for calculation of the performance information and the specification data of the work machine.

After acquiring the request, the servers S1 to S4 execute the calculation of the performance information specified by the performance information request on the basis of the attitude condition, the performance information request, and the model information, which are included in the request, and the stored calculation expression and specification data. Then, the servers S1 to S4 present the response including the result of the calculation to the client terminal T.

The calculations performed by such the servers S1 to S4 are calculations having the same accuracy as that of the calculations performed by the calculators included in the actual work machine (e.g., a crane). Since an operator of the BIM application A (hereinafter simply referred to as "operator") can obtain the same performance information as that of the actual work machine in the BIM application A, a detailed construction plan in consideration of the work machine can be efficiently performed.

<Configuration Example of Client Terminal>

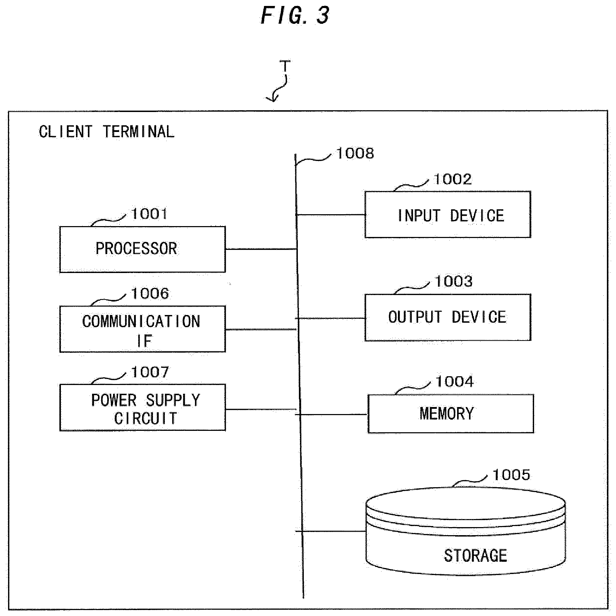

Next, a configuration example of the client terminal T will be described. FIG. 2 is a functional block diagram illustrating an example of the configuration of the BIM assistance system BS according to the first embodiment. FIG. 3 is a block diagram illustrating an example of the hardware configuration of a client terminal T according to the first embodiment. The client terminal T corresponds to an example of a terminal in which the BIM application is incorporated.

(Functional Configuration Example of Client Terminal)

The client terminal T includes an input unit 11, the display unit 12, a communication unit 13, a storage unit 14, and a control unit 15.

(Input Unit)

The input unit 11 receives input such as information having been input from the operator. The input information by the operator is received by the input unit 11 and sent to the control unit 15. An example of the information received by the input unit 11 will be described below.

The input unit 11 receives a model information request. The operator inputs the model information request from the input screen displayed on the display unit 12. The input unit 11 receives input of the conveyance conditions under which the work machine conveys the load. The conveyance conditions are, for example, information on the weight of the load to be conveyed, the position of the conveyance source of the load, the position of the conveyance destination of the load, and the arrangement position of the work machine. In addition, the conveyance of load by a work machine here means the conveyance of a work machine regarding the BIM application A.

The conveyance conditions may include information on the image of the building displayed around the work machine (work machine image) on the display unit 12. The information on the image of the building may be any information necessary for the server to determine the interference between the work machine and the building. The information on the image of the building is, for example, the information on the position of the image of the building or the information on the shape of the image of the building.

Further, the conveyance conditions may include information on the conveyance route of the load. In addition, the conveyance conditions may include the threshold of safety factor, which is the value obtained by dividing the rated total load of the work machine by the weight of the load.

The operator inputs the weight of the load by inputting a numerical value on a setting screen displayed on the display unit 12. In addition, the operator inputs the position of the conveyance source of the load, the position of the conveyance destination of the load, and the arrangement position of the work machine by selecting any position in the image displayed on the display unit 12 via a mouse or other input device.

The input unit 11 receives an input for specifying the type of work machine (e.g., crane type) (hereinafter referred to as "conditions regarding the work machine type"). When acquiring model information from the servers, the operator can specify the type of work machine from the input screen displayed on the display unit 12. The operator may specify multiple work machine types.

Inputs for specifying the work machine manufacturer (hereinafter referred to as "conditions regarding the work machine manufacturer") are received. When acquiring model information from the servers, the operator can specify the manufacturer of work machine from the input screen displayed on the display unit 12. The operator may specify multiple work machine manufacturers. The conditions regarding the work machine type and conditions regarding the work machine manufacturer correspond to an example of model conditions.

The input unit 11 receives an environmental load information request. The operator inputs the environmental load information request from the input screen displayed on the display unit 12. The input unit 11 receives input of the conveyance conditions under which the work machine conveys the load in the BIM application A. The conveyance conditions are, for example, information on the weight of the load to be conveyed, the position of the conveyance source of the load, the position of the conveyance destination of the load, and the arrangement position of the work machine.

The conveyance conditions may include the model information of the work machine. Further, the conveyance conditions may include information on the number of times a load is conveyed. The conveyance conditions may include information on the conveyance route of the load.

The input unit 11 receives a movement route information request. The operator inputs the movement route information request from the input screen displayed on the display unit 12. The input unit 11 receives input of the movement conditions of the work machine regarding the BIM application A. The movement conditions include, for example, information on the movement distance of the work machine, information on the movement direction of the work machine, and information on the steering amount of the steering wheel. The movement conditions may include information on the steering mode of the work machine.

Information on the steering amount of the steering wheel is, for example, the steering angle of the steering wheel (also referred to as "actual steering angle"). In addition, the information on the steering amount of the steering wheel may be the ratio of the actual steering angle to the maximum steering angle.

Further, the input unit 11 receives input of a performance information request. The performance information request includes information specifying performance information of the work machine acquired by the client terminal T from the servers S1 to S4. In other words, the performance information request includes information specifying performance information of the work machine calculated by the servers S1 to S4 and presented to the client terminal T.

Note that the performance information of the work machine specified by the performance information request means performance information of the work machine regarding the image displayed on the display unit 12. Hereinafter, the work machine in the image displayed on the display unit 12 is also referred to as "displayed work machine".

The input unit 11 receives an instruction for displaying an image of a building on the display unit 12. Hereinafter, an image of a building is simply referred to as "building image". An instruction for displaying on the display unit 12 is simply referred to as "display instruction of a building image".

The display instruction of a building image includes, for example, information specifying the type of the building image. The display instruction of a building image includes information on the size of the building image and/or information on the disposition of the building image.

The input unit 11 receives an instruction for displaying a work machine image on the display unit 12. Hereinafter, an instruction for displaying a work machine image on the display unit 12 will be simply referred to as "display instruction of a work machine image".

The display instruction of a work machine image includes, for example, information for specifying the model of the work machine to be displayed on the display unit 12. Hereinafter, the information for specifying the model of the work machine is simply referred to as "model information".

The display instruction of a work machine image may include information on the disposition of the work machine image. Information on the disposition of the work machine image includes, for example, coordinates and/or directions (orientation).

The model information includes at least one of a work machine ID (type, specification number, and/or serial number) and a manufacturer name.

The input unit 11 receives an operation of the image displayed on the display unit 12. Hereinafter, the operation of the image displayed on the display unit 12 will be simply referred to as "image operation".

The image operation includes an operation regarding the building image and/or the work machine image displayed on the display unit 12. Hereinafter, the building image and/or the work machine image displayed on the display unit 12 is sometimes simply referred to as "display image". The building image in the display image is also simply referred to as "display building image". The work machine image in the display image is also simply referred to as "display work machine image".

The image operation includes at least one of an operation of changing the attitude of the display building image, an operation of changing the size (enlargement operation or reduction operation) of the displayed building image, and an operation of changing the disposition of the displayed building image. The image operation includes at least one of an operation of changing the attitude of the display work machine image, an operation of changing the size (enlargement operation or reduction operation) of the displayed work machine image, and an operation of changing the disposition of the displayed work machine image.

The operator performs an image operation by inputting a numerical value on a setting screen displayed on the display unit 12. The operator may perform the image operation by dragging the display building image or the display work machine image.

In the setting screen, the operator changes the attitude of the display work machine image by changing the attitude conditions (specific example will be described later) in the attribute information of the display work machine image. Alternatively, the operator may change the attitude of the display work machine image by dragging the display work machine image. In other words, the input unit 11 receives the input of the attitude conditions that determine the attitude of the display work machine image.

In the setting screen, the operator changes the work state of the display work machine by selecting whether or not an attachment (e.g., a crane jib or a man basket) is used (use state or non-use state) in the display work machine. Such an operation corresponds to an example of a change of work state information in attribute information of the display work machine image.

(Display Unit)

The display unit 12 displays information and the like. The information displayed on the display unit 12 may be information stored in the storage unit 14 or information generated by the control unit 15.

Note that the input unit 11 and the display unit 12 may be configured by individual devices or may be integrated into a device capable of inputting and outputting information (display) in parallel, such as a touch screen display.

(Communication Unit)

The communication unit 13 communicates with the servers S1 to S4 via the network N. For this purpose, the communication unit 13 includes a transmission unit and a reception unit (not illustrated) of information. Communication with the servers S1 to S4 is controlled by the control unit 15, for example.

The communication unit 13 transmits a request described later toward the servers S1 to S4, and receives a response to this request from the servers S1 to S4. The communication unit 13 sends the acquired response to the control unit 15 (specifically, an assistance control unit 172 of a second control unit 17).

(Storage Unit)

The storage unit 14 includes a first storage unit 141, a second storage unit 142, a third storage unit 143, and the like. Note that the storage units 141 to 143 are configured by one piece of hardware (main storage device). However, the storage units 141 to 143 may be configured by a plurality of pieces of hardware.

The first storage unit 141 is a building image database and stores information on building images. Information on a three-dimensional image of a member constituting a building is stored in the first storage unit 141. Hereinafter, a three-dimensional image of a member constituting a building will be simply referred to as "building image". Members constituting a building include at least one of a column, a window, a pipe, a door, a floor, a ceiling, and a wall.

Attribute information associated with each image together with the building image is stored in the first storage unit 141. The attribute information of the building image may include at least one of a member ID (model number, serial number, or the like), type, member name, manufacturer name, standard, dimension, and material.

In addition to the building image, the first storage unit 141 may store information on an image of a component of a work site such as a building site or a construction site. Hereinafter, an image of a component of a work site will be simply referred to as "work site component image". The work site component image may include an image of at least one of, for example, a road (sidewalk or driveway), tree, power line, power pole, car, and person.

The second storage unit 142 is a work machine image database and stores information on work machine images. For example, information on a three-dimensional image of a work machine and/or a member constituting a work machine is stored in the second storage unit 142. Hereinafter, a two-dimensional image or a three-dimensional image of a member constituting a work machine will be simply referred to as "work machine image".

Work machine images include a work machine image of at least one of a crane, bulldozer, hydraulic excavator, concrete pump vehicle, aerial work vehicle, dump truck, trailer, and a lifter. The work machine image may include a three-dimensional image of the component of each of these work machines.

When the work machine is a crane, the crane includes a mobile crane (rough terrain crane or all terrain crane) and/or a tower crane. The component of the crane includes at least one of a boom, jib, outrigger, vehicle, and hook.

Attribute information associated with each work machine image together with the work machine image may be stored in the second storage unit 142.

The attribute information of the work machine image includes model information of the work machine in the work machine image and/or the attitude condition of the work machine image. The attribute information of the work machine image may include information on the work state of the work machine. Hereinafter, the information on the work state of the work machine will be simply referred to as "work state information". The attribute information of the work machine image may include information on a member constituting the work machine. Hereinafter, the information on the member constituting the work machine will be simply referred to as "component information".

The attitude condition includes at least one of, for example, the hoist angle of the boom, the length of the boom, the turn angle of the boom, the hoist angle of the jib, the length of the jib, and the overhang width of the outrigger.

The work state information includes, for example, information specifying at least one work state of the boom work state, the jib work state, the single top work state, the outrigger work state, the on-tire work state, and the hook work state.

The component information includes information on the type of the members constituting the work machine. The members constituting the work machine are, for example, a boom, a jib, a hook, and a wire. Hereinafter, the information on the type of the member constituting the work machine will be simply referred to as "information on type of component".

The third storage unit 143 stores information specifying the server to which a request is sent. The information specifying the server is also referred to as "server specifying information". The server specifying information is stored in the third storage unit 143 in association with the work machine image.

The third storage unit 143 stores the server specifying information in a format capable of specifying the server corresponding to the work machine image from the model information in the attribute information of the work machine image.

Specifically, the third storage unit 143 stores an address table in which the model information included in the attribute information of the plurality of work machine images and the server (server specifying information) corresponding to each model information are associated.

The control unit 15 controls the operation of each of the elements 11 to 14 described above to control the overall operation of the client terminal T. In terms of the function of the BIM assistance system BS, the control unit 15 includes a first control unit 16 and a second control unit 17.

(First Control Unit)

The first control unit 16 includes a BIM control unit 161 and a display control unit 162. The first control unit 16 implements the function of the BIM application A. The first control unit 16 corresponds to an example of an operation control unit of the BIM application A that controls the behavior of the work machine image displayed on the display unit 12 (described later).

(BIM Control Unit)

The BIM control unit 161 acquires information on the display instruction of the building image described above from the input unit 11. Then, the BIM control unit 161 acquires, from the storage unit 14, information on the building image specified by the information on the display instruction of the building image. The BIM control unit 161 sends the acquired information on the building image to the display control unit 162 described later.

The BIM control unit 161 acquires information on the display instruction of the work machine image described above from the input unit 11. Then, the BIM control unit 161 acquires, from the storage unit 14, information on the work machine image specified by the model information included in the acquired display instruction of the work machine image. The BIM control unit 161 sends the acquired information on the work machine image to the display control unit 162 described later.

The BIM control unit 161 acquires information on the image operation described above from the input unit 11. The BIM control unit 161 reflects, on the display image, the acquired information on the image operation.

Specifically, the BIM control unit 161 reflects the acquired information on the image operation (e.g., coordinate, dimension, and/or attitude condition) on the display of the display unit 12 by reflecting the acquired information on the image operation on the attribute information of the display image (e.g., display work machine image).

(Display Control Unit)

The display control unit 162 converts the information on the building image acquired from the BIM control unit 161 into a display signal corresponding to the display unit 12 and outputs it, and causes the display unit 12 to display the building image.

The display control unit 162 converts the information on the work machine image received from the BIM control unit 161 into a display signal corresponding to the display unit 12 and outputs it, and causes the display unit 12 to display the work machine image.

(Second Control Unit)

The second control unit 17 includes a communication control unit 171, an assistance control unit 172, an area image processing unit 176, a deformation image processing unit 177, and the like. The second control unit 17 implements the function of the assistance module M. The assistance control unit 172 implements the functions of an attitude condition acquisition unit, a performance information acquisition unit, and a drawing assistance unit.

(Communication Control Unit)

The communication control unit 171 controls communication between the client terminal T and the servers S1 to S4 via the communication unit 13.

(Assistance Control Unit)

In terms of the function of the assistance module M, the assistance control unit 172 includes an information acquisition unit 173, a request issuance unit 174, a display assistance control unit 175, and the like. Some functions of the assistance control unit 172 implement the function of the performance information acquisition unit.

Further, a part of the assistance control unit 172 corresponds to an example of a performance information acquisition unit. The assistance control unit 172 corresponds to an example of an operation assistance unit. Further, the assistance control unit 172 has a function as the response acquisition function unit that receives a response including the model information of the work machine from the server. Further, the assistance control unit 172 has a function as the response acquisition function unit that receives a response including the environmental load information from the server. Further, the assistance control unit 172 has a function as the response acquisition function unit that receives a response including the information on the movement route of the work machine from the server.

The assistance control unit 172 has a function as the response acquisition unit that receives a response including performance information from the server. Therefore, the assistance control unit 172 corresponds also to an example of a response acquisition unit.

(Information Acquisition Unit)

When having acquired a performance information request from the input unit 11, the information acquisition unit 173 acquires, from the BIM control unit 161, information (hereinafter referred to as "parameters") necessary for acquiring, from the servers S1 to S4, the performance information specified by the performance information request.

The parameters acquired by the information acquisition unit 173 constitute the parameters in a request generated by the request issuance unit 174 described later. Note that the parameters included in the request are presented in Table 1 below. The information acquisition unit 173 corresponds to an example of an attitude condition acquisition unit.

[Table 1]

|  | Parameters |
|---|---|
| Model information | Serial number, model number, and specification number |
| Work state information | Boom work state<br>Jib work state<br>Single top work state<br>Outrigger work state<br>On-tire work state<br>Hook work state |
| Attitude condition | Outrigger width, boom hoist angle, boom length, turn angle, jib hoist angle, and jib length |
| Component information | Information on boom (for example, type)<br>Information on jib (for example, type)<br>Information on hook (for example, type)<br>Information on wire (for example, number of wire hooks)<br>Information on counterweight (for example, weight) |
| Hoisting load information | Hoisting load value |
| Route information | Information indicating route |
| Other information | Unit |

In Table 1, the serial number, the model number, and the specification number correspond to an example of model information. In Table 1, the outrigger state and the boom/jib selection correspond to an example of the work machine state information. The boom/jib selection is to select one of the work state from, for example, the boom work state, the jib work state and the single top work state.

In Table 1, the outrigger width, the boom hoist angle, the boom length, the turn angle, the jib hoist angle, and the jib length correspond to an example of the attitude condition. The outrigger width may be set for each outrigger.

In Table 1, information on the boom (e.g., type of boom), information on the jib (e.g., type of jib), information on the hook (e.g., type of hook), and information on the wire (e.g., number of wire hooks) correspond to an example of the component information.

In Table 1, the units correspond to an example of other information. The route information includes, for example, a movement route of the load, a travel movement route of the work machine, and/or a movement route of the tip end portion of the boom.

Specifically, when having acquired a performance information request from the input unit 11, the information acquisition unit 173 acquires model information in the attribute information of the display work machine image from the BIM control unit 161.

When having acquired a performance information request from the input unit 11, the information acquisition unit 173 acquires, from the BIM control unit 161, work state information for specifying the work state of the work machine of the attribute information of the display work machine image.

When having acquired a performance information request from the input unit 11, the information acquisition unit 173 acquires, from the BIM control unit 161, an attitude condition corresponding to the acquired performance information request of the attribute information of the display work machine image.

When having acquired a performance information request from the input unit 11, the information acquisition unit 173 acquires, from the BIM control unit 161, component information that is information on the component of the work machine of the attribute information of the display work machine image.

The information acquisition unit 173 acquires, from the BIM control unit 161, information on the load hoisted by the work machine in the display work machine image. Hereinafter, the information on the load will be simply referred to as "lifting load information". The lifting load information corresponds to an example of load information.

The information acquisition unit 173 acquires, from the BIM control unit 161, route information of the load lifted by the work machine in the display work machine image. Hereinafter, the route information of the load will be simply referred to as "route information".

The information acquired by the information acquisition unit 173 as described above may be stored in the storage unit 14 in advance as attribute information of the work machine image, or may be information acquired from the servers S1 to S4. Note that a specific example of the information acquired by the information acquisition unit 173 will be presented in Table 2 described later and the operation description of the BIM assistance system BS described later.

Note the as an example of the method for acquiring parameters, the information acquisition unit 173 acquires, from the BIM control unit 161, only the parameters necessary for calculation of the performance information specified by the acquired performance information request of the parameters presented in Table 1.

As an example of the method for acquiring parameters, the information acquisition unit 173 acquires, from the BIM control unit 161, a predetermined type of parameter information of the parameters presented in Table 1 regardless of the performance information specified by the performance information request. The predetermined type of parameter information is all the information on the model information, the attitude condition, the work state information, and the component information in the attribute information, for example.

The information acquisition unit 173 sends the acquired information to the request issuance unit 174.

Further, the information acquisition unit 173 sends the acquired information to the request issuance unit 174 when the information acquisition unit 173 acquires information (e.g., model information request and conveyance conditions) from the input unit 11. The conveyance conditions may be regarded as parameters used by the server to acquire model information. Further, the information acquisition unit 173 sends the acquired model conditions to the request issuance unit 174 when the information acquisition unit 173 acquires model conditions (conditions regarding the model of the work machine and/or conditions regarding the work machine manufacturer) from the input unit 11.

Further, the information acquisition unit 173 sends the acquired information to the request issuance unit 174 when the information acquisition unit 173 acquires information (e.g., environmental load information request and conveyance conditions) from the input unit 11. The conveyance conditions may be regarded as parameters used by the server to acquire environmental load information.

Further, the information acquisition unit 173 sends the acquired information to the request issuance unit 174 when the information acquisition unit 173 acquires information (e.g., movement route information request and movement conditions) from the input unit 11. The movement conditions may be regarded as parameters used by the server to acquire information on the movement route.

(Request Issuance Unit)

On the basis of the model information acquired from the information acquisition unit 173, the request issuance unit 174 acquires server specifying information for specifying the server corresponding to the model information from the third storage unit 143. The request issuance unit 174 corresponds to an example of a request issuance function unit.

Specifically, the request issuance unit 174 acquires the server specifying information corresponding to the model information acquired from the information acquisition unit 173 with reference to the address table stored in the third storage unit 143. Furthermore, the server-specific information may be stored in the attribute information of the work machine image. In other words, for each work machine image, the corresponding server-specific information may be stored.

Then, the request issuance unit 174 generates a request including the acquired server specifying information, performance information request, and parameter.

The request is in the form of request message of HTTPS protocol, for example. The HTTP method used in the request is the GET method, for example. The request issuance unit 174 sends the generated request to the communication control unit 171.

Expression 1 presents an example of a request. The request includes the URI, the performance information request, and the parameter, in order from the head. The parameter includes at least one of the model information, work state information, attitude condition, component information, load information, route information, and other information presented in Table 1 above. The parameter is only required to include at least a parameter necessary for calculation of the performance information to be specified in the performance information request.

Specifically, in Expression 1, "https:// . . . /bimapi/v1.0/Simulation/" corresponds to an example of a URI. In Expression 1, "RatedWeight" corresponds to an example of a performance information request. In Expression 1, "Model={model}&BoomState={boom jib type}&BoomLength={boom length}& . . . " corresponds to an example of a parameter. Note that "model", "boom jib type", and "boom length" in Expression 1 may be replaced with a symbol, a character string, or a numerical value as in Expression 2. In addition, a request that includes a performance information request corresponds to an example of a performance information request.
[Expression 1]

$$http://.../bimapi/v1.0/Simulation/RatedWeight?Model=\{model\}\&Boom State=\{boom jib type\}\&BoomLength=\{boom length\}\& . . .$$
(1)

[Expression 2]

$$http://.../bimapi/vi.0/Simulation/RatedWeight?Model=GR-750XL-2\&BoomState=B\&BoomLength=23.45\& . . . (2)$$

In addition, the request issuance unit 174 generates a request including the acquired model information request and conveyance conditions. The request issuance unit 174 may include model conditions in the request if the model conditions have been acquired. In addition, if the request issuance unit 174 has acquired the conditions regarding the work machine manufacturer from the input unit 11, the request issuance unit 174 acquires server-specific information that identifies the server of the work machine manufacturer indicated by the conditions regarding the work machine manufacturer. The request issuance unit 174 may acquire server-specific information from the third storage unit 143.

In addition, if the request issuance unit 174 has not acquired the conditions regarding the work machine manufacturer from the input unit 11, the request issuance unit 174 acquires server-specific information of all the servers. The request issuance unit 174 then includes the acquired server-specific information in the request. The request issuance unit 174 sends the generated request to the communication control unit 171 sequentially. In addition, a request that includes a model information request corresponds to an example of a model information request.

In addition, the request issuance unit 174 generates a request including the acquired environmental load information request and conveyance conditions. The request issuance unit 174 also acquires server-specific information that identifies the server, to which this request is sent, based on the acquired model information of the work machine. The request issuance unit 174 may acquire server-specific information from the third storage unit 143.

In addition, the request issuance unit 174 generates a request including the acquired movement route information request and movement conditions. The request issuance unit 174 also acquires server-specific information that identifies the server, to which this request is sent, based on the acquired model information of the work machine. The request issuance unit 174 may acquire server-specific information from the third storage unit 143.

(Display Assistance Control Unit)

The display assistance control unit 175 analyzes the response acquired from the communication control unit 171 and reflects the calculation results of the servers S1 to S4 included in the response on the display of the display unit 12. The display assistance control unit 175 sends the calculation results of the servers S1 to S4 included in the response to the BIM control unit 161, and reflects them on the image to be displayed on the display unit 12 or the image having been displayed on the display unit 12. The display assistance control unit 175 corresponds to an example of a response acquisition unit, a drawing assistance unit, and a control function unit.

The display assistance control unit 175 may reflect the calculation results on the display of the display unit 12 by updating the attribute information of the display work machine image on the basis of the calculation results of the servers S1 to S4 included in the response.

When the response includes information on the area image, the display assistance control unit 175 sends the information on the area image to the area image processing unit 176.

The display assistance control unit 175 sends the area image acquired from the area image processing unit 176 to the BIM control unit 161, and reflects the area image on the display of the display unit 12. Note that the area image is an image on which the calculation results (i.e., information on the area image) of the servers S1 to S4 included in the response are reflected.

When the response includes information on a deformation image, the display assistance control unit 175 sends the information on the deformation image to the deformation image processing unit 177.

The display assistance control unit 175 sends the deformation image acquired from the deformation image processing unit 177 to the BIM control unit 161, and reflects the deformation image on the display of the display unit 12. Noted that the deformation image may be regarded as an image on which the calculation results (i.e., information on the deformation image) of the servers S1 to S4 included in the response are reflected.

If the response includes model information, the display assistance control unit 175 makes a list of the model information (hereinafter referred to as "model information list") and sends it to the BIM control unit 161. The BIM control unit 161 displays the acquired model information list on the display unit 12. Therefore, it may be taken that the display assistance control unit 175 displays the model information list on the display unit 12.

The display assistance control unit 175 sends information on environmental load to the BIM control unit 161 if the response includes information on environmental load. The BIM control unit 161 displays information on environmental load on the display unit 12. Further, it may be taken that the display assistance control unit 175 displays information on environmental load on the display unit 12.

The display assistance control unit 175 sends information on the movement route of the work machine to the BIM control unit 161 if the response includes information on the movement route of the work machine. Here, the information on the movement route of the work machine includes information on the post-movement position of the work machine and information on the post-movement direction of the work machine. The BIM control unit 161 refers to the acquired information on the movement route of the work machine and reflects the information on the movement route on the display unit 12. Specifically, if the information on the movement route is information on the post-movement position of the work machine and information on the post-movement direction of the work machine, the display assistance control unit 175 displays the image of the work machine toward the post-movement direction of the work machine on the display unit 12 at the post-movement position of the work machine. Further, it may be taken that the display assistance control unit 175 displays the post-movement work machine on the display unit 12.

The processing of the display assistance control unit 175 is sometimes referred to as "display assistance processing". A specific example of the display assistance processing will be presented in the operation description of the BIM assistance system BS.

(Area Image Processing Unit)

The area image processing unit 176 generates an area image on the basis of information on the area image acquired from the display assistance control unit 175. Such the area image processing unit 176 corresponds to an example of an area image generation unit. Then, the area image processing unit 176 sends the generated area image to the display assistance control unit 175. The area image processing unit 176 may be regarded as an example of a deformation image generation unit.

The area image is an image in which the range (hereinafter referred to as "movable area of the hook") in which the hook of the work machine can be moved in the attitude of the work machine displayed on the display unit 12 is illustrated in a two-dimensional and/or three-dimensional manner. That is, it may be taken that the work machine includes the hook.

When the work machine displayed on the display unit 12 is lifting the load, the lifting tool and the load may be regarded as being included in the work machine. In this case, the area image illustrates, in a two-dimensional and/or three-dimensional manner, the range (hereinafter referred to as "movable area of the lifting tool") in which the lifting tool can be moved and/or the range (hereinafter referred to as "movable area of the load") in which the load can be moved. A specific example of the area image will be presented in the operation description of the BIM assistance system BS. Note that the area image generated by the area image processing unit 176 may be regarded as an example of a deformation image related to the work machine image.

(Deformation Image Processing Unit)

The deformation image processing unit 177 generates a deformation image on the basis of information on the deformation image acquired from the display assistance control unit 175. The deformation image processing unit 177 corresponds to an example of a deformation image generation unit. Then, the deformation image processing unit 177 sends the generated deformation image to the display assistance control unit 175. A specific example of the deformation image will be presented in the operation description of the BIM assistance system BS. Note that the deformation image to be generated by the deformation image processing unit 177 may be regarded as an example of a deformation image related to the work machine image.

Note that the BIM application A and the assistance module M incorporated in the client terminal T as described above may be incorporated in a cloud server (not illustrated) and executed. The cloud server is connected to the servers S1 to S4 via the network N.

The cloud server is connected via the network N to a client terminal (not illustrated) in which a viewer is incorporated. The viewer is an application that displays an image generated by the BIM application A executed on the cloud server.

The operator operates the image generated by the BIM application A via the viewer of the client terminal. Such a system corresponds to an example of a cloud type BIM assistance system. In the cloud type BIM assistance system, a cloud server corresponds to an example of a terminal in which an image generation application is incorporated.

(Hardware Configuration Example of Client Terminal)

As illustrated in FIG. 3, the client terminal T is a desktop computer (personal computer, workstation, and the like), a laptop computer (personal computer, workstation, and the like), a tablet terminal, a mobile device such as a smartphone, or the like.

In terms of the hardware configuration, the client terminal T includes a processor 1001, an input device 1002, an output device 1003, a memory 1004, and a storage 1005, which are included in a general desktop computer or laptop computer.

The client terminal T includes a communication interface (IF) 1006 and a power supply circuit 1007. These elements 1001 to 1007 may be connected via a bus 1008, for example.

The processor 1001 controls the operation of the client terminal T. The processor 1001 is an example of a circuit or device including a calculation ability. For the processor 1001, at least one of, for example, a central processing unit (CPU), a micro processing unit (MPU), and a graphics processing unit (GPU) may be used.

The input device 1002 may include the input unit 11 presented in FIG. 2. The input device 1002 may include at least one device used to input information to the client terminal T, such as a keyboard, touch screen, and mouse. Through the input device 1002, information may be input to the processor 1001.

The output device 1003 may include the display unit 12 presented in FIG. 2. Specifically, the output device 1003 may include a display (or monitor) corresponding to the display unit 12. The display may be a touch screen type display. The touch screen type display may be regarded as corresponding to both the input device 1002 and the output device 1003.

The memory 1004 stores, for example, a program executed by the processor 1001 and data or information processed in response to the execution of the program. The memory 1004 includes a random access memory (RAM) and a read only memory (ROM). The RAM may be used for the work memory of the processor 1001. The "program" is referred to as "software" or "application".

The storage 1005 stores, for example, a program executed by the processor 1001 and data or information processed in response to the execution of the program. The storage 1005 stores information on the BIM assistance system BS such as information on the building image described earlier, information on the work machine image, and the server specifying information.

The storage 1005 includes a semiconductor drive device such as a hard disk drive (HDD) or a solid state drive (SSD). In addition to or in place of a semiconductor drive device, a non-volatile memory such as flash memory may be included in the storage 1005. The memory 1004 and the storage 1005 correspond to the storage unit 14 of FIG. 2.

The program includes a program (hereinafter referred to as "BIM program") that embodies the BIM application A and the assistance module M as described above. The entire or part of the program code constituting the BIM program may be stored in the memory 1004 and/or the storage 1005, or may be incorporated into part of an operating system (OS).

The program and/or data may be provided in a form recorded in a recording medium readable by the processor 1001. Examples of the recording medium include a flexible disk, a CD-ROM, a CD-R, a CD-RW, an MO, a DVD, a Blu-ray disk, and a portable hard disk. A semiconductor memory such as a universal serial bus (USB) memory is also an example of a recording medium.

The program and/or information may be provided (downloaded) from an application server (not illustrated) to the client terminal T via the network N. Through the communication IF 1006, the program and/or information may be provided to the client terminal T and stored in the memory 1004 and/or the storage 1005. The program and/or data may also be provided to the client terminal T through the input device 1002 and stored in the memory 1004 and/or the storage 1005.

The communication IF 1006 corresponds to the communication unit 13 of FIG. 2 and is an interface for communicating with the network N. The communication IF 1006 may include a wireless interface for wireless communication. The communication IF 1006 may include a wired interface for wired communication.

When the processor 1001 reads and executes the BIM program stored in the storage unit 14, the client terminal T functions as an example of a display processing device that implements the functions of the BIM application A and the assistance module M as described above.

When the processor 1001 executes the BIM program, each of the elements 161 and 162 of the control unit 15 illustrated in FIG. 2 is embodied.

The power supply circuit 1007 supplies electric power for operating each of the elements 1001 to 1006 illustrated in FIG. 3 to each of the elements 1001 to 1006.

<Server>

The BIM assistance system BS illustrated in FIG. 1 exemplarily includes the plurality of servers S1 to S4. FIG. 1 illustrates the four servers S1 to S4 as a non-limiting example. The number of servers may be one or more and three or less or five or more.

The servers S1 to S4 are provided for each work machine manufacturer, for example. The server S1 of the servers S1 to S4 will be described below. The configuration of the servers S2 to S4 is the same as that of the server S1, and it is therefore omitted. The server S1 is a server corresponding to a work machine manufacturer M1, for example. The servers S2 to S4 are server corresponding to the work machine manufacturers M2 to M4, respectively. In addition, the servers S1 to S4 may be combined into a single server. In other words, a single server may correspond to a plurality of work machine manufacturers M1 to M4.

(Functional Configuration Example of Server)

The server S1 includes a communication unit 21, a storage unit 23, a control unit 22, and the like.

(Communication Unit)

The communication unit 21 communicates with the client terminal T via the network N. For this purpose, the communication unit 21 includes a transmission unit and a reception unit (not illustrated) of information. Communication with the client terminal T is controlled by a control unit (not illustrated). Note that the communication unit 21 communicates between the server S1 and the servers S2 to S4 via the network N.

In the present embodiment, the server S1 is connected with the client terminal T via the Internet. The server S1 and the client terminal T communicate with each other using a TCP/IP protocol such as an HTTPS protocol. Note that the communication protocol between the server S1 and the client terminal T is not limited to the HTTPS protocol, and may be various communication protocols of a so-called request-response type.

The communication unit 21 sends the request received from the client terminal T to the control unit 22. The communication unit 21 transmits the response acquired from the control unit 22 to the client terminal T.

(Storage Unit)

The storage unit 23 stores a calculation expression (not illustrated) used in the calculation performed by a calculation unit 222. The calculation expression is used for the calculation of the performance information to be specified by the performance information request included in the request. The storage unit 23 stores an interpolation calculation expression used for the interpolation calculation described later.

The storage unit 23 stores performance data (e.g., rated total load) used for the calculation performed by the calculation unit 222. The storage unit 23 stores, for example, performance data as a performance table in a tabular format. The performance table is a table (hereinafter referred to as "performance data table") in which parameters such as the attitude condition (boom hoist angle, boom length, boom turn angle, jib hoist angle, jib length, and outrigger overhang width) of the work machine image, the work state of the crane, and the operating radius of the crane are associated with performance data.

(Example of Performance Data Table)

The performance data table corresponds to an example of a performance table, and is a table for obtaining performance data (e.g., rated total load) from the attitude condition, work state information, operating radius, and the like. Such the performance data table is stored in the storage unit 23 for each model of the work machine.

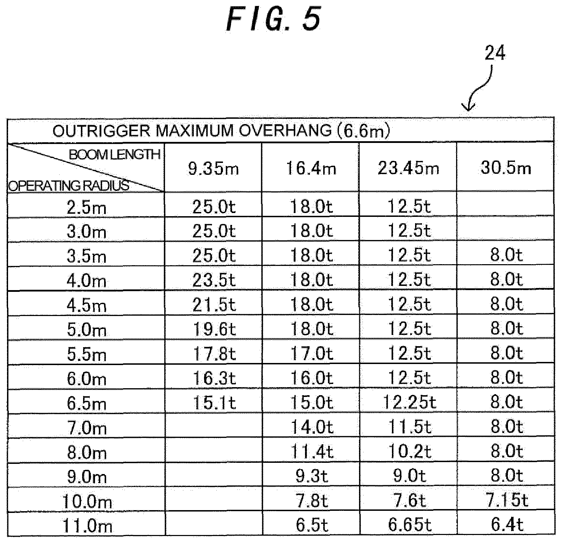

An example of the performance data table is presented in FIG. 5. FIG. 5 illustrates a performance data table 24 related to the boom length and the operating radius, and the rated total load, which is performance data, in a boom work state and an outrigger work state and in a case where the overhang width of each outrigger is maximum.

For example, in the performance data table 24 presented in FIG. 5, when the boom length (e.g., 9.35 m) and the operating radius (e.g., 2.5 m) are given as parameters, the rated total load (25 t) corresponding to each of those parameters is obtained. Note that the performance data table is provided for each piece of work state information such as the jib work state, the on-tire state, and/or the outrigger state. A plurality of performance data tables are provided in accordance with the overhang width of the outrigger.

The performance data table 24 presented in FIG. 5 includes the boom lengths and operating radii arranged at predetermined intervals, and the rated total load. The smaller the predetermined interval is, the more accurate the performance data table becomes. For example, with the boom lengths (e.g., 9.35 m, 16.4 m, and the like) and the operating radii (e.g., 2.5 m and 3.0 m) whose values are presented in the performance data table 24 presented in FIG. 5, the rated total load can be obtained from the performance data table.

However, in the case of the boom length (e.g., 12 m) not illustrated in the performance data table 24 presented in FIG. 5, the rated total load at the operating radius 2.5 m cannot be obtained from the performance data table 24. The rated total load, which cannot be directly obtained from the performance data table 24, is obtained by interpolation calculation by the calculation unit 222. The calculation unit 222 executes this interpolation calculation by using the interpolation calculation expression acquired from the storage unit 23.

The performance data table 24 may be, for example, a performance data table related to the reaction force of the outrigger jack or a performance data table related to bending of the boom. The performance data table related to the bending of the boom stores, for example, the type of the boom or jib, the attitude condition of the crane, and the bending amount of the tip of the boom or jib in accordance with the lifting load in association with each other. The attitude conditions of the crane are, for example, the boom length, boom hoist angle, jib length, and jib offset angle (jib hoist angle).

In addition, the storage unit 23 stores the model information of the work machine and the specification data corresponding to the model information of the work machine. The specification data is used for the calculation performed by the calculation unit 222.

The specification data in the case where the work machine is a mobile crane includes the weight gravity center position and weight of the carrier portion (also referred to as "lower travel body") of the mobile crane. The specification data includes the weight gravity center position and weight of each outrigger with respect to the overhang length of each outrigger.

In the case where the work machine is a mobile crane, the specification data includes the turn center coordinate, weight gravity center position, and/or weight of the upper turn table. In the case where the work machine is a mobile crane, the specification data includes the rotation center coordinate, weight gravity center position, and/or weight of the base boom with respect to the reference coordinate of the upper turn table.

In the case where the work machine is a mobile crane, the specification data includes the attachment origin coordinate, weight gravity center position, and/or weight of the second boom with respect to the base boom. Furthermore, the specification data includes the weight per unit length of a wire rope. In the case where the work machine is a mobile crane, the specification data includes information on the steering mode of the mobile crane.

The steering mode includes, for example, a mode in which only the front wheels change direction as the steering wheel is turned, a mode in which only the rear wheels change direction as the steering wheel is turned, a mode in which the front and rear wheels change direction in opposite directions as the steering wheel is turned, and a mode in which the front and rear wheels change direction in the same direction as the steering wheel is turned, etc. Furthermore, the work machine may have not only front and rear wheels, but also wheels between the front and rear wheels (intermediate wheels). In this case, the steering mode may include the front, intermediate, and rear wheels.

The storage unit 23 may store the relation between the steering angle of the steering wheel and the rotation angle of the tire in each steering mode, for example, as a table.

Also, in the case where the work machine is a mobile crane, the specification data may include information on the dimensions of the components of the mobile crane (e.g., travel body, turn table, boom, jib, and tires). In the case where the work machine is a mobile crane, it is preferable that the attitude that the mobile crane can take can be calculated based on the specification data. Note that the specification data is not limited to the example described above.

The storage unit 23 corresponds to an example of a server-side first storage unit, a server-side second storage unit, and a server-side third storage unit. The storage unit 23 stores the basic fuel consumption information, which is the fuel consumption per unit operation of the work machine, in mapping with the model information of the work machine and the type of operation of the work machine. The basic fuel consumption information may be mapped to the weight of the load.

Here, in the case where the work machine is a crane, the type of operation of the work machine means the operation that the crane performs when conveying a load. Specifically, in the case where the work machine is a crane, the types of operations of the work machine include boom slewing, boom raising and lowering (raising or lowering operation), boom extending and retracting (extending or retracting operation), jib raising and lowering (raising or lowering operation), winch winding, winch uncoiling, etc. However, the types of operation of the work machine are not limited to these operations.

If the type of operation is boom slewing, the unit operation means, for example, a slewing operation with a slewing angle of 1 degree. Thus, if the type of operation is boom slewing, the basic fuel consumption information means the fuel consumption of the work machine in a slewing operation with a slewing angle of 1 degree.

If the type of operation is boom raising, the unit operation means a raising operation with a boom raising angle of 1 degree. Thus, if the type of operation is boom raising, the basic fuel consumption information means the fuel consumption of the work machine in a raising operation with a boom raising angle of 1 degree.

The storage unit 23 stores information on the position of noise source and the noise distribution in the work machine in mapping with the model information of the work machine. The storage unit 23 may store the flow rate of exhaust gas emitted from the work machine in a unit time (1 minute), for example, in mapping with the model information of the work machine. The information on the position of noise source may be, for example, the coordinates of the noise source relative to a reference position in the work machine (e.g., the center of gravity of the work machine). This reference position is not limited to the center of gravity of the work machine, and may be any other portion in the work machine.

The information on the noise distribution is information that enables the generation of noise distribution images at the client terminal T (BIM application A or assistance module M). The information on the noise distribution may be, for example, a mathematical formula.

In addition, the information on the position of noise source and the noise distribution in the work machine is referred to as "basic noise information". The information on the noise distribution may be, for example, the noise distribution at the maximum engine rotation speed of the work machine.

Further, the storage unit 23 stores information on the position of exhaust gas source and the exhaust gas distribution in the work machine in mapping with the model information of the work machine. The information on the position of exhaust gas source may be, for example, the coordinates of the exhaust gas source relative to a reference position in the work machine (e.g., the center of gravity of the work machine). This reference position is not limited to the center of gravity of the work machine, and may be any other portion in the work machine.

Further, the information on the exhaust gas distribution is information that enables the generation of exhaust gas distribution images at the client terminal T (BIM application A or assistance module M). The information on the exhaust gas distribution may be, for example, a mathematical formula.

The information on the position of exhaust gas source and the exhaust gas distribution in the work machine is referred to as "basic exhaust gas information". The information on the exhaust gas distribution may be, for example, the exhaust gas distribution at the maximum engine rotation speed of the work machine.

(Control Unit)

The control unit 22 includes a request acquisition unit 221, the calculation unit 222, a response issuance unit 223, and the like.

(Request Acquisition Unit)

The request acquisition unit 221 analyzes the request acquired from the communication unit 21. In the present embodiment, the request is in the form of HTTP message of HTTPS protocol. The HTTP method used in the request is the GET method. The request acquisition unit 221 corresponds to an example of a request acquisition function unit.

Specifically, the request acquisition unit 221 extracts a performance information request and a parameter from the request. The parameter is a parameter corresponding to the performance information request, and is information of at least one of model information, attitude condition, work state information, component information, load information, route information, and other information presented in Table 1 above.

An example of a method for extracting a parameter from a request will be described. When the parameter included in the request is only a parameter necessary for the calculation of the performance information specified by the performance information request included in the request, the request acquisition unit 221 extracts all the parameters included in the request.

Another example of a method for extracting an attitude condition from a request will be described. When the parameter included in the request is a predetermined type of parameter, the request acquisition unit 221 selects and extracts a parameter necessary for the calculation of the performance information specified by the performance information request included in the request of the parameters included in the request.

Note that the performance information request corresponds to each item of the column A in Table 2 below. The column B in Table 2 presents the parameters (e.g., model information, attitude condition, work state information, component information, load information, route information, and other information presented in Table 1 above) included in the request.

In the description of Table 2, column numbers A to C and row numbers 1 to 10 are used when referring to the items in Table 2. For example, the item in the column A, the row 1 of Table 2 is indicated as A-1 of Table 2. In a work state where jib is not used, information on the jib may be omitted.

For example, in a case of use of a fixed-length jib, the length of the jib may or may not be included in the parameter. In case of not including the length of the jib in the parameter, the length of the jib included in the specification data may be used for the calculation described later.

[Table 2]

|  | A (performance information request) | B (parameters) | C (performance information) |
|---|---|---|---|
| 1 | Display request for rated total load | Work machine ID (model, specification number, or serial number) | Rated total load |
|  |  | Work state (on-tire work and outrigger work) |  |
|  |  | Outrigger overhang width |  |
|  |  | Boom information (type, hoist angle, length, and turn angle) |  |
|  |  | Jib information (type, hoist angle, and jib length) |  |
|  |  | Hook information |  |
|  |  | Number of wire hooks |  |
|  |  | Counterweight information |  |
| 2 | Display request for moment load factor | Work machine ID (model, specification number, or serial number) | Moment load factor |
|  |  | Work state (on-tire work and outrigger work) |  |
|  |  | Outrigger overhang width |  |
|  |  | Boom information (type, hoist angle, length, and turn angle) |  |
|  |  | Jib information (type, hoist angle, and length) |  |
|  |  | Hook information |  |
|  |  | Number of wire hooks |  |
|  |  | Lifting load |  |
|  |  | Counterweight information |  |

(continued)

| A (performance information request) | B (parameters) | C (performance information) |
|---|---|---|
| 3 Display request for rated total load at maximum moment load factor | Work machine ID (model, specification number, or serial number) | Rated total load |
| | Work state (on-tire work and outrigger work) | |
| | Outrigger overhang width | |
| | Boom information (type, hoist angle, length, and turn angle) | |
| | Jib information (type, hoist angle, and jib length) | |
| | Hook information | |
| | Number of wire hooks | |
| | Moment load factor | |
| | Counterweight information | |
| 4 Display request for maximum lowering angle and maximum | Work machine ID (model, specification number, or serial number) | Maximum lowering angle and operating radius of boom |
| | Work state (on-tire work and outrigger work) | |
| | Outrigger overhang width | |
| operating radius of boom | Boom information (type, length, and turn angle) | |
| | Jib information (type, hoist angle, and length) | |
| | Hook information | |
| | Number of wire hooks | |
| | Lifting load | |
| | Counterweight information | |

(continued)

|   | A (performance information request) | B (parameters) | C (performance information) |
|---|---|---|---|
| 5 | Display request for deformation image of boom and deformation image of jib | Work machine ID (model, specification number, or serial number) | Deformation image information of boom and deformation image information of jib |
|   |   | Work state (on-tire work and outrigger work) |   |
|   |   | Outrigger overhang width |   |
|   |   | Boom information (type, hoist angle, length, and turn angle) |   |
|   |   | Jib information (type, hoist angle, and length) |   |
|   |   | Hook information |   |
|   |   | Number of wire hooks |   |
|   |   | Lifting load |   |
|   |   | Counterweight information |   |
| 6 | Display request for work area image of work machine | Work machine ID (model, specification number, or serial number) | information on work area image of work machine |
|   |   | Work state (on-tire work and outrigger work) |   |
|   |   | Outrigger overhang width |   |
|   |   | Boom information (type) |   |
|   |   | Jib information (type) |   |
|   |   | Hook information |   |
|   |   | Number of wire hooks |   |
|   |   | Lifting load |   |
|   |   | Counterweight information |   |

(continued)

| A (performance information request) | B (parameters) | C (performance information) |
|---|---|---|
| 7 — Display request for attitude condition of work machine, moment load factor, and Whether or not work is possible | Work machine ID (model, specification number, or serial number) | Boom hoist angle Boom length Turn angle Jib length Jib hoist angle Moment load factor Determination result on whether or not work is possible |
| | Work state (on-tire work and outrigger work) | |
| | Outrigger overhang width | |
| | Boom information (type) | |
| | Jib information (type) | |
| | Hook information | |
| | Number of wire hooks | |
| | Lifting load | |
| | Hoisting load route (routing position) information | |
| | Counterweight information | |
| 8 — Display request for reaction force of outrigger jack | Work machine ID (model, specification number, or serial number) | Reaction force value of outrigger jack |
| | Outrigger overhang width | |
| | Boom information (type, hoist angle, length, and turn angle) | |
| | Jib information (type, hoist angle, and length) | |
| | Hook information | |
| | Number of wire hooks | |
| | Lifting load | |
| | Counterweight information | |

(continued)

|  | A (performance information request) | B (parameters) | C (performance information) |
|---|---|---|---|
| 9 | Display request for whether or not work is possible in consideration of ground strength | Work machine ID (model, specification number, or serial number) | Reaction force value of outrigger jack Determination result on whether or not work is possible Workable arrangement position |
|  |  | Outrigger overhang width |  |
|  |  | Boom information (type, hoist angle, length, and turn angle) |  |
|  |  | Jib information (type, hoist angle, and length) |  |
|  |  | Hook information |  |
|  |  | Number of wire hooks |  |
|  |  | Lifting load |  |
|  |  | Ground strength |  |
|  |  | Counterweight information |  |
| 10 | Movement route of hoisting load | Work machine ID (model, specification number, or serial number) | Movement route of hoisting load |
|  |  | Outrigger overhang width |  |
|  |  | Hook information |  |
|  |  | Number of wire hooks |  |
|  |  | Lifting load |  |
|  |  | Information on building image |  |
|  |  | Start point of hoisting load |  |
|  |  | End point of hoisting load |  |
|  |  | Counterweight information |  |

The request acquisition unit 221 extracts parameters (conveyance conditions) from the request if the request includes a model information request. The request acquisition unit 221 may extract model conditions as parameters from the request if the request includes a model information request.

The request acquisition unit 221 extracts parameters (model information and conveyance conditions) from the request if the request includes an environmental load information request.

The request acquisition unit 221 extracts parameters (model information and movement conditions) from the request if the request includes a movement route information request.

The request acquisition unit 221 sends the information extracted from the request to the calculation unit 222. Note that the processing of the request acquisition unit 221 may be carried out by the calculation unit 222 described later.

(Calculation Unit)

The calculation unit 222 calculates performance information specified by the performance information request included in the request on the basis of the information acquired from the request acquisition unit 221 and the information acquired from the storage unit 23.

The calculation unit 222 selects a calculation expression to be used for calculation on the basis of the information included in the request. Then, the calculation unit 222 acquires the selected calculation expression from the storage unit 23.

As an example of the method for selecting a calculation expression, the calculation unit 222 selects a calculation expression to be used for the calculation on the basis of the performance information request included in the request.

As an example of the method for selecting a calculation expression, the calculation unit 222 selects a calculation expression to be used for the calculation on the basis of the performance information request included in the request and information other than the performance information request included in the request. The information other than the performance information request includes, for example, model information, attitude condition, work state information, and/or component information (information on type of component).

The calculation unit 222 selects the specification data of the work machine used for the calculation on the basis of the information included in the request. Then, the calculation unit 222 acquires the selected specification data from the storage unit 23.

As an example of the method for selecting the specification data, the calculation unit 222 selects the specification data of the work machine to be used for the calculation on the basis of the model information included in the request.

As an example of the method for selecting the specification data, the calculation unit 222 selects the specification data of the work machine to be used for the calculation on the basis of the model information included in the request and information (e.g., performance information request and/or attitude condition) other than the model information included in the request.

(Regarding First Calculation)

As an example of the calculation performed by the calculation unit 222, the calculation unit 222 calculates the performance information specified by the performance information request on the basis of the performance information request and parameter (model information, attitude condition, and the like) acquired from the request acquisition unit 221 and the calculation expression and specification data acquired from the storage unit 23.

Such a calculation is referred to as "first calculation". Throughout the present description, the first calculation means a calculation that does not use the performance data (performance data table) stored in the storage unit 23.

(Regarding Second Calculation)

As an example of the calculation performed by the calculation unit 222, the calculation unit 222 calculates the performance information specified by the performance information request on the basis of the performance information request and parameter (model information, attitude condition, and the like) acquired from the request acquisition unit 221 and the calculation expression, the performance data table, and the specification data acquired from the storage unit 23.

Such a calculation is referred to as "second calculation" or "interpolation calculation". Throughout the present description, the second calculation and the interpolation calculation mean a calculation that uses the performance data (performance data table) stored in the storage unit 23.

Note that throughout the present description, the interpolation calculation sometimes means a calculation that interpolates performance data (e.g., rated total load) between data in the performance data table. Such interpolation calculation is performed by an interpolation method such as linear interpolation. Such interpolation calculation is performed by an interpolation method based on the unique expertise of each work machine manufacturer. The calculation unit 222 sends the calculation result to the response issuance unit 223.

(Regarding Third Calculation)

The third calculation performed by the calculation unit 222 is described below. The third calculation is to acquire the model information of the work machine in accordance with the request from the client terminal T. In the third calculation, the calculation unit 222 sets up a virtual space (hereinafter referred to as "virtual space") and performs simulation (calculation) of conveyance in this virtual space. Then, the work machine, which has the capability required to convey the load under the conveyance conditions included in the request, is selected.

The conveyance conditions included in the request here are at least information on the weight of the load to be conveyed by the work machine, the position of the conveyance source of the load, the position of the conveyance destination of the load, and the arrangement position of the work machine.

First, the calculation unit 222 sets the virtual arrangement position, the virtual position of the conveyance source, and the virtual position of the conveyance destination in the virtual space. Here, the virtual arrangement position corresponds to the position indicated by the information on the work machine arrangement position included in the request. The virtual position of the conveyance source corresponds to the position indicated by the information on the position of the conveyance source of the load included in the request. The virtual position of the conveyance destination corresponds to the position indicated by the information on the position of the conveyance destination of the load included in the request.

Then, the calculation unit 222 determines whether or not the work machine has the capability to convey the load from the virtual position of the conveyance source to the virtual position of the conveyance destination when the work machine is arranged at the virtual arrangement position in the virtual space. In addition, the weight of the load is the weight indicated by the information on the weight of the load included in the request.

Specifically, the calculation unit 222 first selects a work machine from the model information (work machines) stored in the storage unit 23. The selected work machine is then arranged at the virtual arrangement position in the virtual space. Furthermore, if the model conditions included in the request include a condition regarding the type of work machine, the calculation unit 222 selects only the work machines that satisfy this condition regarding the type of work machine.

Next, the calculation unit 222 acquires the specification data of the selected work machine from the storage unit 23. Then, the calculation unit 222 determines, based on the acquired specification data, the attitude of the work machine at the time of conveying the load from the virtual position of the conveyance source to the virtual position of the conveyance destination in the virtual space.

The attitude of the work machine changes as the conveyance proceeds. If the request does not include information on the conveyance route, the calculation unit 222 may set the conveyance route from the virtual position of the conveyance source to the virtual position of the conveyance destination. The calculation unit 222 acquires the performance data (rated total load) corresponding to the attitude of the work machine for each attitude of the determined work machine. The method for acquiring performance data may be the aforementioned first or second calculation.

Then, the calculation unit 222 compares the acquired performance data (rated total load) with the weight of the load. The calculation unit 222 determines that the selected work machine has the desired performance for conveying a load if the acquired performance data (rated total load) corresponding to the total attitude is equal to or greater than the weight of the load.

If the request includes a safety factor threshold, the calculation unit 222 determines that the selected work machine has the desired performance for conveying the load when the value obtained by dividing the acquired performance data (rated total load) by the weight of the load is equal to or greater than this safety factor.

If the request includes information on the conveyance route, the calculation unit 222 may set a virtual conveyance route in the virtual space. This virtual conveyance route corresponds to the conveyance route indicated by the information on the conveyance route included in the request.

Next, the calculation unit 222 determines the attitude of the work machine (also referred to as "attitude conditions of the work machine during conveyance") at the time when conveying a load through the virtual conveyance route from the virtual position of the conveyance source to the virtual position of the conveyance destination. The calculation unit 222 then calculates the performance data (rated total load) corresponding to the attitude of the work machine for each attitude of the determined work machine.

The calculation unit 222, by repeating this process, selects the work machine which has the capability required to convey the load under the conveyance conditions included in the request. Further, the attitude conditions of the work machine being conveyed, as determined by the calculation unit 222, may be included in the response in mapping with the model information. In other words, the server may present the attitude conditions of the work machine being conveyed on the client terminal T in mapping with the model information.

If the request includes information on a building image, the calculation unit 222 arranges this building image in the virtual space. Then, the calculation unit 222 determines whether there is interference between the work machine and the building at the time of conveying the load from the virtual position of the conveyance source to the virtual position of the conveyance destination.

The calculation unit 222 determines that the work machine has the desired performance for conveying the load if the work machine is capable of conveying the load without interfering with the building.

(Response Issuance Unit)

The response issuance unit 223 corresponds to an example of a response presentation unit and generates a response including the calculation result acquired from the calculation unit 222. The response issuance unit 223 sends the generated response to the communication unit 21.

The response is in the form of response message of HTTPS protocol, for example. The calculation result is described in the message body of the response.

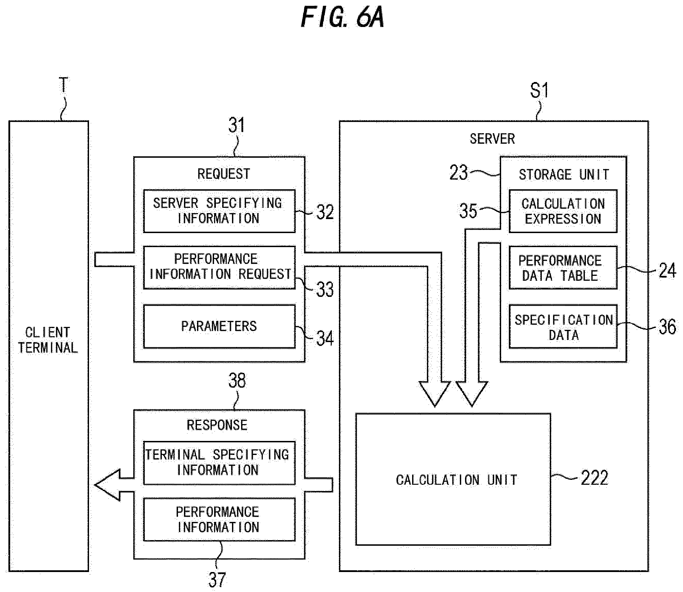

Here, referring to FIG. 6A, an example of the calculation performed by the calculation unit 222 will be described in terms of the flow of data between the client terminal T and the server S1. FIG. 6A is a diagram simply illustrating an example of the flow of data between the client terminal T and the server S1 when the client terminal T acquires performance information from the server S1.

As illustrated in FIG. 6A, first, the client terminal T transmits a request 31 to the server S1. The request 31 includes server specifying information 32 for specifying the server S1, a performance information request 33, and a parameter 34. The parameter 34 includes, for example, at least one of model information, attitude condition, work state information, component information, load information, route information, and other information. Note that the parameter 34 is only required to include at least information necessary for the calculation of the performance information specified by the performance information request 33.

The server S1 calculates the performance information specified by the performance information request 33 included in the request 31 on the basis of the parameter 34 included in the request 31 acquired from the client terminal T, a calculation expression 35, the performance data table 24 (see FIG. 5), and specification data 36, which are acquired from the storage unit 23 of the server S1.

Specifically, the calculation unit 222 of the server S1 acquires, from the storage unit 23, the performance information request 33 acquired from the request acquisition unit 221 and the calculation expression 35 corresponding to the model information included in the parameter 34.

The calculation unit 222 acquires, from the storage unit 23, the performance data table 24 (see FIG. 5) corresponding to the parameter 34 (model information, attitude condition, and/or work state) acquired from the request acquisition unit 221. At this time, the calculation unit 222 acquires a plurality of performance data tables corresponding to the acquired parameters 34 (model information, attitude condition, and/or work state) from the storage unit 23. The performance data table 24 corresponds to an example of a performance information table.

Furthermore, the calculation unit 222 acquires the specification data 36 corresponding to the work machine specified by the model information of the acquired parameter 34 from the storage unit 23.

Then, the calculation unit 222 calculates performance information 37 specified by the performance information request 33 acquired from the client terminal T on the basis of the parameter 34 acquired from the client terminal T, the calculation expression 35, the performance data table 24, and the specification data 36, which are acquired from the storage unit 23.

Then, the server S1 transmits a response 38 including the calculation result (performance information 37) to the client terminal T. The response 38 includes terminal specifying information specifying the client terminal T, together with the performance information 37.

The calculation unit 222 can perform calculation with substantially the same accuracy as that of the calculation unit mounted on the actual machine of the work machine. In other words, the calculation expression, performance data table, and specification data used by the calculation unit 222 are the same as the calculation expression, performance data table, and specification data used by the calculation unit mounted on the actual machine of the work machine.

Note that in the actual machine of the work machine, the jack reaction force of the outrigger is a detection value of a jack reaction force detection means. On the other hand, in the present embodiment, the jack reaction force of the outrigger is obtained by simulation calculation.

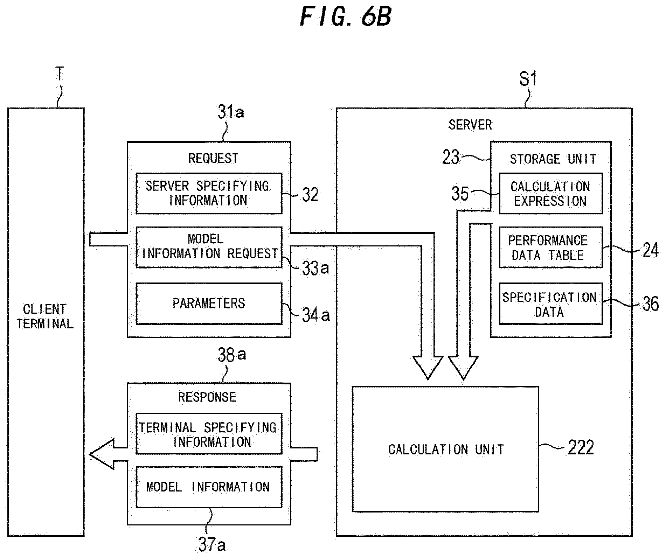

FIG. 6B is a diagram simply illustrating an example of the flow of data between the client terminal T and the server S1 when the client terminal T acquires model information from the server S1.

As illustrated in FIG. 6B, first, the client terminal T transmits a request 31a to the server S1. The request 31a includes server specifying information 32 for specifying the server S1, a model information request 33a, and a parameter 34a. The parameter 34a includes, for example, conveyance conditions such as information on the weight of the load to be conveyed by the work machine, the position of the conveyance source of the load, the position of the conveyance destination of the load, and the arrangement position of the work machine. Note that the parameter 34a is only required to include at least information necessary for the calculation for selecting the model information on the server S1.

The server S1 acquires the model information of the work machine that has the capability required to convey the load under the conveyance conditions included in the request 31a based on the parameter 34a included in the request 31a acquired from the client terminal T and the specification data 36 acquired from the storage unit 23 of the server S1. In addition, the server S1 may use the calculation expression 35 or the performance data table 24 (see FIG. 5) acquired from the storage unit 23 when using the third calculation in the description to acquire the model information.

Then, the server S1 transmits a response 38a including the calculation result (model information 37a) to the client terminal T. The response 38a includes terminal specifying information specifying the client terminal T, together with the model information 37a.

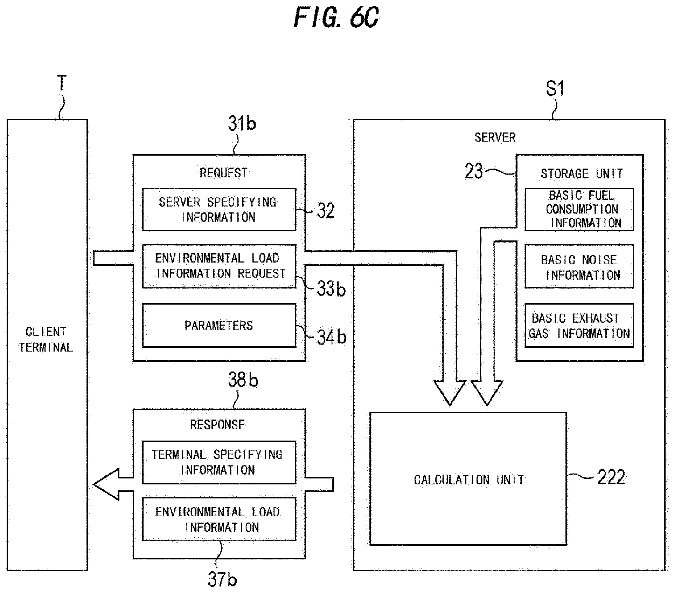

FIG. 6C is a diagram simply illustrating an example of the flow of data between the client terminal T and the server S1 when the client terminal T acquires environmental load information from the server S1.

As illustrated in FIG. 6C, first, the client terminal T transmits a request 31b to the server S1. The request 31b includes server specifying information 32 for specifying the server S1, a environmental load information request 33b, and a parameter 34b.

The parameter 34b includes, for example, conveyance conditions such as model information of the work machine, information on the weight of the load, information on the position of the conveyance source of the load, information on the position of the conveyance destination of the load, and information on the arrangement position of the work machine. Note that the parameter 34b is only required to include at least information necessary for the calculation of the environmental load information (e.g., fuel consumption information, noise information, or exhaust gas information) specified by the environmental load information request 33b.

The server S1 acquires the environmental load information (fuel consumption information, noise information, or exhaust gas information) specified by the environmental load information request 33b included in the request 31 on the basis of the parameter 34b included in the request 31b acquired from the client terminal T and information acquired from the storage unit 23 of the server S1 (basic fuel consumption information, basic noise information, or basic exhaust gas information).

When the server S1 acquires fuel consumption information, specifically, the calculation unit 222 of the server S1 acquires the basic fuel consumption information corresponding to the model information included in the parameter 34b acquired from the request acquisition unit 221.

Next, the calculation unit 222 acquires the operation of the work machine in the case where the load is conveyed under the conveyance condition included in the parameter 34b. Specifically, the calculation unit 222 acquires the operations that the work machine performs when conveying a load from the conveyance source to the conveyance destination. The operation to be acquired here is, for example, an operation of the work machine in making one round trip between the conveyance source and the conveyance destination (hereinafter referred to as "operation of one round trip ").

Next, the calculation unit 222 acquires the fuel consumption of the work machine in the operation of one round trip (hereinafter referred to as "fuel consumption of one round trip") based on the acquired operation of one round trip and the basic fuel consumption information acquired from the storage unit. Then, the calculation unit 222 acquires the fuel consumption of the entire conveyance operation by multiplying the acquired fuel consumption of one round trip by the number of conveyance times included in the request.

When the server S1 acquires noise information, specifically, the calculation unit 222 of the server S1 acquires the basic noise information corresponding to the model information included in the parameter 34b acquired from the request acquisition unit 221.

Next, the calculation unit 222 acquires information on the position of noise source and the noise distribution in the work machine specified by the model information based on the conveyance conditions (model information) included in the parameter 34b and the basic noise information acquired from the storage unit.

When the server S1 acquires exhaust gas information, specifically, the calculation unit 222 of the server S1 acquires the basic exhaust gas information corresponding to the model information included in the parameter 34b acquired from the request acquisition unit 221.

Next, the calculation unit 222 acquires information on the position of exhaust gas source and the noise distribution in the work machine specified by the model information based on the conveyance conditions (model information) included in the parameter 34b and the basic exhaust gas information acquired from the storage unit.

Then, the server S1 transmits a response 38b including the calculation result (environmental load information 37b) to the client terminal T. The response 38b includes terminal specifying information specifying the client terminal T, together with the environmental load information 37b.

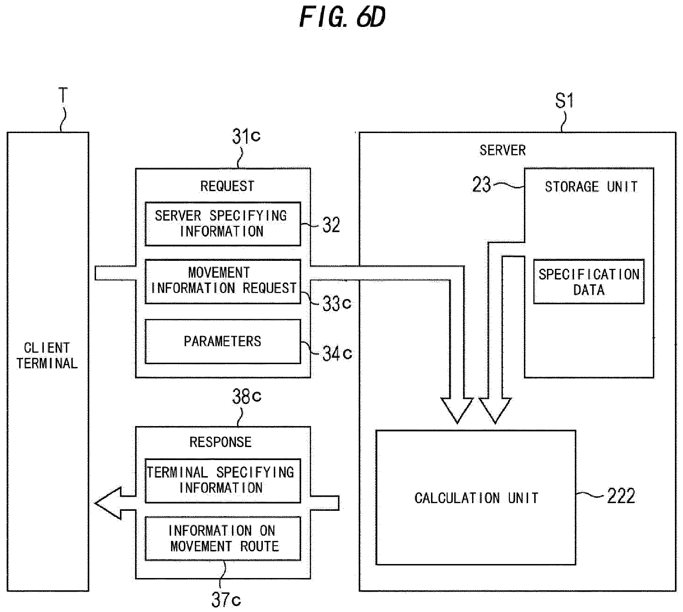

FIG. 6D is a diagram simply illustrating an example of the flow of data between the client terminal T and the server S1 when the client terminal T acquires movement information from the server S1.

As illustrated in FIG. 6D, first, the client terminal T transmits a request 31c to the server S1. The request 31c includes server specifying information 32 for specifying the server S1, a movement route information request 33c, and a parameter 34c.

The parameter 34c includes, for example, the model information and movement conditions of the work machine. Further, the parameter 34c is only required to include at least information necessary for the calculation of the information on the movement route (information on the post-movement position of the work machine and information on the post-movement direction of the work machine).

The server S1 acquires the information on the movement route specified by the movement route information request 33c included in the request 31 on the basis of the parameter 34c included in the request 31b acquired from the client terminal T and the specification data acquired from the storage unit 23 of the server S1.

Here describes an example of how the server S1 acquires information on the movement route. The calculation unit 222 of the server S1 acquires, from the storage unit 23, the specification data corresponding to the model information included in the parameter 34c acquired from the request acquisition unit 221.

Next, the calculation unit 222, based on the acquired specification data, acquires the information on the movement route of the work machine (for example, information on the post-movement position of the work machine and information on the post-movement direction of the work machine) at the time when the work machine has moved under the movement conditions included in the parameter 34c.

Specifically, the calculation unit 222, based on the information on the movement distance of the work machine, information on the movement direction of the work machine, and information on the steering amount of the work machine which are included in the movement conditions, acquires the information on the movement route of the work machine (for example, the post-movement position of the work machine and the post-movement direction of the work machine).

Hereinafter, the movement distance specified by the information on the movement distance of the work machine is referred to as "specified movement distance". The movement direction specified by the information on the movement direction of the work machine is referred to as "specified movement direction". The steering amount specified by the information on the steering amount of the work machine is referred to as "specified steering amount".

If the work machine is a model having a steering mode, the calculation unit 222, based on the information on the movement distance of the work machine, information on the movement direction of the work machine, information on the steering amount of the work machine, and information on the steering mode of the work machine, acquires the information on the movement route of the work machine (the post-movement position of the work machine and the post-movement direction of the work machine). The steering mode specified by the information on the steering mode of the work machine is referred to as "specified steering mode".

If the steering amount of the steering wheel is zero, the work machine advances by the movement distance, which is specified by the parameter 34c, in the movement direction specified by the parameter 34c. On the other hand, if the steering amount of the steering wheel is non-zero, the work machine advances while turning in the direction corresponding to the steering amount of the steering wheel.

If the steering amount of the steering wheel is non-zero, the calculation unit 222 acquires the turning radius of the work machine based on the specification data, the specified steering amount, and the specified steering mode. The method for obtaining the turning radius may be any conventionally known method. In addition, the turning radius changes in accordance with the cutting angle of each wheel relative to the steering amount of the steering wheel. Therefore, even if the steering amount of the steering wheel is the same, the turning radius may differ if the steering mode is different.

For a work machine that does not have a steering mode, the calculation unit 222 only needs to acquire the turning radius of the work machine based on the specification data and the specified steering amount.

The calculation unit 222, based on the acquired turning radius, acquires the position of the reference portion (e.g., center of gravity) of the work machine at the time when the work machine has advanced by a specified movement distance in a specified movement direction. The reference part of the work machine (e.g., center of gravity) moves in a circle passing through this reference part and centered on the turning radius.

The calculation unit 222 may acquire the minimum turning radius of the portion which has the smallest turning radius in the work machine. The portion which has the smallest turning radius in the work machine is, for example, the side surface of the work machine that is closer to the turning center. The calculation unit 222 may acquire the maximum turning radius of the portion which has the largest turning radius in the work machine.

If the work machine is a crane, the part of the work machine with the largest turning radius is, for example, the tip end portion of the boom. Such information on the minimum turning radius and information on the maximum turning radius also correspond to an example of information on the movement route.

The post-movement position of the work machine may be the post-movement position of the reference position (e.g., center-of-gravity position) of the work machine. The post-movement position of the work machine may be the amount of change (movement amount) relative to the pre-movement position of the work machine. The post-movement direction of the work machine may be the amount of change (turning amount) relative to the pre-movement direction of the work machine.

The post-movement position of the work machine may be the coordinates of the post-movement position of the work machine. In this case, it is preferable that the parameter 34c includes the information necessary for the calculation unit 222 to acquire the coordinates of the post-movement position of the work machine. The post-movement direction of the work machine may be the post-movement direction (orientation) of the work machine. In this case, it is preferable that the parameter 34c includes the information necessary for the calculation unit 222 to acquire the post-movement direction of the position of the work machine.

Then, the server S1 transmits a response 38c including the calculation result (information on the movement route 37c) to the client terminal T. The response 38c includes terminal specifying information specifying the client terminal T, together with the information on the movement route 37c.

(Hardware Configuration Example of Server)

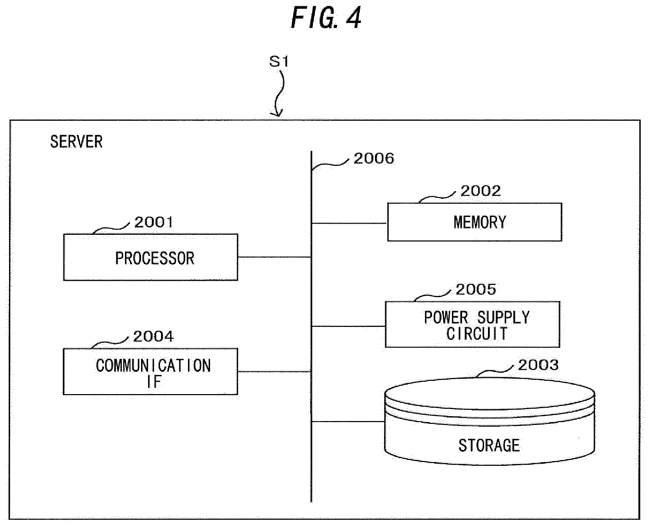

As illustrated in FIG. 4, in terms of the hardware configuration, the server S1 includes a processor 2001, a memory 2002, and a storage 2003. The server S1 includes a communication IF 2004 and a power supply circuit 2005. Furthermore, the server S1 may include an input device (not illustrated) and an output device (not illustrated). These elements 2001 to 2005 are connected via a bus 2006, for example.

The processor 2001 controls the operation of the server S1. The processor 2001 is an example of a circuit or device including a calculation ability. For the processor 2001, for example, at least one of a CPU, an MPU, and a GPU is used.

The memory 2002 stores a program executed by the processor 2001 and data or information processed in accordance with the execution of the program. The memory 2002 includes a RAM and a ROM. The RAM is used for the work memory of the processor 2001.

The storage 2003 stores a program executed by the processor 2001. The storage 2003 stores data, information, or the like processed in accordance with the execution of the program. The storage 2003 stores the above-described calculation expression, performance data table, and specification data.

The storage 2003 includes a semiconductor drive device such as a hard disk drive (HDD) or a solid state drive (SSD). In addition to or in place of a semiconductor drive device, a non-volatile memory such as flash memory may be included in the storage 2003.

The memory 2002 and the storage 2003 may be regarded as corresponding to the storage unit 23 of FIG. 2.

The entire or part of the program code constituting a program (hereinafter referred to as "performance information calculation program") implementing the function of the server S1 may be stored in the memory 2002 and/or the storage 2003, or may be incorporated into a part of an operating system (OS).

The program and/or data may be provided in a form recorded in a recording medium readable by the processor 2001. Examples of the recording medium include a flexible disk, a CD-ROM, a CD-R, a CD-RW, an MO, a DVD, a Blu-ray disk, and a portable hard disk. A semiconductor memory such as a USB memory is also an example of a recording medium.

The communication IF 2004 corresponds to the communication unit 21 of FIG. 2 and is an interface for communicating with the network N. The communication IF 2004 includes a wired interface for wired communication with the network N.

When the processor 2001 reads and executes the performance information calculation program stored in the storage unit 23, the server S1 functions as an example of a performance information calculation server device.

For example, when the processor 2001 executes the performance information calculation program, the control unit 22 and each of the elements 221 to 223 of the control unit 22 illustrated in FIG. 2 are embodied.

The power supply circuit 2005 supplies electric power for operating each of the elements 2001 to 2004 illustrated in, for example, FIG. 4 to each of the elements 2001 to 2004.

Note that the functional configuration and hardware configuration of the servers S2 to S4 may be equal to the functional configuration and hardware configuration of the server S1.

(Example of Calculation Performed by Server)

An example of the calculation of performance information performed by the calculation unit 222 of the server S1 will be briefly described here with reference to Table 2 described above.

The calculation unit 222 calculates and obtains the value of each performance information when the performance information request is a display request for the rated total load (see A-1 of Table 2), a display request for the moment load factor (see A-2 of Table 2), a display request for the rated total load at the maximum moment load factor (see A-3 of Table 2), and a display request for the boom maximum lowering angle and operating radius (see A-4 of Table 2).

Note that the calculation expression for calculating the rated total load, the calculation expression for calculating the moment load factor, the calculation expression for calculating the boom maximum lowering angle, and the calculation expression for calculating the operating radius are stored in the storage unit 23.

For example, when the performance information request is a display request for a deformation image of the boom and a deformation image of the jib (see A-5 of Table 2), the calculation unit 222 calculates and obtains the deformation image information of the boom and the deformation image information of the jib. These pieces of deformation image information are used for generation of a deformation image by the deformation image processing unit 177. The deformation image information of the boom and the deformation image information of the jib are, for example, numerical data for drawing a deformation image of the boom or the jib. The calculation unit 222 calculates the numerical data by using a calculation expression for an image.

The calculation unit 222 calculates and obtains area image information when the performance information request is a display request for an area image (see A-6 of Table 2). The area image information is used for generation of an area image by the area image processing unit 176.

Furthermore, when the performance information request is a display request for the attitude condition of the work machine, the moment load factor, and whether or not the work is possible (see A-7 of Table 2), the calculation unit 222 calculates and obtains the attitude condition of the work machine such as the boom hoist angle and the boom length, the moment load factor, and the determination result on whether or not the work is possible.

<Operation Example of BIM Assistance System>

An operation example of the BIM assistance system BS will be described below.

(Operation Example 1)

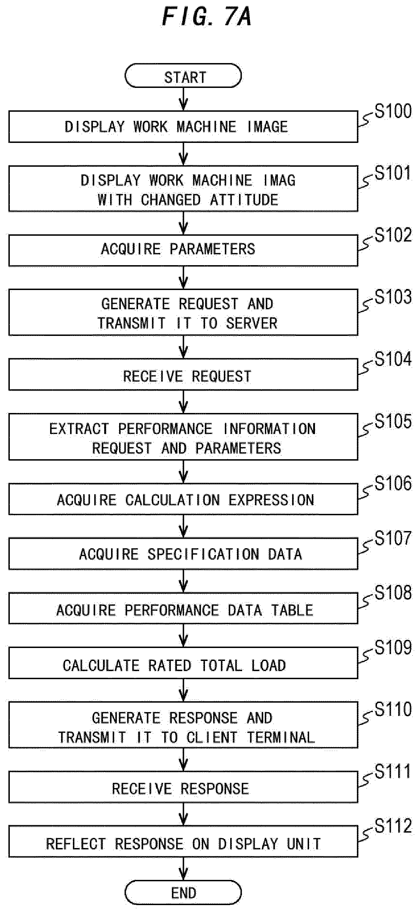

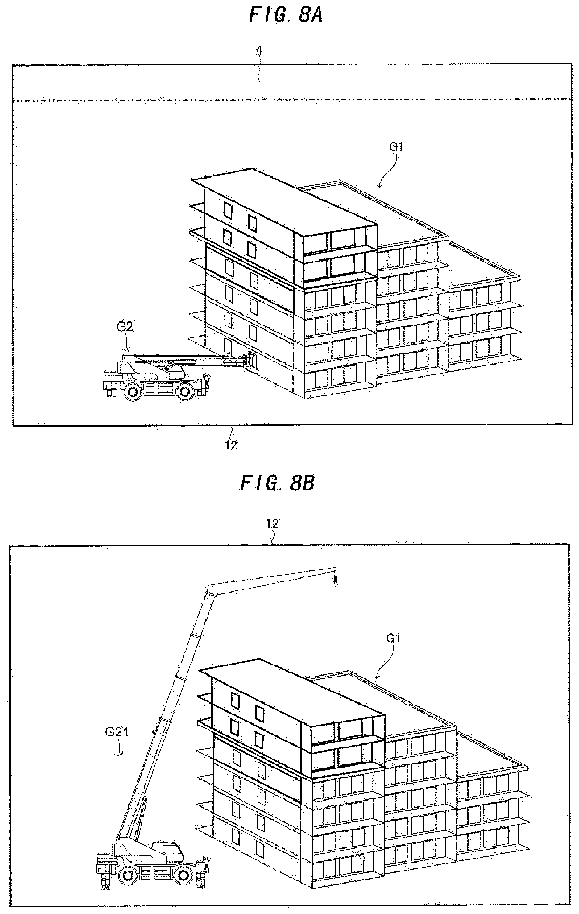

An example of the operation of the BIM assistance system BS will be described with reference to FIGS. 7A, 8A, and 8B. FIG. 7A is a flowchart presenting the operation of the BIM assistance system BS when the rated total load of the work machine (crane) displayed on the display unit 12 is displayed on the display unit 12 (see A-1 of Table 2).

In the operation example 1, after deciding the attitude of the work machine image displayed on the display unit 12, the operator requests the rated total load corresponding to the attitude of the work machine image to one server selected from the servers S1 to S4. In this manner, when the attitude of the work machine image is changed, the operator requests the rated total load to the server.

By comparing the rated total load acquired from the server with the weight of the load to be conveyed, the operator can determine whether or not the crane can convey the load to the conveyance target position in the attitude decided by the operator. The operation of the BIM assistance system BS in this operation example will be described below.

In step S100 of FIG. 7A, only a building image G1 illustrated in FIG. 8A is displayed on the display unit 12. That is, in step S100, a work machine image G2 illustrated in FIG. 8A is not displayed on the display unit 12. The building image G1 may be an image created by the operator by using the BIM application A or may be an image displayed by reading the information stored in the storage unit 14.

In step S100, in order to display the work machine image G2 on the display unit 12, the operator inputs a display instruction of the work machine image from the input unit 11.

In step S100, when the input unit 11 receives the display instruction of the work machine image, the BIM control unit 161 causes the display unit 12 to display the work machine image G2 specified by the model information included in the display instruction of the work machine image.

In step S100, the BIM control unit 161 acquires the work machine image G2 from the second storage unit 142. Specifically, the BIM control unit 161 acquires, from the second storage unit 142, the work machine image corresponding to the model information included in the display instruction of the work machine image. The attitude of the work machine image acquired from the second storage unit 142 is the basic attitude of the work machine image.

Here, an example of the operation of the operator in step S100 will be described. In step S100, the operator operates the BIM application A in order to display the work machine image G2 related to the desired work machine on the display unit 12.

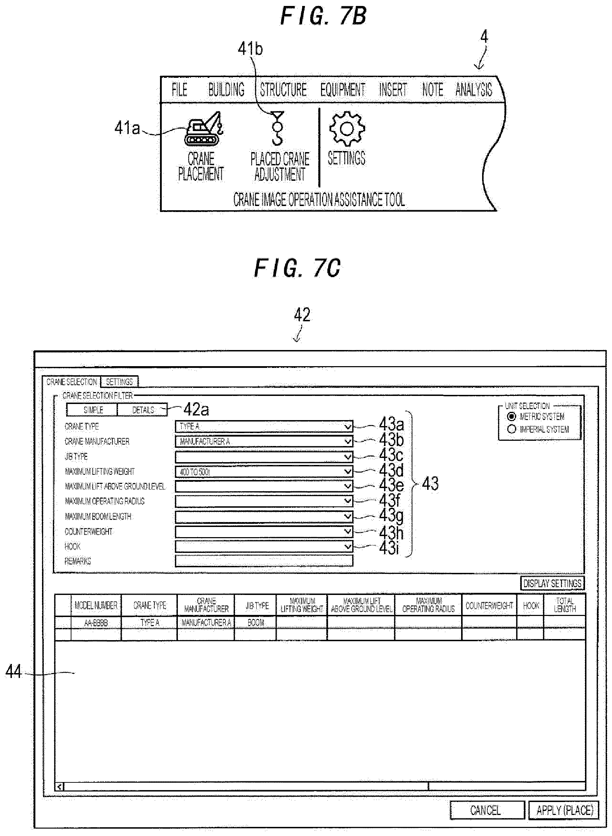

In the state before the operator executes the operation in step S100, the building image G1 is displayed on the display unit 12, and the work machine image G2 is not displayed. A window of the BIM application A is displayed on the display unit 12, and a toolbar 4 (see FIG. 7B) of the BIM application A is displayed on the upper part of the window. The toolbar 4 includes an icon and the like for operating the BIM application A.

FIG. 7B is a view illustrating a part of the toolbar 4 of the BIM application A. The toolbar 4 may include various tabs, icons, and buttons in addition to the tabs and icons illustrated in FIG. 7B.

First, the operator selects the model of the work machine to be displayed on the display unit 12. Specifically, the operator selects an icon 41a related to crane placement of the toolbar 4 illustrated in FIG. 7B. The icon 41a is an icon that the operator operates for selecting the desired crane.

Then, the BIM application A displays a crane selection screen 42 as illustrated in FIG. 7C on the display unit 12. The crane selection screen 42 includes a mode selection section 42a for selecting "Simple Mode" and "Details Mode". FIG. 7C illustrates a crane selection screen of the simple mode. Although the description of the crane selection screen of the details mode (not illustrated) is omitted, the crane selection screen of the details mode can receive, from an operator, input of setting of the crane more detailed than that the crane selection screen of the simple mode receives.

The crane selection screen 42 includes a condition input section 43. The condition input section 43 receives input related to the condition of the crane from the operator.

The condition selection section 43 includes a first selection section 43a for selecting the crane type, a second selection section 43b for selecting the crane manufacturer, and a third selection section 43c for selecting the jib type.

The condition selection section 43 includes a fourth selection section 43d for selecting the maximum lifting weight, a fifth selection section 43e for selecting the maximum lift above ground level, and a sixth selection section 43f for selecting the maximum operating radius.

The condition selection section 43 includes a seventh selection section 43g for selecting the maximum boom length, an eighth selection section 43h for selecting the weight of the counterweight, and a ninth selection section 43i for selecting the weight of the hook.

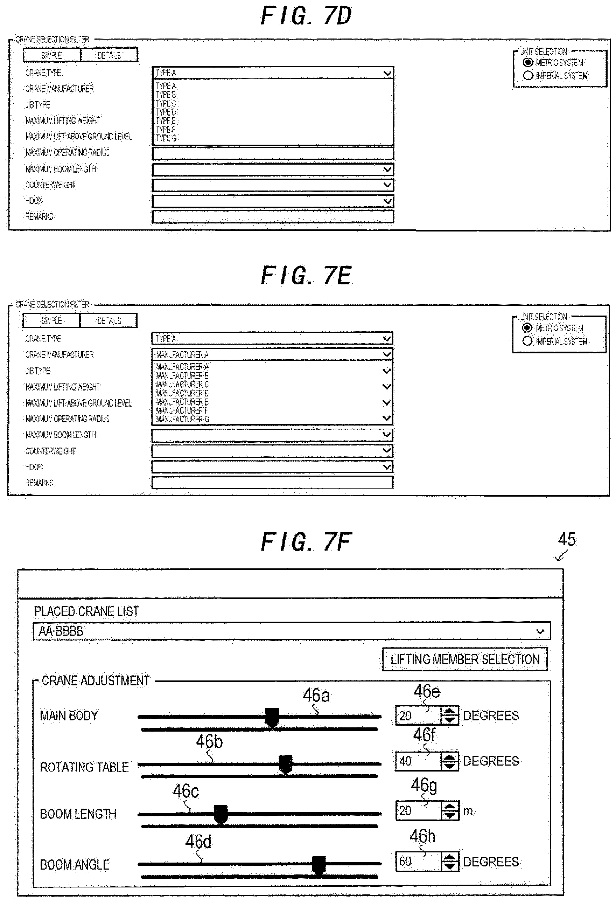

The operator inputs a condition related to the desired crane to any selection section of the condition selection section 43. FIG. 7D is a view illustrating a display mode of the first selection section 43a when the operator selects the condition of the crane type. The first selection section 43a is a pull-down type selection section. The operator selects a desired crane type from a plurality of crane types displayed on the first selection section 43a.

The crane type includes, for example, a rough terrain crane, an all terrain crane, a cargo crane, and a tower crane.

FIG. 7E is a view illustrating a display mode of the second selection section 43b when the operator selects the condition of the crane manufacturer. The second selection section 43b is a pull-down type selection section. The operator selects a desired crane manufacturer from a plurality of crane manufacturers displayed on the second selection section 43b.

When the operator finishes selection of the conditions of the crane, the crane satisfying the conditions of the crane selected by the condition selection section 43 is displayed on a list display section 44 of the crane selection screen 42. The operator selects the desired crane from the cranes displayed on the list display section 44. When the operator selects the crane, the work machine image G2 of the selected crane is displayed on the display unit 12.

In step S101, the operator inputs an attitude condition from the input unit 11 in order to decide the attitude of the work machine in the work machine image G2 displayed on the display unit 12. The operator inputs the attitude condition of the work machine image G2 from a crane adjustment screen 45 (described later) displayed on the display unit 12 of the work machine image G2, for example. The operator may decide the attitude of the work machine in the work machine image G2 by dragging the work machine image G2. The operation performed by the operator in step S101 is referred to as "attitude decision operation".

In step S101, if there is an attitude condition having not been decided of the attitude conditions of the work machine in the work machine image G2, the operator may omit input of the attitude condition (e.g., boom hoist angle) corresponding to this attitude condition having not been decided. Hereinafter, the attitude condition having not been decided will be simply referred to as "undecided attitude condition". In this operation example, a case where there is no undecided attitude condition will be described.

In step S101, when the input unit 11 receives the input of the attitude decision operation, the BIM control unit 161 reflects the attitude decision operation on the work machine image G2 of the display unit 12. Then, as illustrated in FIG. 8B, the display unit 12 displays a work machine image G21 in which the attitude is changed from that in the work machine image G2 illustrated in FIG. 8A.

In step S101, the input unit 11 receives input of at least one attitude condition of, for example, the boom hoist angle, boom length, boom turn angle, jib hoist angle, jib length, outrigger overhang width, and the like. The work machine image G21 illustrated in FIG. 8B is an image in which the attitude condition received by the input unit 11 in step S101 is reflected on the work machine image G2 illustrated in FIG. 8A.

Here, an example of the operation of the operator in step S101 will be described. After the processing of step S100 described above, the attitude of the work machine image G2 displayed on the display unit 12 is the basic attitude (see FIG. 8A). If the work machine image G2 is an image of the crane, the boom is in a fully lowered state and fully contracted state in the basic attitude of the crane. In the basic attitude of the crane, the turn angle of the boom is zero, and the overhang width of the outrigger is zero.

In step S101, the operator operates the BIM application A in order to decide the attitude of the work machine image G2 displayed on the display unit 12. In step S101, the operator decides, for example, the turn angle of the boom, the hoist angle of the boom, the expansion and contraction length of the boom, the overhang width of the outrigger, and the like.

Specifically, the operator selects an icon 41b related to the placed crane adjustment of the toolbar 4 illustrated in FIG. 7B. The icon 41b is an icon operated in order to decide the attitude of the work machine image displayed on the display unit 12.

Then, the BIM application A displays the crane adjustment screen 45 as illustrated in FIG. 7F on the display unit 12. The crane adjustment screen 45 includes an attitude adjustment section 46. The attitude adjustment section 46 receives input related to the attitude of the crane from the operator.

The attitude adjustment section 46 includes a first adjustment section 46a, a second adjustment section 46b, a third adjustment section 46c, and a fourth adjustment section 46d.

The first adjustment section 46a is a slide bar, and is an adjustment section for the operator to adjust the angle of the crane (i.e., work machine image G2). The angle of the crane is defined as the inclination angle of the center axis of the boom with respect to the reference direction (e.g., upper part of the display unit 12).

The second adjustment section 46b is a slide bar, and is an adjustment section for the operator to adjust the angle of the turn table (i.e., turn angle of the crane).

The third adjustment section 46c is a slide bar, and is an adjustment section for the operator to adjust the boom length. The fourth adjustment section 46d is a slide bar, and is an adjustment section for the operator to adjust the hoist angle of the boom.

The attitude adjustment section 46 includes a first input section 46e, a second input section 46f, a third input section 46g, and a fourth input section 46h.

The first input section 46e displays the angle of the crane selected by the first adjustment section 46a. The first input section 46e receives direct input related to the angle of the crane from the operator.

The second input section 46f displays the turn angle of the crane selected by the second adjustment section 46b. The second input section 46f receives direct input related to the turn angle of the crane from the operator.

The third input section 46g displays the boom length of the crane selected by the third adjustment section 46c.

The third input section 46g receives direct input related to the boom length from the operator.

The fourth input section 46h displays the hoist angle of the boom selected by the fourth adjustment section 46d. The fourth input section 46h receives direct input related to the hoist angle of the boom from the operator.

In step S101, the operator inputs the attitude condition of the crane by operating the first adjustment section 46a, the second adjustment section 46b, the third adjustment section 46c, and the fourth adjustment section 46d. In step S101, the operator may directly input the attitude condition of the crane to the first input section 46e, the second input section 46f, the third input section 46g, and the fourth input section 46h.

When the operator inputs the attitude condition of the crane from the attitude adjustment section 46, the input attitude condition is immediately reflected on the work machine image G2 displayed on the display unit 12. As a result, the work machine image G2 transitions to the work machine image G21 (see FIG. 8B).

Next, in step S102, the operator performs an operation of obtaining the rated total load of the work machine image G21 whose attitude has been decided in step S101. For example, the operator inputs a display request (performance information request) for the rated total load from the input screen popped up on the display unit 12.

Note that the operation of the operator for displaying the rated total load on the display unit 12 ends in step S102. The subsequent processing is automatically performed between the client terminal T and the servers S1 to S4. That is, in this operation example, when the operator inputs a display request for the rated total load via the BIM application A, the rated total load is automatically displayed on the display unit 12.

Note that in the above example, the operator manually inputs the display request for the rated total load via the input unit 11. However, the input operation of the display request for the rated total load by the operator may be omitted. In this case, in step S101, when the input unit 11 receives input of the attitude decision operation, the BIM control unit 161 reflects the attitude decision operation on the work machine image G2 of the display unit 12, and automatically sends the display request (performance information request) for the rated total load to the information acquisition unit 173. The BIM control unit 161 sends, to the information acquisition unit 173, the performance information request and the parameter corresponding to the calculation of the performance information specified by the performance information request.

In step S102, when the input unit 11 receives the performance information request, the information acquisition unit 173 acquires, from the BIM control unit 161, the parameters (model information, attitude condition, work state information, component information, and other information) corresponding to the acquired performance information request.

In step S102, the information acquisition unit 173 acquires, from the BIM control unit 161, at least the parameter necessary for the calculation of the performance information specified in the performance information request.

In step S102, also when the information acquisition unit 173 receives the performance information request from the BIM control unit 161, the information acquisition unit 173 may acquire, from the BIM control unit 161, the parameter corresponding to the acquired performance information request.

The parameter automatically acquired by the information acquisition unit 173 in step S102 is the parameter presented in column B of Table 3 below (parameter presented in 1-B of Table 2).

[Table 3]

| | A (performance information request) | B (parameters) | C (performance information) |
|---|---|---|---|
| 1 | Display request for rated total load | Work machine ID (model, specification number, or serial number) | Rated total load |
| | | Work state (on-tire work and outrigger work) | |
| | | Outrigger overhang width | |
| | | Boom information (type, hoist angle, length, and turn angle) | |
| | | Jib information (type, hoist angle, and jib length) | |
| | | Hook information | |
| | | Number of wire hooks | |
| | | Counterweight information | |

Specifically, the attitude conditions of the acquired parameters are the boom hoist angle, boom length, boom turn angle, jib hoist angle, and jib length.

The work state information of the acquired parameters includes information on the outrigger state (on-tire work state or outrigger state). The work state information of the acquired parameters includes information on boom/jib selection (see Table 1).

The component information of the acquired parameters includes at least one information of information on the boom (e.g., the type of boom), information on the jib (e.g., the type of jib), information on the hook (e.g., the type of hook), information on the wire (e.g., the number of wire hooks), information on the counterweight (e.g., the weight of the counterweight), and the like.

Note that in step S102, the information automatically acquired by the information acquisition unit 173 is information on the items described in 1-B of Table 2. Then, the information acquisition unit 173 sends the acquired information to the request issuance unit 174.

In step S103, the request issuance unit 174 acquires, from the third storage unit 143, the server specifying information (e.g., the URI of the server) for specifying the server corresponding to the work machine image (i.e., the work machine image G21 of FIG. 8B) specified by the acquired model information.

Then, the request issuance unit 174 generates a request including the acquired server specifying information, performance information request, and parameters, and sends it to the communication control unit 171. The request is transmitted via the communication unit 13 to the server (e.g., the server S1) specified by the server specifying information.

Note that the request generated in step S103 is in the form of request message of HTTPS protocol. Such request includes the URI, the performance information request, and the parameter, in order from the head (see Expression 1 above).

Of the request, the URI is server specifying information acquired from the third storage unit 143 in step S103. Of the request, the performance information request is a display request for the rated total load having been input from the operator in step S102. Furthermore, of the request, the parameter is a parameter automatically acquired by the information acquisition unit 173 in step S102.

The processing of the server S1 having received a request from the client terminal T will be described below.

In step S104, the communication unit 21 receives the request. Then, the communication unit 21 sends the request to the request acquisition unit 221.

In step S105, the request acquisition unit 221 extracts the performance information request and parameter from the acquired request. Then, the request acquisition unit 221 sends the extracted information to the calculation unit 222.

In step S106, the calculation unit 222 acquires, from the storage unit 23, the calculation expression corresponding to the performance information request and model information acquired from the request acquisition unit 221. In step S106, the calculation expression acquired by the calculation unit 222 is an interpolation calculation expression for performing the above-described interpolation calculation.

In step S107, the calculation unit 222 acquires, from the storage unit 23, the specification data corresponding to the work machine specified by the acquired model information.

In step S108, the calculation unit 222 acquires, from the storage unit 23, the performance data table corresponding to the attitude condition and/or work state information acquired from the request acquisition unit 221. At this time, the calculation unit 222 may acquire, from the storage unit 23, a plurality of performance data tables corresponding to the acquired attitude condition and/or work state information.

Note that in step S108, the calculation unit 222 may acquire, from the storage unit 23, the performance data table on the basis of the specification data acquired in step S107 together with the attitude condition and/or work state information.

In step S109, the calculation unit 222 calculates the rated total load on the basis of the parameter acquired from the client terminal T, the calculation expression (interpolation calculation expression), the performance data table, and the specification data, which are acquired from the storage unit 23. Then, the calculation unit 222 sends the calculation result to the response issuance unit 223.

In step S109, when the calculation unit 222 can directly acquire, from the performance data table, the rated total load corresponding to the parameter included in the request, the calculation expression (interpolation calculation expression) may not be used in step S109. However, if the rated total load corresponding to the parameter included in the request cannot be directly obtained from the performance data table, the calculation unit 222 acquires the rated total load by performing the above-described interpolation calculation using the calculation expression (interpolation calculation expression).

In step S110, the response issuance unit 223 generates a response on the basis of the calculation result acquired from the calculation unit 222. Then, the response issuance unit 223 transmits the generated response to the client terminal T via the communication unit 21.

The above is the processing of the server S1 having received the request from the client terminal T. Next, the processing of the client terminal T (assistance module M) having received the response from the server S1 will be described.

In step S111, the communication unit 13 receives a response from the server S1. Then, the communication unit 13 sends the received response to the second control unit 17. The response is sent to the display assistance control unit 175 of the assistance control unit 172 via the communication control unit 171.

In step S112, the display assistance control unit 175 analyzes the response acquired from the communication control unit 171, and reflects the calculation result (in this operation example, rated total load) of the server S1 included in the response on the display of the display unit 12.

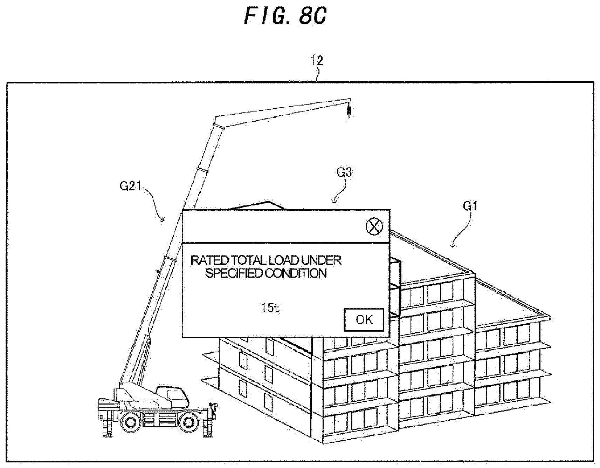

For example, the display assistance control unit 175 causes the display unit 12 to display a notification image G3 notifying the rated total load presented in FIG. 8C. Note that the notification image G3 may be generated by the assistance module M (e.g., display assistance control unit 175) or by the BIM application A (e.g., BIM control unit 161).

In the case where the notification image G3 is generated by the BIM application A, the display assistance control unit 175 sends in step S112 the calculation result of the server S1 (in this operation example, rated total load) to the BIM application A (specifically, BIM control unit 161). In the operation of the BIM assistance system BS in this operation example as described above, the order of the operations may be appropriately changed within a technically consistent range.

(Action/Effect of Operation Example 1)

According to this operation example as described above, only by inputting the performance information request (display request for rated total load) from the BIM application A, the operator can find the rated total load of the work machine image G21 (see FIG. 8B) whose attitude has been decided in the display unit 12. Thus, the operator can know the rated total load of the crane displayed on the display unit 12 without performing a cumbersome work such as referring to the rated total load table provided from the work machine manufacturer. Therefore, the operator can efficiently perform a more detailed construction plan work in consideration of the rated total load of the crane.

In the construction plan work, the operator sometimes judges whether or not the crane work is possible by comparing the rated total load acquired from the server with the load. The operator can efficiently judge whether or not the crane work is possible by performing the operation described in the operation example 1 in the BIM application A. When it is judged that the crane work cannot be carried out, the operator can efficiently decide the optimum work state by performing and reexamining change of the attitude of the crane, change of the work state of the crane, change of the arrangement place of the crane, and/or change of the model of the crane, and the like.

Note that when the operator makes a display request for the moment load factor (see A-2 of Table 2) by the BIM assistance system BS, the basic operation of the BIM assistance system is the same as that of the operation example 1 described above. When the operator makes a display request for the moment load factor, the parameter automatically acquired by the information acquisition unit 173 in step S102 of FIG. 7A is the parameter (parameter presented in 2-B of Table 2) presented in column B of the Table 4 below.

[Table 4]

|  | A (performance information request) | B (parameters) | C (performance information) |
|---|---|---|---|
| 2 | Display request for moment load factor | Work machine ID (model, specification number, or serial number) | Moment load factor |
|  |  | Work state (on-tire work and outrigger work) |  |
|  |  | Outrigger overhang width |  |
|  |  | Boom information (type, hoist angle, length, and turn angle) |  |
|  |  | Jib information (type, hoist angle, and length) |  |
|  |  | Hook information |  |
|  |  | Number of wire hooks |  |
|  |  | Lifting load |  |
|  |  | Counterweight information |  |

When the operator makes a display request (see A-3 of Table 2) for the rated total load at the maximum moment load factor in the BIM assistance system BS, the basic operation of the BIM assistance system is the same as that of the operation example 1 described above. When the operator makes a display request for the rated total load at the maximum moment load factor, the parameter automatically acquired by the information acquisition unit 173 in step S102 of FIG. 7A is the parameter (parameter presented in 3-B of Table 2) presented in column B of Table 5 below.

[Table 5]

| A (performance information request) | B (parameters) | C (performance information) |
|---|---|---|
| 3 — Display request for rated total load at maximum moment load factor | Work machine ID (model, specification number, or serial number) | Rated total load |
| | Work state (on-tire work and outrigger work) | |
| | Outrigger overhang width | |
| | Boom information (type, hoist angle, length, and turn angle) | |
| | Jib information (type, hoist angle, and jib length) | |
| | Hook information | |
| | Number of wire hooks | |
| | Moment load factor | |
| | Counterweight information | |

Furthermore, when the operator makes an outrigger jack reaction force display request (see A-8 of Table 2) by the BIM assistance system BS, the basic operation of the BIM assistance system is the same as that of the operation example 1 described above. When the operator makes a display request for an outrigger jack reaction force, the parameter automatically acquired by the information acquisition unit 173 in step S102 of FIG. 7A is the parameter (parameter presented in 8-B of Table 2) presented in column B of Table 6 below.

[Table 6]

| A (performance information request) | B (parameters) | C (performance information) |
|---|---|---|
| 8 — Display request for reaction force of outrigger jack | Work machine ID (model, specification number, or serial number) | Reaction force value of outrigger jack |
| | Outrigger overhang width | |
| | Boom information (type, hoist angle, length, and turn angle) | |
| | Jib information (type, hoist angle, and length) | |
| | Hook information | |
| | Number of wire hooks | |
| | Lifting load | |
| | Counterweight information | |

(Addition of Operation Example 1)

Note that the display assistance control unit 175 may determine whether or not the crane work can be performed on the basis of the acquired rated total load and the load. As a result, when it is determined that the crane work cannot be performed, information notifying that the crane work cannot be performed may be displayed on the display unit 12.

In the operation example 1 described above, the operator can request, to the server S1, a determination result of whether or not the work machine displayed on the display unit 12 can perform the lifting work (hereinafter referred to as "determination on whether or not the work is possible"). When requesting the result of determination on whether or not the work is possible, the parameter included in the request includes work information. The work information is information indicating a work scheduled to be executed by the work machine displayed on the display unit 12.

Specifically, in step S102, the operator inputs, from the input unit 11, a display request (performance information request) for determination on whether or not the work is possible. Then, in step S102, the information acquisition unit 173 acquires, from the BIM control unit 161, the parameter corresponding to the acquired performance information request. Note that the parameter acquired in step S102 includes load information.

Next, on the basis of the rated total load calculated in step S109 and the load information included in the request, the server S1 having received the request determines whether or not the lifting work is possible. Then, the response including the determination result (performance information) is transmitted to the client terminal T.

The display assistance control unit 175 having acquired the response displays the determination result included in the response on the display unit 12. In accordance with the determination result, the display unit 12 displays information indicating that the lifting work is possible or information indicating that the lifting work is impossible.

(Operation Example 2)

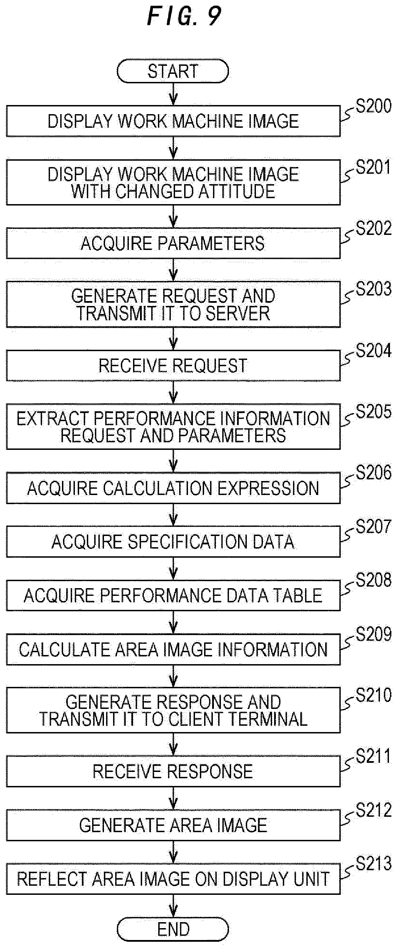

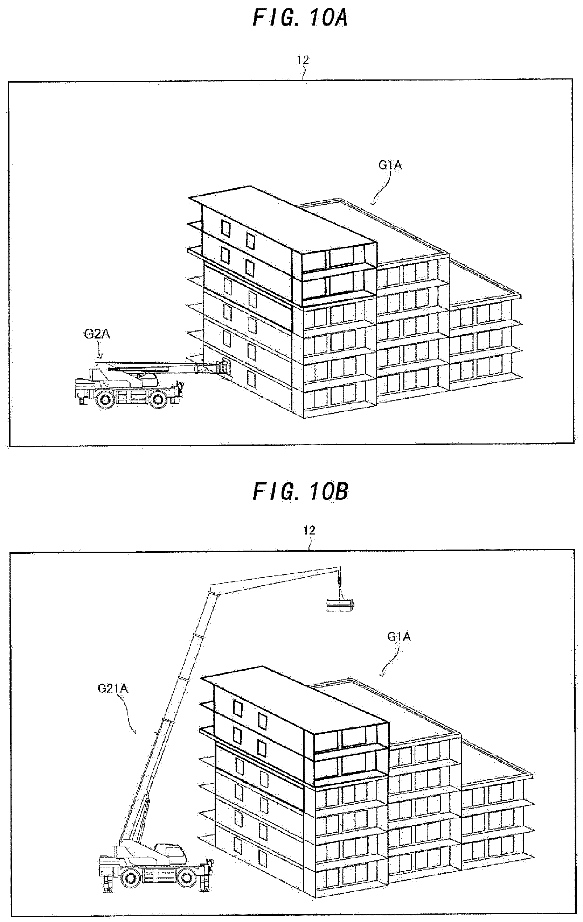

Next, an example of the operation of the BIM assistance system BS will be described with reference to FIGS. 9 and 10A to 10C. FIG. 9 is a flowchart presenting the operation of the BIM assistance system BS when an area image indicating the movement range of the load lifted by the work machine in the image displayed on the display unit 12 (hereinafter referred to as "area image") is displayed on the display unit 12 (see A-6 of Table 2).

In the operation example 2, after deciding the work state of the work machine displayed on the display unit 12, the operator requests an image indicating the movable range corresponding to the work state of the work machine (area image presenting the movement range) to one server selected from the servers S1 to S4. In the description of this operation example, the work state of the work machine means a state in which the attitude of the work machine has been decided and a state in which the load to be conveyed by the work machine has been decided.

By comparing the area image showing the acquired movement range with the conveyance target position of the load, the operator can determine whether or not the crane can convey the load to the conveyance target position in the work state of the work machine decided by the operator. The operation of the BIM assistance system BS in this operation example will be described below.

First, in step S200, only a building image G1A illustrated in FIG. 10A is displayed on the display unit 12. Such the building image G1A may be an image created by the operator by using the BIM application A or may be an image displayed by reading the information stored in the storage unit 14.

In step S200, in order to display the work machine image on the display unit 12, the operator inputs a display instruction of the work machine image from the input unit 11.

In step S200, when the input unit 11 receives input of a display instruction of the work machine image, the BIM control unit 161 controls the display control unit 162 to cause the display unit 12 to display the work machine image G2A illustrated in FIG. 10A. Note that the operation of the operator and the processing of the BIM assistance system BS in step S200 are the same as those in step S100 of FIG. 7A described earlier.

In step S201, the operator inputs the attitude decision operation described earlier.

In step S201, when the input unit 11 receives the input of the attitude decision operation, the BIM control unit 161 reflects the attitude decision operation on the work machine image G2A of the display unit 12. Then, as illustrated in FIG. 10B, the display unit 12 displays a work machine image G21A in which the attitude is changed from that in the work machine image G2A illustrated in FIG. 10A. Note that the operation of the operator and the processing of the BIM assistance system BS in step S201 are the same as those in step S101 of FIG. 7A described earlier.

In step S202, the operator inputs, from the input unit 11, a display request (performance information request) for the area image to the display unit 12. For example, the operator inputs a display request for the area image from the input screen popped up on the display unit 12.

In step S202, when the input unit 11 receives the performance information request, the information acquisition unit 173 acquires, from the BIM control unit 161, the parameters corresponding to the acquired performance information request. In step S202, the information acquisition unit 173 is only required to acquire, from the BIM control unit 161, at least the parameter necessary for the calculation of the performance information specified in the performance information request.

The parameter automatically acquired by the information acquisition unit 173 in step S202 is the parameter (see 6-B of Table 2) presented in column B of Table 7 below.

[Table 7]

| | A (performance information request) | B (parameters) | C (performance information) |
|---|---|---|---|
| 6 | Display request for work area image of work machine | Work machine ID (model, specification number, or serial number) | Information on work a rea image of work machine |
| | | Work state (on-tire work and outrigger work) | |
| | | Outrigger overhang width | |
| | | Boom information (type) | |
| | | Jib information (type) | |
| | | Hook information | |
| | | Number of wire hooks | |
| | | Lifting load | |
| | | Counterweight information | |

Then, the information acquisition unit 173 sends the acquired information to the request issuance unit 174. Note that the operation of the operator for displaying the area image on the display unit 12 ends at step S202. The subsequent processing is automatically performed between the client terminal T and the servers S1 to S4. That is, in this operation example, when the operator inputs a display request for the area image via the BIM application A, the area image is automatically displayed on the display unit 12.

In step S203, the request issuance unit 174 acquires, from the third storage unit 143, the server specifying information (e.g., the URI of the server) for specifying the server corresponding to the work machine image (i.e., the work machine image G21 of FIG. 8B) specified by the acquired model information.

Then, the request issuance unit 174 generates a request including the acquired server specifying information, performance information request, and parameters, and sends it to the communication control unit 171. The request is transmitted via the communication unit 13 to the server (e.g., the server S1) specified by the server specifying information.

The processing of the server S1 having received a request from the client terminal T will be described below.

In step S204, the communication unit 21 receives the request. Then, the communication unit 21 sends the request to the request acquisition unit 221.

In step S205, the request acquisition unit 221 extracts the performance information request and parameter from the acquired request. Then, the request acquisition unit 221 sends the extracted information to the calculation unit 222.

In step S206, the calculation unit 222 acquires, from the storage unit 23, the calculation expression corresponding to the performance information request and model information acquired from the request acquisition unit 221.

In step S207, the calculation unit 222 acquires, from the storage unit 23, the specification data corresponding to the work machine specified by the acquired model information.

In step S208, the calculation unit 222 acquires, from the storage unit 23, the performance data table corresponding to the attitude condition and/or work state information acquired from the request acquisition unit 221. At this time, the calculation unit 222 may acquire, from the storage unit 23, a plurality of performance data tables corresponding to the acquired attitude condition and/or work state information. Note that in step S208, the calculation unit 222 may acquire, from the storage unit 23, the performance data table on the basis of the specification data acquired in step S207 together with the attitude condition and/or work state information.

In step S209, the calculation unit 222 calculates and obtains information on the area image (hereinafter referred to as "area image information") on the basis of the attitude condition and parameter acquired from the client terminal T and the calculation expression, performance data table, and specification data acquired from the storage unit 23. Then, the calculation unit 222 sends the calculation result to the response issuance unit 223.

Note that the area image information calculated in step S209 is used for generation of an area image by the area image processing unit 176 of the assistance module M.

In step S210, the response issuance unit 223 generates a response on the basis of the calculation result acquired from the calculation unit 222. Then, the response issuance unit 223 transmits the generated response to the client terminal T via the communication unit 21.

Next, the processing of the client terminal T having received the response from the server S1 will be described.

In step S211, the communication unit 13 receives a response from the server S1. Then, the communication unit 13 sends the received response to the second control unit 17. The response is sent to the area image processing unit 176 via the communication control unit 171 and the display assistance control unit 175.

In step S212, the area image processing unit 176 generates an area image on the basis of the area image information acquired from the display assistance control unit 175. Then, the area image processing unit 176 sends the generated area image to the display assistance control unit 175. Note that the area image generated in this operation example is an area image related to the movable area of the hook. However, the generated area image may be an area image related to the movable area of the lifting tool described earlier and/or an area image related to the movable area of the load.

In step S213, the display assistance control unit 175 reflects the area image acquired from the area image processing unit 176 on the display of the display unit 12.

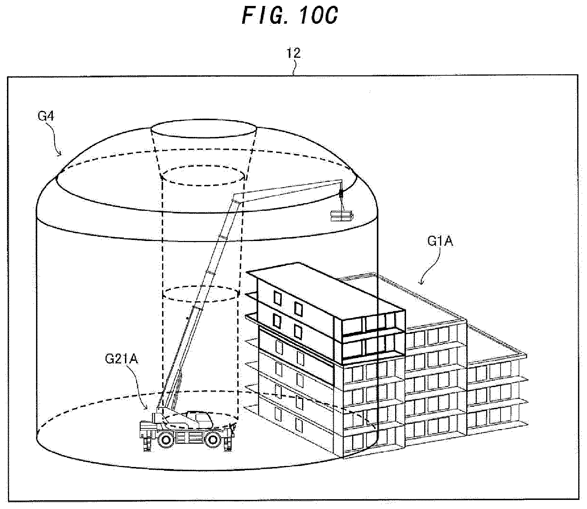

For example, the display assistance control unit 175 causes the display unit 12 to display an area image G4 presented in FIG. 10C. Note that the area image G4 may be generated by the assistance module M (area image processing unit 176) or may be generated by the BIM application A (e.g., BIM control unit 161) as described above.

In the case where the area image G4 is generated by the BIM application A, the display assistance control unit 175 sends in step S211 the calculation result acquired from the server S1 (in this operation example, area image information) to the BIM application A (specifically, BIM control unit 161).

The area image may be generated by the server S1 (specifically, calculation unit 222). In this case, the response including the area image (performance information) generated by the calculation unit 222 is transmitted from the server 1 to the client terminal T.

The display assistance control unit 175 having acquired the response reflects the area image included in the response on the display of the display unit 12. In the operation of the BIM assistance system BS in this operation example as described above, the order of the operations may be appropriately changed within a technically consistent range.

(Action/Effect of Operation Example 2)

In this operation example as described above, when the operator inputs a display request for the area image via the BIM application A, the area image is automatically displayed on the display unit 12. By visually recognizing the area image G4, the operator can intuitively recognize the range in which the load can be moved by the work machine in the work machine image G21A displayed on the display unit 12. In the case where the conveyance target position of the load is located outside the area image G4, the operator may change the attitude of the work machine image or may change the model of the work machine. Thus, according to this operation example, the operator can easily carry out a more detailed construction plan in consideration of the movement range of the load.

(Operation Example 3)

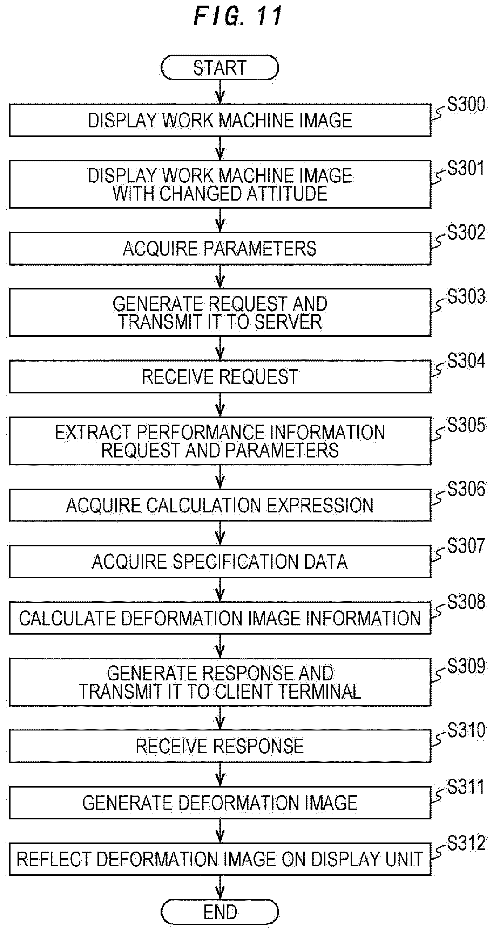

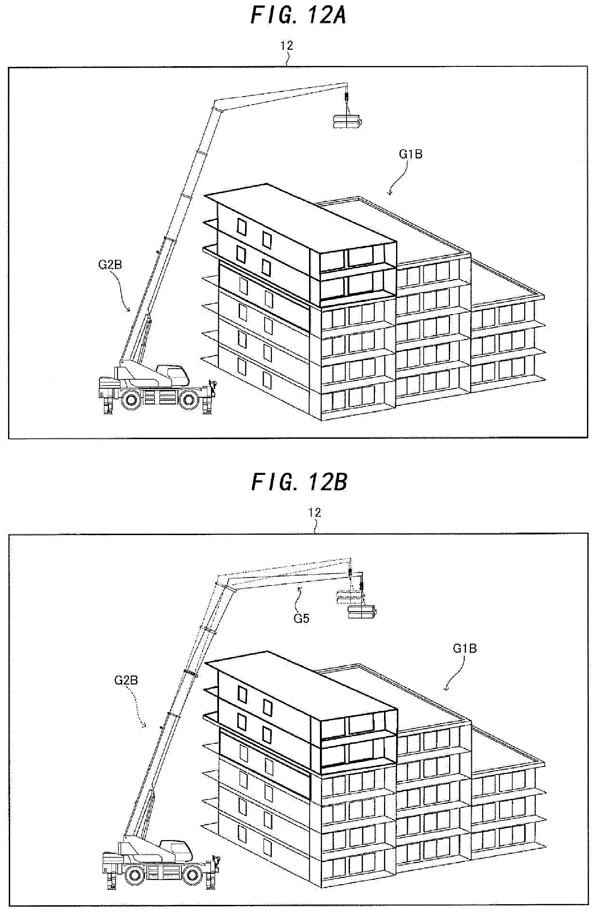

Next, an example of the operation of the BIM assistance system BS will be described with reference to FIGS. 11, 12A, and 12B. FIG. 11 is a flowchart presenting the operation of the BIM assistance system BS when an image of a bent boom (hereinafter referred to as "deformation image of the boom") and an image of a bent jib (hereinafter referred to as "deformation image of the jib") are displayed on the display unit 12 (see A-5 of Table 2).

In a conveyance work by the crane, the boom and/or jib of the crane bends on the basis of its own weight, weight of the hook, weight of the wire rope, and the weight of the load. Therefore, consideration of this bending in advance in the construction plan prevents the interference between the crane and building, and significantly contributes to the improvement of the safety of the actual work and the improvement of the work efficiency.

The operation example 3 is carried out when a construction plan in consideration of bending of the boom and/or jib is carried out. In the operation example 3, after deciding the work state of the work machine displayed on the display unit 12, the operator requests a deformation image of the boom and/or a deformation image of the jib corresponding to the work state of the work machine to one server selected from the servers S1 to S4. In the description of this operation example, the work state of the work machine means a state in which the attitude of the work machine has been decided and a state in which the load to be conveyed by the work machine has been decided.

The operator can determine whether or not the crane can perform the conveyance work in the work state of the work machine decided by the operator by looking at the positional relationship between the acquired deformation image of the boom and/or deformation image of the jib and the building image displayed on the display unit 12. The operation of the BIM assistance system BS in this operation example will be described below.

First, in step S300, only a building image G1B illustrated in FIG. 12A is displayed on the display unit 12. Such the building image G1B may be an image created by the operator by using the BIM application A or may be an image displayed by reading the information stored in the storage unit 14.

In step S300, in order to display the work machine image on the display unit 12, the operator inputs a display instruction of the work machine image from the input unit 11.

In step S300, when the input unit 11 receives input of a display instruction of the work machine image, the BIM control unit 161 controls the display control unit 162 to cause the display unit 12 to display the work machine image (not illustrated) of the basic attitude.

In step S301, the operator inputs the attitude decision operation described earlier.

In step S301, when the input unit 11 receives the input of the attitude decision operation, the BIM control unit 161 reflects the attitude decision operation on the work machine image (not illustrated) of the display unit 12. Then, the display unit 12 displays a work machine image G2B illustrated in FIG. 12A. Note that the operation of the operator and the processing of the BIM assistance system BS in step S301 are the same as those in step S101 of FIG. 7A described earlier.

The work machine image G2B illustrated in FIG. 12A is an image in a state where the work attitude of the work machine has been decided. However, the work machine image G2B illustrated in FIG. 12A is an image in which the deformation of the boom and jib due to the influence of the load acting on the boom and jib (e.g., load) is not reflected. Note that the load may be the sum of the load and the weight of the hook.

In the image illustrated in FIG. 12A, the boom and jib of the work machine image G2B do not interfere with the building image G1B. However, in the work with an actual machine, the boom and jib bend due to the influence of the load and the like, and sometimes interfere with the building.

By displaying the deformation image of the boom and/or jib on the display unit 12, it becomes possible for the BIM application A to make the construction plan in consideration of the bending of the boom and jib. Note that in a state where the jib is not used, only the deformation image of the boom may be displayed on the display unit 12.

In step S302, the operator inputs, from the input unit 11, a display request for the deformation image of the boom and/or jib (hereinafter, referred to as "display request for the deformation image"). For example, the operator inputs a display request (performance information request) for the deformation image from the input screen popped up on the display unit 12. The operator may input the display request for the deformation image by checking the check box for bending display displayed on the display unit 12.

In step S302, when the input unit 11 receives the performance information request, the information acquisition unit 173 acquires, from the BIM control unit 161, the parameters corresponding to the acquired performance information request. In step S302, the information acquisition unit 173 is only required to acquire, from the BIM control unit 161, at least the parameter necessary for the calculation of the performance information specified in the performance information request.

The parameter automatically acquired by the information acquisition unit 173 in step S302 is the parameter (see 5-B of Table 2) presented in column B of Table 8 below.

[Table 8]

| | A (performance information request) | B (parameters) | C (performance information) |
|---|---|---|---|
| 5 | Display request for deformation image of boom and deformation image of jib | Work machine ID (model, specification number, or serial number) | Deformation Image information of boom and deformation image information of jib |
| | | Work state (on-tire work and outrigger work) | |
| | | Outrigger overhang width | |
| | | Boom information (type, hoist angle, length, and turn angle) | |
| | | Jib information (type, hoist angle, and length) | |
| | | Hook information | |
| | | Number of wire hooks | |
| | | Lifting load | |
| | | Counterweight information | |

Then, the information acquisition unit 173 sends the acquired information to the request issuance unit 174. Note that the operation of the operator for displaying the deformation image of the boom and the deformation image of the jib on the display unit 12 ends at step S302. The subsequent processing is automatically performed between the client terminal T and the servers S1 to S4.

In step S303, the request issuance unit 174 acquires, from the third storage unit 143, the server specifying information (e.g., the URI of the server) for specifying the server corresponding to the work machine image (i.e., the work machine image G2B illustrated in FIG. 12A) specified by the acquired model information.

Then, the request issuance unit 174 generates a request including the acquired server specifying information, performance information request, and parameters, and sends it to the communication control unit 171. The request is transmitted via the communication unit 13 to the server (e.g., the server S1) specified by the server specifying information. Note that the parameter included in the request is only required to include at least information necessary for the calculation of the performance information specified by the performance information request.

Next, the processing of the server S1 having received a request from the client terminal T will be described.

In step S304, the communication unit 21 receives the request. Then, the communication unit 21 sends the request to the request acquisition unit 221.

In step S305, the request acquisition unit 221 extracts the performance information request and parameter from the acquired request. Then, the request acquisition unit 221 sends the extracted information to the calculation unit 222.

In step S306, the calculation unit 222 acquires, from the storage unit 23, the calculation expression corresponding to the performance information request and model information acquired from the request acquisition unit 221.

In step S307, the calculation unit 222 acquires, from the storage unit 23, the specification data corresponding to the work machine image specified by the acquired model information.

In step S308, the calculation unit 222 calculates and obtains information on the deformation image of the boom and the deformation image of the jib (hereinafter referred to as "deformation image information") on the basis of the attitude condition and parameter acquired from the client terminal T, and the calculation expression and specification data acquired from the storage unit 23. Then, the calculation unit 222 sends the calculation result to the response issuance unit 223.

Note that the deformation image information is, for example, information on a deformation curve of the boom and/or information on a deformation curve of the jib. The deformation curve is a curve in which the deformation of the boom and/or jib is expressed by a sine wave or an n-th order function, for example. The deformation image information may be an inclined straight line (deformation straight line) corresponding to a bending angle of each of the base end side boom, the intermediate boom, and the tip end side boom.

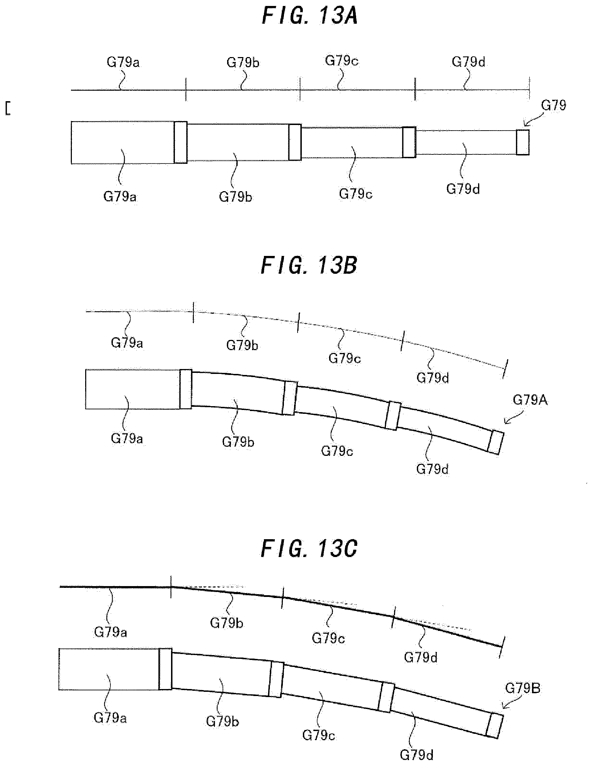

FIG. 13A is a view illustrating an image G79 of the unbent boom. FIGS. 13B and 13C are views illustrating images G79A and G79B of the bent boom.

In the case of the image G79A of the boom illustrated in FIG. 13B, the deformations of an image G79a of the base end side boom, images G79b and G79c of the intermediate boom, and an image G79d of the tip end side boom are obtained on the basis of the curve (deformation curve) represented by a sine wave or an n-th order function.

On the other hand, in the case of the image G79B of the boom illustrated in FIG. 13C, the deformations of the image G79a of the base end side boom, the images G79b and G79c of the intermediate boom, and the image G79d of the tip end side boom are obtained on the basis of the straight line (deformation straight line) inclined corresponding to the bending angle.

Note that the deformation image information calculated in step S308 is used by the deformation image processing unit 177 of the assistance module M to generate a deformation image of the boom and/or a deformation image of the jib.

In step S309, the response issuance unit 223 generates a response on the basis of the calculation result acquired from the calculation unit 222. Then, the response issuance unit 223 sends the generated response to the communication unit 21. The communication unit 21 transmits the acquired response to the client terminal T.

Next, the processing of the client terminal T having received the response from the server S1 will be described.

In step S310, the communication unit 13 receives a response from the server S1. Then, the communication unit 13 sends the received response to the second control unit 17. The response is sent to the deformation image processing unit 177 via the communication control unit 171 and the display assistance control unit 175.

In step S311, the deformation image processing unit 177 generates the deformation image of the boom and the deformation image of the jib on the basis of the deformation image information acquired from the display assistance control unit 175. Then, the deformation image processing unit 177 sends the generated deformation image of the boom and deformation image of the jib to the display assistance control unit 175.

In step S312, the display assistance control unit 175 reflects the deformation image of the boom and the deformation image of the jib acquired from the deformation image processing unit 177 on the display of the display unit 12.

For example, the display assistance control unit 175 causes the display unit 12 to display a deformation image G5 presented by the solid line in FIG. 12B. Note that the deformation image G5 may be generated by the assistance module M (deformation image processing unit 177) or may be generated by the BIM application A (e.g., BIM control unit 161) as described above.

In the case where the deformation image G5 is generated by the BIM application A, the display assistance control unit 175 sends in step S310 the calculation result of the server S1 (in this operation example, deformation image information) to the BIM application A (specifically, BIM control unit 161).

The deformation image may be generated by the server S1 (specifically, calculation unit 222). In this case, the response including the deformation image (performance information) generated by the calculation unit 222 is transmitted from the server 1 to the client terminal T. The display assistance control unit 175 having acquired the response reflects the deformation image included in the response on the display of the display unit 12.

Note that as illustrated in FIG. 12B, the display unit 12 presents, by a broken line, the work machine image G2B having an image of the boom and jib in which bending is not reflected (hereinafter referred to as "pre-deformation image"), and displays, by a solid line, a work machine image (i.e., deformation image G5) having a deformation image of the boom and a deformation image of the jib in which bending is reflected.

The pre-deformation image may not be displayed on the display unit 12. The display mode of the pre-deformation image and the deformation image G5 is not limited to the example presented in FIG. 12B, as long as the display mode can be distinguished.

Any one of the control units of the BIM application A (specifically, BIM control unit 161) and the assistance module M (specifically, assistance control unit 172) may display, on the display unit 12, information indicating that the deformation image interferes with another image displayed on the display unit 12 (e.g., building image G1B) in the case where the deformation image interferes with it. In this case, the one of the control units implements the function of the notification unit. A part of the one of the control units corresponds to an example of the notification unit.

In the operation example 3 described above, the deformation image of the boom and jib when the work machine is a crane has been described. The operation example 3 described above can also be applied to a boom when the work machine is an aerial work vehicle. The operation example 3 described above can also be applied to a boom when the work machine is a concrete pump vehicle. The boom and jib of the crane, the boom of the aerial work vehicle, and the boom of the concrete pump vehicle correspond to an example of the arm.

(Action/Effect of Operation Example 3)

According to this operation example as described above, the operator can confirm interference between the work machine image in consideration of bending of the boom and bending of the jib and the building image by visually recognizing the deformation image displayed on the display unit 12.

(Operation Example 4)

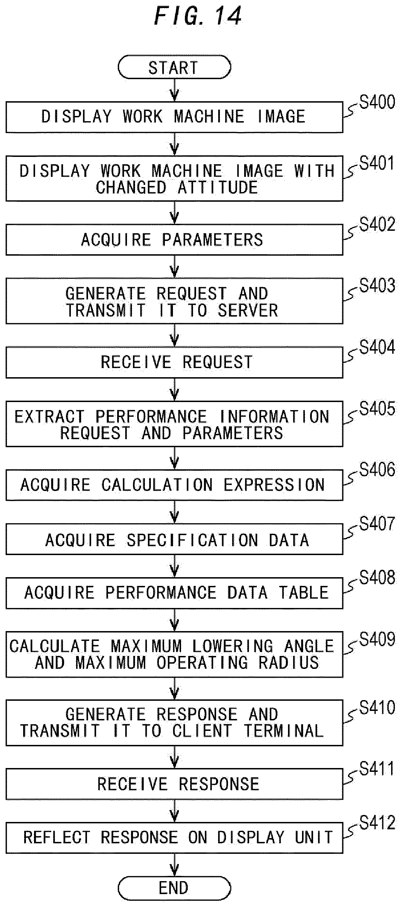

Next, an example of the operation of the BIM assistance system BS will be described with reference to FIGS. 14 to 15B. FIG. 14 is a flowchart presenting the operation of the BIM assistance system BS when the information indicating the maximum lowering angle and maximum operating radius of the boom is displayed on the display unit 12 (see A-4 of Table 2).

In a conveyance work by the crane, the crane sometimes extend the operating radius by lowering the boom in order to convey the load to the conveyance target position. In the crane, the smaller the hoist angle of the boom becomes, the smaller the rated total load becomes.

Therefore, even when the weight of the load is smaller than the rated total load in the first state where the hoist angle is large, the weight of the load sometimes becomes larger than the rated total load in the second state where the hoist angle of the boom is smaller than that in the first state. In this case, the selected crane cannot convey the load to the conveyance target position. If such a situation occurs in an actual work, replacement of the crane becomes necessary, and there is a possibility that the progress of the work becomes remarkably delayed.

When making a work plan using a plurality of cranes, in order to cover the whole area of the construction site with the minimum number of cranes, it is necessary to consider the operating radius at the specified lifting load of each crane. Therefore, consideration of the maximum lowering angle and maximum operating radius in the construction plan significantly contributes to the improvement of the safety of the actual work and the improvement of the work efficiency.

The operation example 4 is carried out when a construction plan in consideration of the maximum lowering angle and maximum operating radius of the crane. In the operation example 4, after deciding the work state of the work machine displayed on the display unit 12, the operator requests the maximum lowering angle and maximum operating radius of the boom corresponding to the work state of the work machine to one server selected from the servers S1 to S4. In the description of this operation example, the work state of the work machine means a state in which the attitude of the work machine has been decided and a state in which the load to be conveyed by the work machine has been decided.

The operator can determine whether or not the crane can perform the conveyance work in the work state of the work machine decided by the operator by looking at the positional relationship between the acquired maximum lowering angle and maximum operating radius of the boom and the conveyance target position. The operation of the BIM assistance system BS in this operation example will be described below.

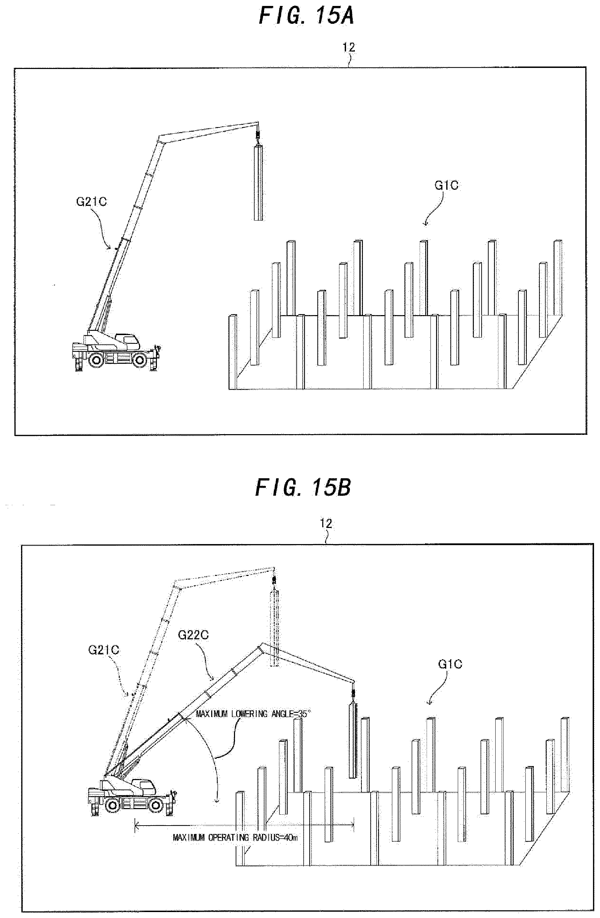

First, in step S402 after step S400 and step S401, a building image G1C and a work machine image G21C illustrated in FIG. 15A are displayed on the display unit 12. Steps S401 and S402 are the same as steps S101 and S102 of FIG. 7A described above.

The building image G1C and the work machine image G21C illustrated in FIG. 15A may be images created by the operator by using the BIM application A or may be images stored in the storage unit 14.

In step S402, the operator inputs a display request for the maximum lowering angle and maximum operating radius of the boom (hereinafter referred to as "display request for the maximum lowering angle and maximum operating radius") via the input unit 11. For example, the operator inputs a display request (performance information request) for the maximum lowering angle and maximum operating radius from the input screen popped up on the display unit 12.

In step S402, when the input unit 11 receives the performance information request, the information acquisition unit 173 acquires, from the BIM control unit 161, the parameters corresponding to the acquired performance information request. In step S402, the information acquisition unit 173 is only required to acquire, from the BIM control unit 161, at least the parameter necessary for the calculation of the performance information specified in the performance information request.

The parameter automatically acquired by the information acquisition unit 173 in step S402 is the parameter (see 4-B of Table 2) presented in column B of Table 9 below.

[Table 9]

| A (performance information request) | | B (parameters) | C (performance information) |
|---|---|---|---|
| 4 | Display request for maximum lowering angle and maximum operating radius of boom | Work machine ID (model, specification number, or serial number) | Maximum lowering angle and operating radius of boom |
| | | Work state (on-tire work and outrigger work) | |
| | | Outrigger overhang width | |
| | | Boom information (type, length, and turn angle) | |
| | | Jib information (type, hoist angle, and length) | |
| | | Hook information | |
| | | Number of wire hooks | |
| | | Lifting load | |
| | | Counterweight information | |

Then, the information acquisition unit 173 sends the acquired information to the request issuance unit 174. Note that the operation of the operator for displaying the maximum lowering angle and maximum operating radius on the display unit 12 ends at step S402. The subsequent processing is automatically performed between the client terminal T and the servers S1 to S4. That is, in this operation example, when the operator inputs a display request for the maximum lowering angle and maximum operating radius via the BIM application A, the corresponding area image is automatically displayed on the display unit 12.

In step S403, the request issuance unit 174 acquires, from the third storage unit 143, the server specifying information (e.g., the URI of the server) for specifying the server corresponding to the work machine image (i.e., the work machine image G21C of FIG. 15A) specified by the acquired model information.

Then, the request issuance unit 174 generates a request including the acquired server specifying information, performance information request, and parameters, and sends it to the communication control unit 171. The request is transmitted via the communication unit 13 to the server (e.g., the server S1) specified by the server specifying information.

Next, the processing of the server S1 having received a request from the client terminal T will be described.

In step S404, the communication unit 21 receives the request. Then, the communication unit 21 sends the request to the request acquisition unit 221.

In step S405, the request acquisition unit 221 extracts the performance information request and parameter from the acquired request. Then, the request acquisition unit 221 sends the extracted information to the calculation unit 222.

In step S406, the calculation unit 222 acquires, from the storage unit 23, the calculation expression corresponding to the performance information request and model information acquired from the request acquisition unit 221.

In step S407, the calculation unit 222 acquires, from the storage unit 23, the specification data corresponding to the work machine image specified by the acquired model information.

In step S408, the calculation unit 222 acquires, from the storage unit 23, the performance data table corresponding to the attitude condition and/or work state information acquired from the request acquisition unit 221. At this time, the calculation unit 222 may acquire, from the storage unit 23, a plurality of performance data tables corresponding to the acquired attitude condition and/or work state information.

Note that in step S408, the calculation unit 222 may acquire, from the storage unit 23, the performance data table on the basis of the specification data acquired in step S407 together with the attitude condition and/or work state information.

In step S409, the calculation unit 222 calculates and obtains information on the maximum lowering angle and maximum operating radius of the boom on the basis of the attitude condition and parameter (attitude condition, work state information, load information, and component information) acquired from the client terminal T, and the calculation expression, performance data table, and specification data acquired from the storage unit 23. Then, the calculation unit 222 sends the calculation result to the response issuance unit 223.

In step S410, the response issuance unit 223 generates a response on the basis of the calculation result acquired from the calculation unit 222. Then, the response issuance unit 223 sends the generated response to the communication unit 21. Then, the communication unit 21 transmits the acquired response to the client terminal T.

Next, the processing of the client terminal T having received the response from the server S1 will be described.

In step S411, the communication unit 13 receives a response from the server S1. Then, the communication unit 13 sends the received response to the second control unit 17. The response is sent to the display assistance control unit 175 via the communication control unit 171.

In step S412, the display assistance control unit 175 reflects, on the display of the display unit 12, the calculation result (in this operation example, information on the maximum lowering angle and maximum operating radius of the boom) of the server S1 included in the response.

For example, as illustrated in FIG. 15B, the display assistance control unit 175 causes the display unit 12 to display a work machine image G22C having the boom in a state of lowering to the maximum lowering angle (hereinafter referred to as "lowering image"). An example of a method for displaying a lowering image on the display unit 12 will be described.

The display assistance control unit 175 reflects the information on the maximum lowering angle of the boom included in the response onto the hoist angle of the boom in the attribute information of the work machine image G21C displayed on the display unit 12.

Note that this processing may be performed by the BIM control unit 161. In this case, the display assistance control unit 175 sends information on the maximum lowering angle of the boom included in the response to the BIM control unit 161. Then, the BIM control unit 161 reflects the acquired information on the maximum lowering angle of the boom onto the hoist angle of the boom in the attribute information of the work machine image displayed on the display unit 12. In any case, on the basis of the processing carried out by the display assistance control unit 175, the calculation result of the server S1 included in the response is reflected on the display of the display unit 12.

In step S412, as illustrated in FIG. 15B, the display assistance control unit 175 may display numerical values of the maximum lowering angle and maximum operating radius on the display unit 12. Note that this processing may also be performed by the BIM control unit 161.

Although not illustrated, the display assistance control unit 175 may display, on the display unit 12 in step S412, a notification image for notifying the maximum lowering angle and maximum operating radius.

(Action/Effect of Operation Example 4)

According to this operation example as described above, the operator can intuitively recognize the maximum lowering angle and operating radius of the work machine in the work machine image displayed on the display unit 12. By recognizing the maximum lowering angle and operating radius of the work machine, the operator can intuitively judge whether or not the selected work machine is a work machine suitable for conveyance of the load. For example, if the conveyance target position of the load is not included in the acquired operating radius, the operator can judge that the selected work machine alone cannot convey the load to the conveyance target position. On the basis of such determination result, the operator can change the work machine to use to a work machine having a larger operating radius. Alternatively, on the basis of the determination result described above, the operator can also select a procedure in which after the selected work machine conveys the load to any position within the operating radius of this work machine, another work machine conveys the load from this relay position to the conveyance target position.

When making a work plan using a plurality of cranes, by acquiring the operating radius for the specified lifting load of each crane, it is possible to know the placement of cranes capable of covering the whole area of the construction site with the minimum number of cranes. For example, by drawing the operating radius of each crane on a plan view of the construction site, the operator can intuitively recognize the placement of cranes capable of covering the whole area of the construction site with the minimum number of cranes. Thus, according to this operation example, the operator can carry out the construction plan work with high accuracy in consideration of the maximum lowering angle and operating radius of the work machine.

(Operation Example 5)

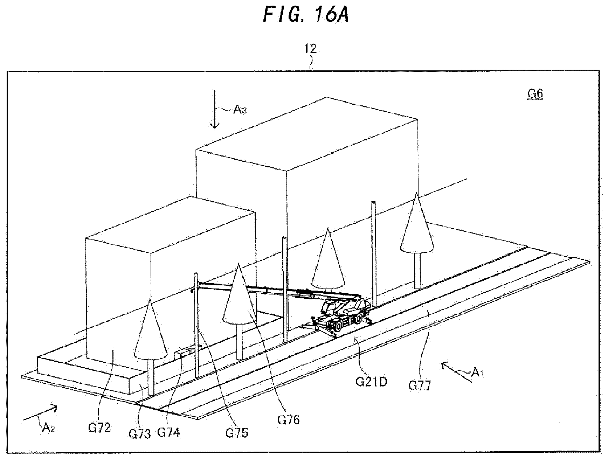

Next, an example of the operation of the BIM assistance system BS will be described with reference to FIGS. 16A to 16E. Similarly to the operation example 2 described above, this operation example is an example of displaying an area image on the display unit 12. Note that the operation by the operator of the BIM assistance system BS and the operation of the BIM assistance system BS are substantially similar to those in the operation flow (FIG. 9) of the operation example 2 described above. The situation in which this operation example is carried out is similar to the case of the operation example 2 described above.

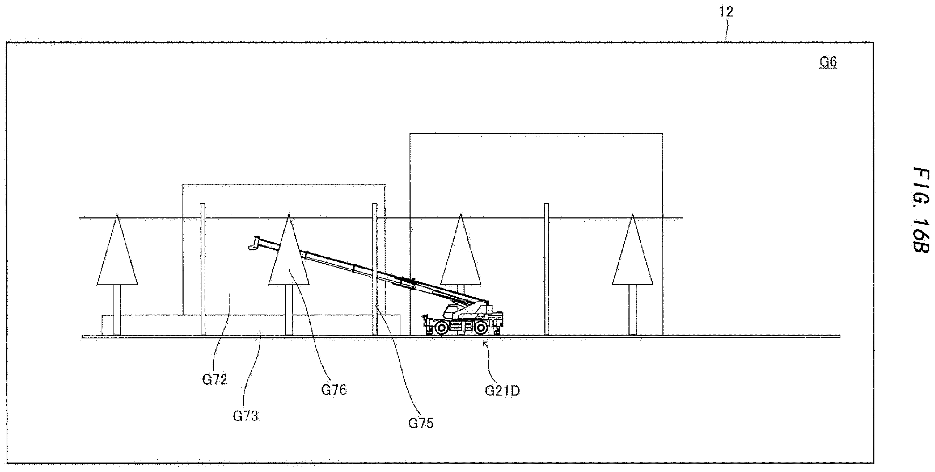

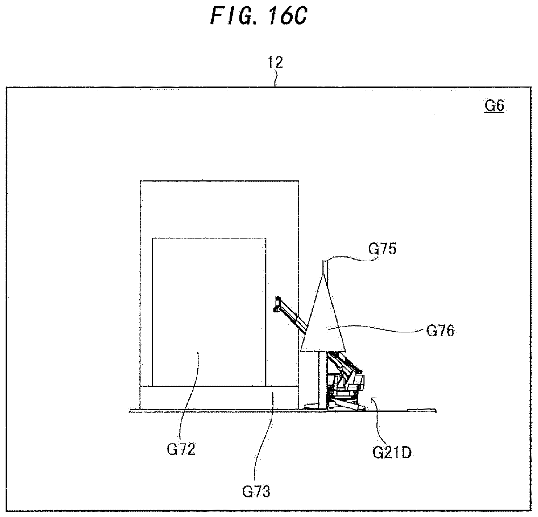

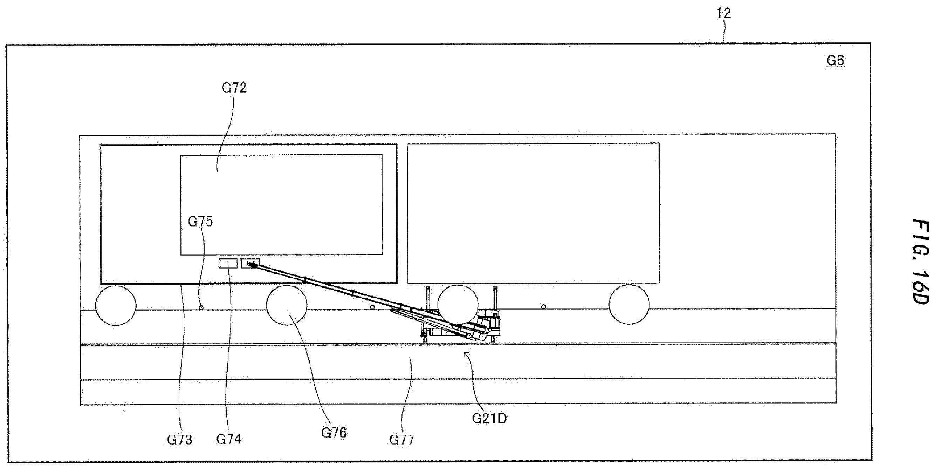

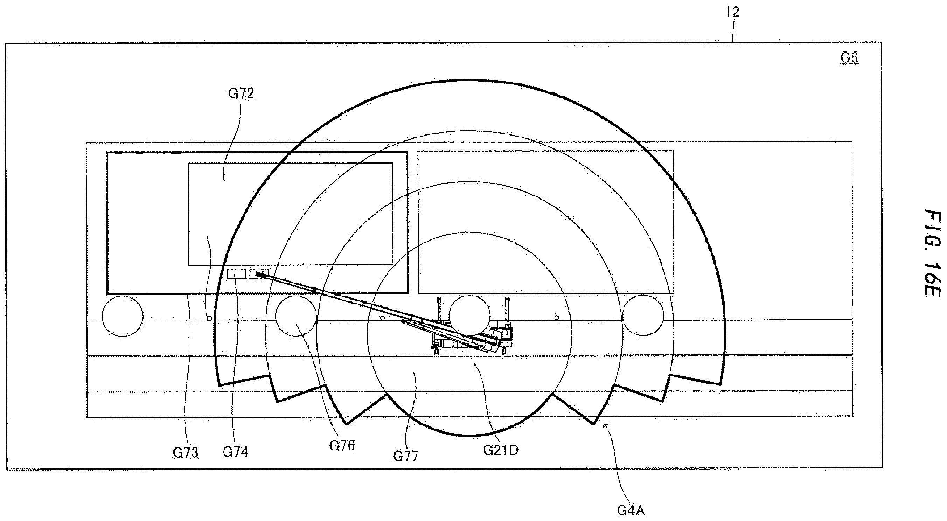

FIGS. 16A to 16E present an example of the display unit 12 on which an image of a work site (hereinafter referred to as "work site image G6") including a building image, a work site configuration image, and a work machine image is displayed. FIG. 16A presents the display unit 12 on which a perspective view of the work site image G6 is displayed. FIG. 16B is an $A_1$ arrow view of FIG. 16A. FIG. 16C is an $A_2$ arrow view of FIG. 16A. FIG. 16D is an $A_3$ arrow view of FIG. 16A. FIG. 16E presents the display unit 12 on which an area image G4A is displayed on the work site image G6 presented in FIG. 16B.

In this operation example, in the work site image G6 presented in FIGS. 16A to 16E, the operator can verify the operation of lifting and moving an outdoor unit G74 of an air conditioner placed between a building G72 and a fence G73.

First, the operator causes the display unit 12 to display the work site image G6 presented in FIGS. 16A to 16E. Such the work site image G6 may be an image created by the operator using the BIM application A or may be an image stored in the storage unit 14. The method for creating the work site image G6 is as described above.

The overhang width of the left side outrigger of the work machine image G21D illustrated in FIGS. 16A to 16E is the minimum. By minimizing the overhang width of the left side outrigger, the left side outrigger does not protrude to an opposite lane G77.

On the other hand, the overhang width of the right side outrigger of the work machine image G21D is the maximum. Thus, the left side outrigger and the right side outrigger of the work machine image G2 have different overhang widths.

The operator decides the attitude (e.g., boom length, turn angle, and hoist angle) of the boom of the work machine image G21D so as not to interfere with the fence G73, a power pole G75, and a tree G76 in the work site image G6. The operation for deciding the attitude is performed by inputting, from the input unit 11, an attitude condition defining the attitude of the work machine image G21D. Note that the operator may decide the attitude of the display work machine by dragging the work machine image G21D.

In the work site image G6, after the attitude of the work machine image G21D is decided, the operator performs an operation of an area display request (performance information request). For example, the operator inputs an area display request from the input screen popped up on the display unit 12.

In this operation example, the overhang width of the left side outrigger and the overhang width of the right side outrigger in the attitude condition included in the request are different.

When the operator inputs an area display request, the BIM assistance system BS executes the processing of steps S202 to S213 of FIG. 9, and the display unit 12 displays the area image G4A indicated by a thick line in FIG. 16E. Note that although not illustrated, the area image G4A is also displayed in the work site image G6 presented in FIGS. 16A and 16C to 16E.

(Action/Effect of Operation Example 5)

Also in this operation example as described above, when the operator inputs a display request for the area image via the BIM application A, the area image is automatically displayed on the display unit 12.

In the case of the area image G4A illustrated in FIG. 16E, the area on the left side of the vehicle in the area image G4A is missing because the overhang width of the left side outrigger in the work machine image G21D is the minimum. Since the operator can visually recognize, with the display unit 12, the area image corresponding to the overhang state of the outrigger, the operator can intuitively perform a highly accurate simulation.

By displaying the area image G4A on the work site image G6 of different viewpoints such as FIGS. 16A to 16E, the operator can perform a more accurate simulation.

(Operation Example 6)

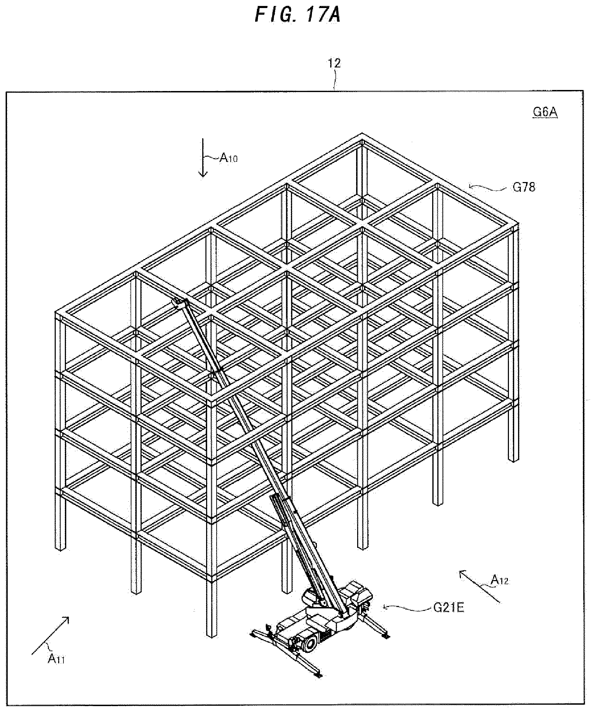

Next, an example of the operation of the BIM assistance system BS will be described with reference to FIGS. 17A to 18E. Similarly to the operation example 3 described above, this operation example is an example of displaying a deformation image of the boom on the display unit 12. Note that the operation by the operator and the operation of the BIM assistance system BS are substantially similar to those in the operation flow (see FIG. 11) of the operation example 3 described above. The situation in which the operation example 6 is carried out is similar to the case of the operation example 3 described above.

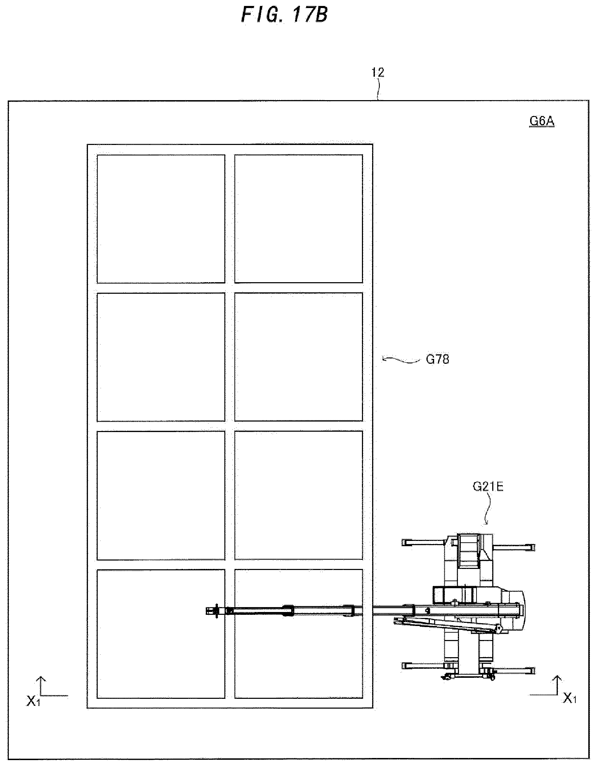

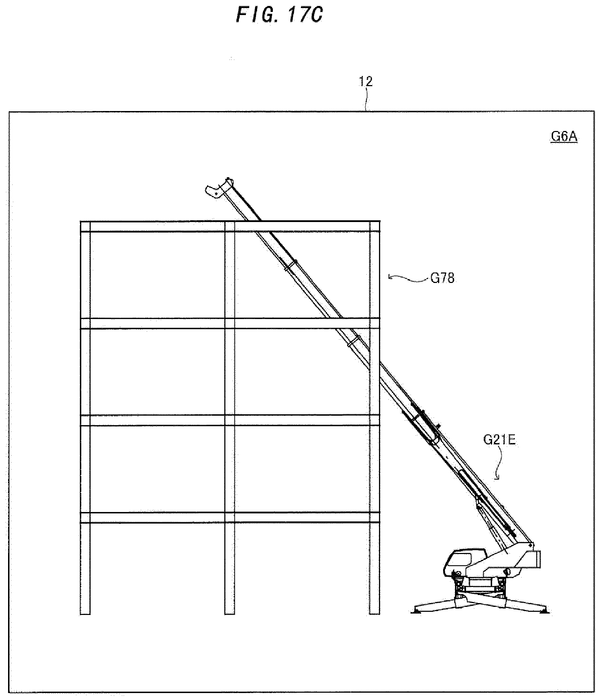

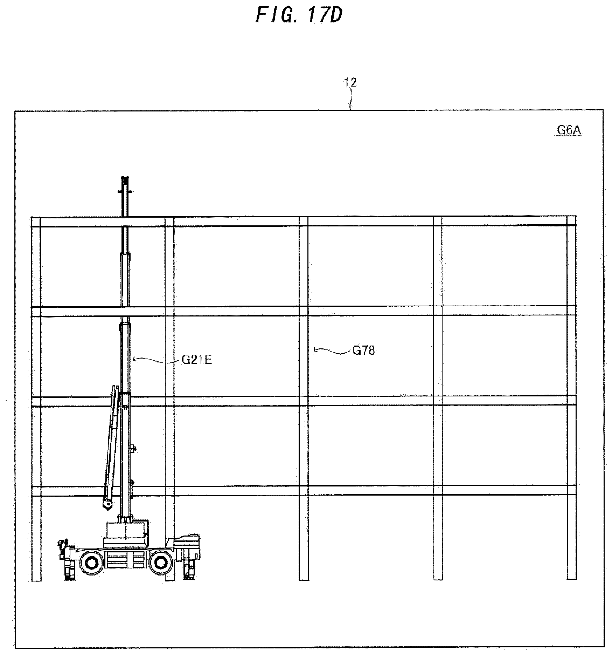

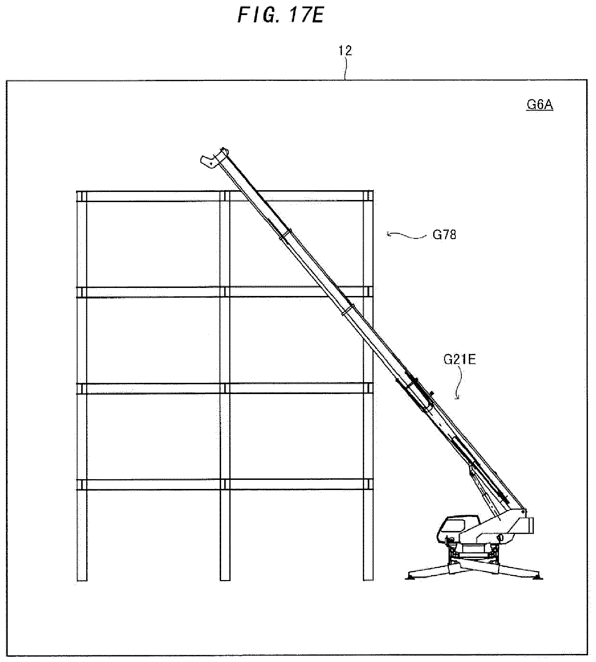

FIGS. 17A to 17E present an example of the display unit 12 on which a work site image G6A including the building image and the work machine image is displayed. FIG. 17A presents the display unit 12 on which a perspective view of the work site image G6A is displayed. FIG. 17B is an $A_{10}$ arrow view of FIG. 17A. FIG. 17C is an $A_{11}$ arrow view of FIG. 17A. FIG. 17D is an $A_{12}$ arrow view of FIG. 17A. FIG. 17E is an $X_1$-$X_1$ cross-sectional view of FIG. 17B.

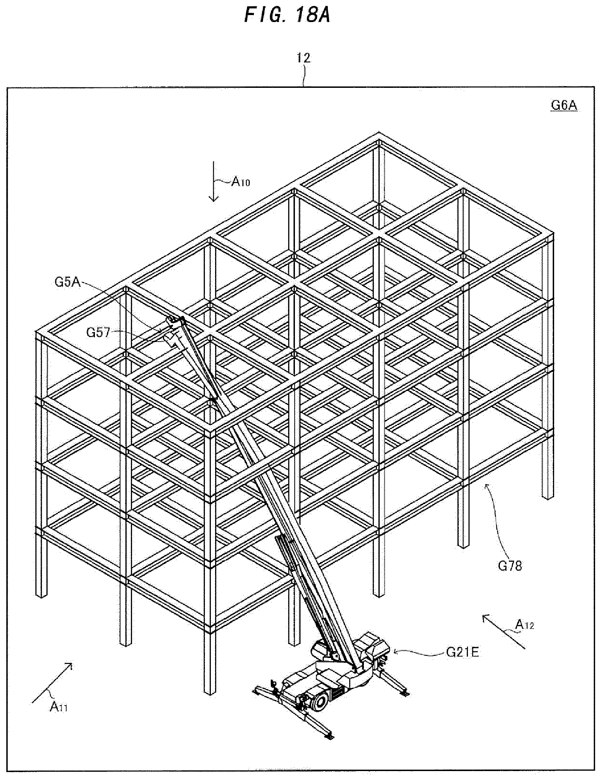

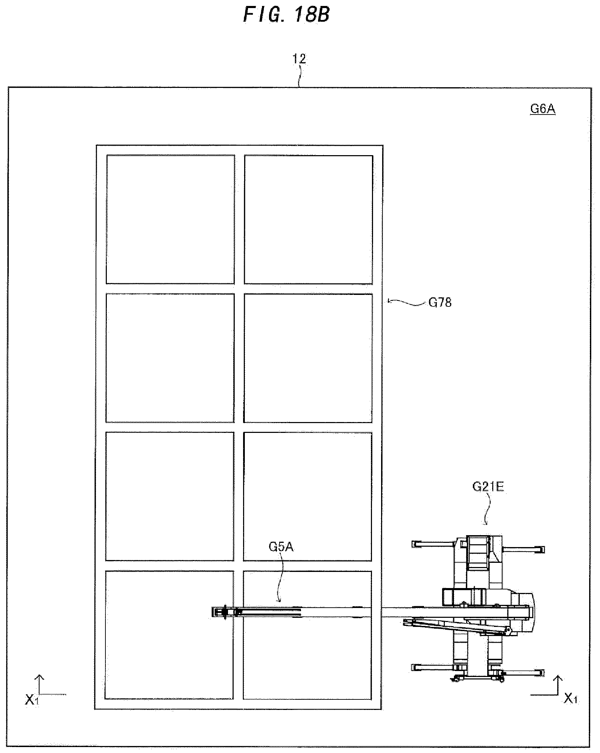

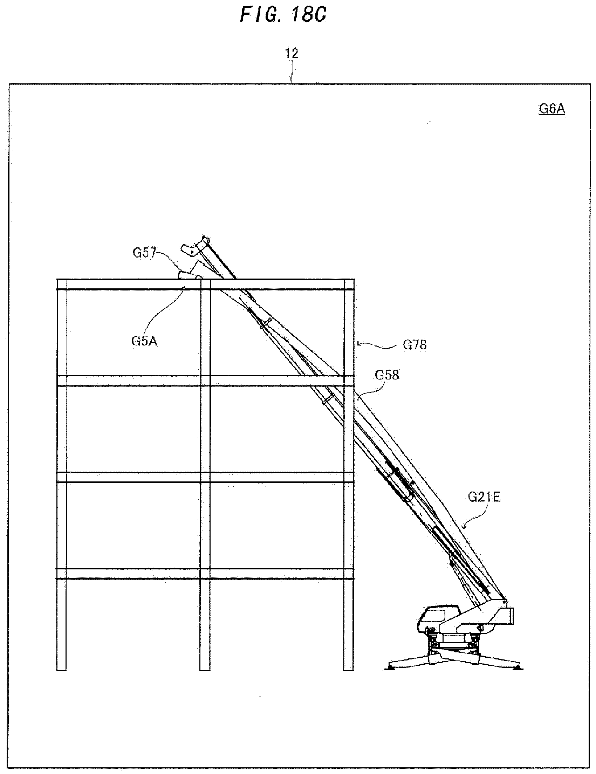

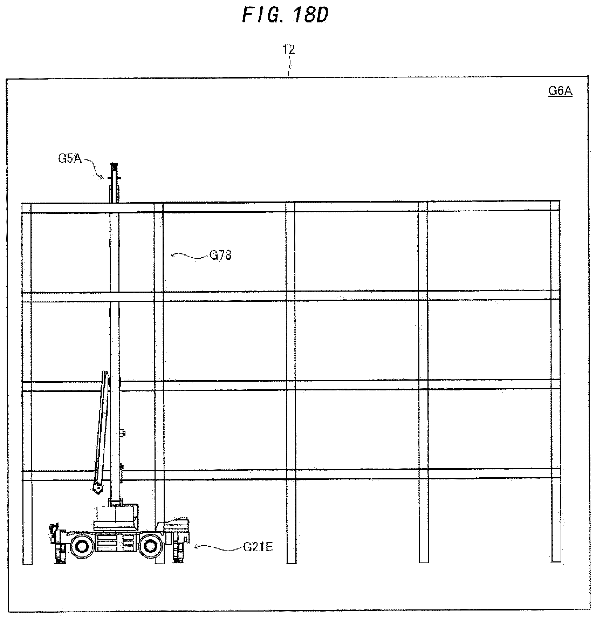

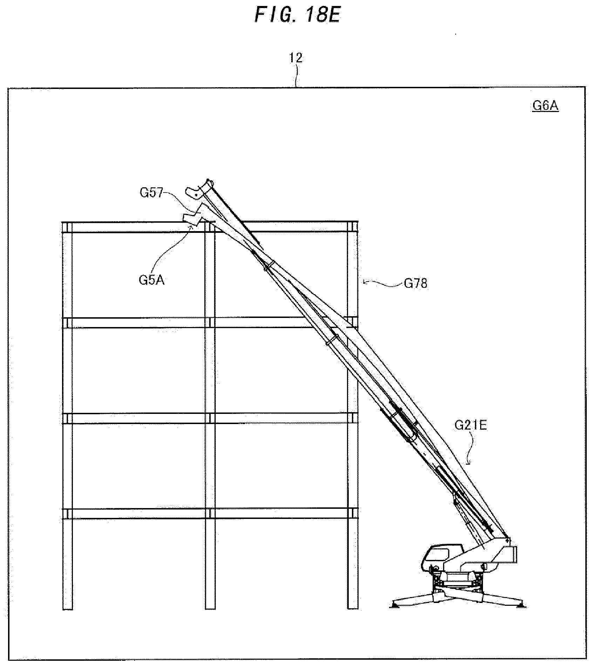

FIGS. 18A to 18E present an example of the display unit 12 in which a deformation image of the boom is displayed on the work site image G6A presented in FIGS. 17A to 17E.

In this operation example, the operator can verify an interference between a steel structure G78 and the boom in the work site image G6A illustrated in FIGS. 17A to 17E.

First, the operator causes the display unit 12 to display the work site image G6A illustrated in FIGS. 17A to 17E. Such the work site image G6A may be an image created by the operator using the BIM application A or may be an image stored in the storage unit 14. The method for generating the work site image G6A is as described above.

The operator decides the attitude (e.g., boom length, turn angle, and hoist angle) of the boom of a work machine image G21E so as not to interfere with the steel structure G78. The operation for deciding the attitude is performed by inputting, from the input unit 11, an attitude condition of the work machine image G21E. Note that the operator may decide the attitude of the display work machine by dragging the work machine image G21E.

In the work site image G6A, after deciding the attitude of the work machine image G21E, the operator performs an operation of the display request (performance information request) for the deformation image. For example, the operator inputs a display request for the deformation image from the input screen popped up on the display unit 12.

When the operator inputs a bending display request, the BIM assistance system BS executes the processing of steps S301 to S312 of FIG. 11, and the display unit 12 displays a work machine image (deformation image G5A) having a deformation image of the boom presented in FIGS. 18A to 18E.

The deformation image G5 illustrated in FIGS. 18A to 18E is an image generated by the deformation image processing unit 177 on the basis of the deformation image information included in the response acquired from the server S1. However, the deformation image may be generated by the server S1 (specifically, calculation unit 222).

In this case, the response including the deformation image (performance information) generated by the calculation unit 222 is transmitted from the server S1 to the client terminal T. The display assistance control unit 175 having acquired the response reflects the deformation image included in the response on the display of the display unit 12.

Also in this operation example as described above, when the operator inputs a display request for the deformation image via the BIM application A, the deformation image is automatically displayed on the display unit 12.

Note that although not illustrated, an image of the boom before deformation (hereinafter referred to as "pre-deformation image") may be omitted in FIGS. 18A to 18E. That is, when the operator inputs a display request for the deformation image, the pre-deformation image may be deleted from the display unit 12, and the deformation image G5A may be automatically displayed on the display unit.

In the images illustrated in FIGS. 17A to 17E, the boom of the work machine image G2 does not interfere with the steel structure G78. On the other hand, in the case of the deformation image G5A illustrated in FIGS. 18A to 18E, a tip end portion G57 of the boom is displaced downward relative to the tip end portion G57 of the boom of the pre-deformation image, and a middle portion G58 of the boom is displaced upward relative to the middle portion of the boom of the pre-deformation image, and the boom of the work machine image G21E and the steel structure G78 interfere with each other.

As illustrated in FIGS. 18A to 18E, when the boom and the steel structure G78 interfere with each other, by changing the attitude of the displayed boom, the operator can search the attitude of the boom in which the boom and the steel structure G78 do not interfere. The operator can change the attitude of the boom by dragging the displayed boom. The operator can also change the attitude of the displayed boom by inputting the hoist angle of the boom. When the attitude of the boom is changed, a deformation image of the boom corresponding to the attitude of the changed boom may be displayed.

(Action/Effect of Operation Example 6)

As described above, according to this operation example, by visually recognizing the images illustrated in FIGS. 18A to 18E, the operator can perform a highly accurate simulation in consideration of the interference between the work machine and the steel structure.

(Operation Example 7)

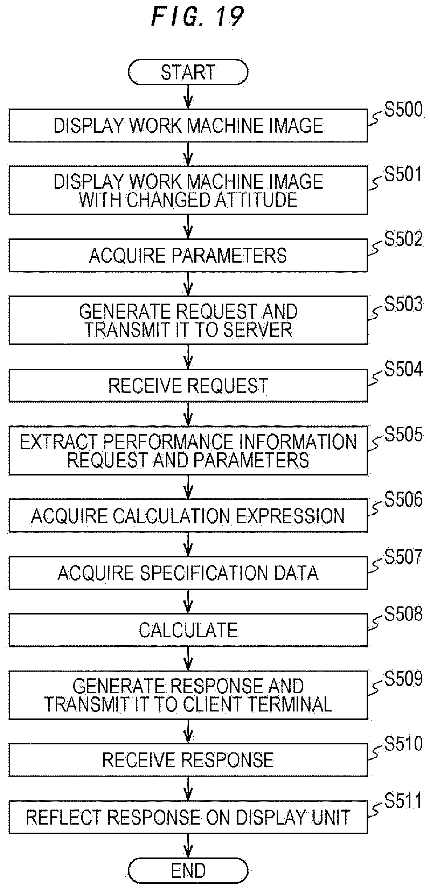

Next, an example of the operation of the BIM assistance system BS will be described with reference to FIGS. 2 and 19 to 20B. FIG. 19 is a flowchart presenting the operation of the BIM assistance system BS when the determination result of whether or not the work is possible in consideration of the ground strength is displayed on the display unit 12 (see A-9 of Table 2).

In a conveyance work by the crane, installation pressure (outrigger reaction force) acts on the ground from the outrigger of the crane. If the installation pressure is larger than the ground strength, there is a possibility that the ground sinks and the crane overturns. Therefore, consideration of the ground strength in advance in the construction plan prevents the ground sinkage and crane overturn, and significantly contributes to the improvement of the safety of the actual work and the improvement of the work efficiency.

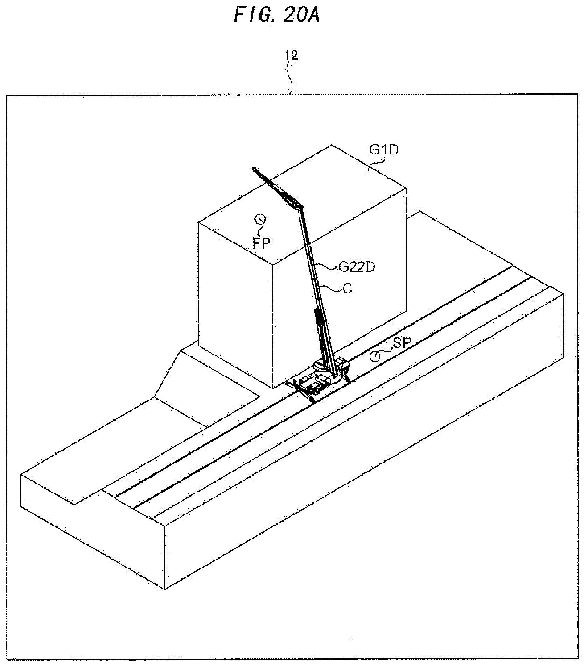

The operation of the BIM assistance system BS in this operation example will be described below. Specifically, the operation of the BIM assistance system BS when the operator verifies whether or not it is possible to convey the load from a start point SP to an end point FP using a crane C illustrated in FIG. 20A will be described.

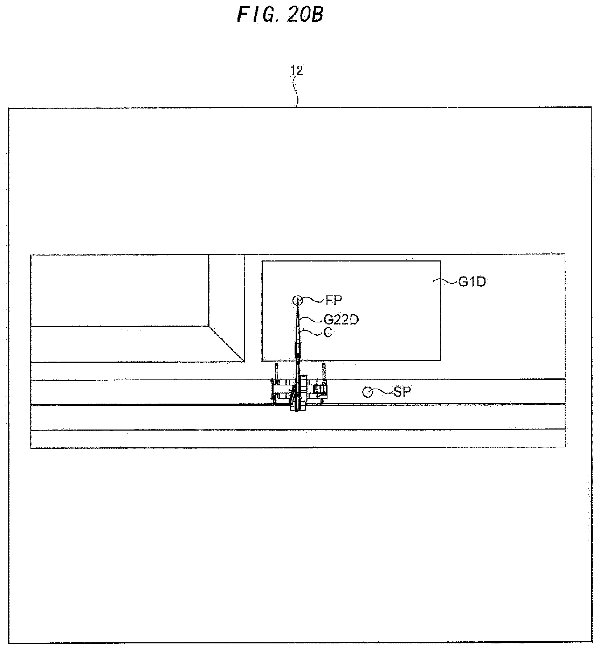

Note that a case of verifying the attitude (attitude of the crane C illustrated in FIGS. 20A and 20B) of the crane when unloading the load to the end point FP will be described below. Also in a case of verifying the attitude of another crane, the basic operation of the BIM assistance system BS is the same.

In step S500 of FIG. 19, only a building image G1D illustrated in FIG. 20A is displayed on the display unit 12. That is, in step S500, the work machine image is not displayed on the display unit 12. The building image G1D may be an image created by the operator by using the BIM application A or may be an image displayed by reading the information stored in the storage unit 14.

In step S500, in order to display the work machine image of the basis attitude on the display unit 12, the operator inputs a display instruction of the work machine image from the input unit 11. The operation performed by the operator when displaying the work machine image of the basic attitude on the display unit 12 is the same as that in the operation example 1 described above.

In step S501, the operator inputs an attitude condition from the input unit 11 in order to decide the attitude of the work machine in the work machine image of the basic attitude displayed on the display unit 12. The operation when the operator decides the attitude of the work machine image is the same as that in the operation example 1 described above.

In step S501, when the input unit 11 receives the input of the attitude decision operation, the BIM control unit 161 reflects the attitude decision operation on the work machine image of the display unit 12. Then, as illustrated in FIG. 20A, the display unit 12 displays a work machine image G22D in which the attitude is changed from that in the work machine image of the basic attitude.

Next, in step S502, the operator performs an operation for obtaining whether or not the work is possible in consideration of the ground strength (hereinafter simply referred to as "whether or not the work is possible") of the work machine image G22D whose attitude has been decided in step S501. For example, the operator inputs a display request (performance information request) for whether or not the work is possible from the input screen popped up on the display unit 12.

Note that the operation of the operator for displaying whether or not the work is possible on the display unit 12 ends at step S502. The subsequent processing is automatically performed between the client terminal T and the servers S1 to S4. That is, in this operation example, when the operator inputs a display request for whether or not the work is possible via the BIM application A, the information on whether or not the work is possible is automatically displayed on the display unit 12.

In step S502, when the input unit 11 receives the performance information request, the information acquisition unit 173 acquires, from the BIM control unit 161, the parameters (model information, attitude condition, load information work state information, component information, and other information) corresponding to the acquired performance information request.

In step S502, the information acquisition unit 173 acquires, from the BIM control unit 161, at least the parameter necessary for the calculation of the performance information specified in the performance information request.

The parameter automatically acquired by the information acquisition unit 173 in step S502 is the parameter presented in column B of Table 10 below (parameter presented in 9-B of Table 2).

[Table 10]

| A | A (performance information request) | B (parameters) | C (performance information) |
|---|---|---|---|
| 9 | Display request for whether or not work is possible in consideration of ground strength | Work machine ID (model, specification number, or serial number) | Reaction force value of outrigger jack<br><br>Determination result of whether or not work is possible<br><br>Workable arrangement position |
| | | Outrigger overhang width | |
| | | Boom information (type, hoist angle, length, and turn angle) | |
| | | Jib information (type, hoist angle, and length) | |
| | | Hook information | |
| | | Number of wire hooks | |
| | | Lifting load | |
| | | Ground strength | |
| | | Counterweight information | |

The parameter in this operation example includes a parameter in the case of performing an outrigger jack reaction force display request (see A-8 of Table 2) and information on the ground strength.

The BIM application A stores information on the ground strength. The BIM application A stores the ground strength of the entire work site. The information on the ground strength may be the ground strength in consideration of the buried member that is buried underground at the work site.

Note that the BIM application A may store information on the ground strength as a ground strength table. The ground strength table may include position information of the work site (e.g., coordinates or compartments) and the ground strength associated with this position information.

In step S502, the information acquisition unit 173 acquires, from the BIM application A, information on the ground strength of the ground corresponding to the position where the work machine image G22D is disposed on the display unit 12. Then, in step S502, the information acquisition unit 173 sends the acquired information to the request issuance unit 174. Note that in step S502, the information on the ground strength acquired by the information acquisition unit 173 is not limited to the information stored in the BIM application A. The information on the ground strength acquired by the information acquisition unit 173 may be information having been input from the information input unit 77 by the operator.

In step S503, the request issuance unit 174 acquires, from the third storage unit 143, the server specifying information (e.g., the URI of the server) for specifying the server corresponding to the work machine image (i.e., the work machine image G22D of FIG. 20A) specified by the acquired model information.

Then, the request issuance unit 174 generates a request including the acquired server specifying information, performance information request, and parameters, and sends it to the communication control unit 171. The request is transmitted via the communication unit 13 to the server (e.g., the server S1) specified by the server specifying information.

The processing of the server S1 having received a request from the client terminal T will be described below.

In step S504, the communication unit 21 receives the request. Then, the communication unit 21 sends the request to the request acquisition unit 221.

In step S505, the request acquisition unit 221 extracts the performance information request and parameter from the acquired request. Then, the request acquisition unit 221 sends the extracted information to the calculation unit 222.

In step S506, the calculation unit 222 acquires, from the storage unit 23, the calculation expression corresponding to the performance information request and model information acquired from the request acquisition unit 221. In this operation example, the calculation expression acquired by the calculation unit 222 is a calculation expression for calculating the reaction force of the outrigger jack and a calculation expression for comparing the reaction force of the outrigger jack with the ground strength included in the parameter.

In step S507, the calculation unit 222 acquires, from the storage unit 23, the specification data corresponding to the work machine specified by the acquired model information.

In step S508, the calculation unit 222 calculates the reaction force of the outrigger jack on the basis of the parameter acquired from the client terminal T and the calculation expression and specification data acquired from the storage unit 23. Then, whether or not the work is possible is determined by comparing the calculated outrigger jack reaction force with the ground strength included in the parameter.

In step S508, when the calculated outrigger jack reaction force is smaller than the ground strength included in the parameter, the calculation unit 222 determines that the work is possible. On the other hand, in step S508, when the calculated outrigger jack reaction force is equal to or greater than the ground strength included in the parameter, the calculation unit 222 determines that the work is impossible.

The calculation unit 222 sends the calculated outrigger jack reaction force and/or determination result to the response issuance unit 223.

In step S509, the response issuance unit 223 generates a response on the basis of the reaction force of the outrigger jack acquired from the calculation unit 222 and/or the determination result. Then, the response issuance unit 223 sends the generated response to the communication unit 21. Then, the communication unit 21 transmits the acquired response to the client terminal T. When the response includes the determination result, this response may be regarded to include the determination result as to whether or not the work machine having the attitude defined by the attitude condition included in the request can perform the predetermined work.

Next, the processing of the client terminal T having received the response from the server S1 will be described.

In step S510, the communication unit 13 receives a response from the server S1. Then, the communication unit 13 sends the received response to the second control unit 17. The response is sent to the display assistance control unit 175 via the communication control unit 171.

In step S511, the display assistance control unit 175 reflects the calculation result of the server S1 included in the response (in this operation example, information on whether or not the work is possible) on the display of the display unit 12.

(Action/Effect of Operation Example 7)

According to this operation example as described above, since a construction plan in consideration of the ground strength can be made, ground sinkage and crane overturn in an actual work can be prevented. This operation example as above significantly contributes to the improvement of the safety of the work and the improvement of the work efficiency.

(Variation 1 of Operation Example 7)

A variation 1 of the operation example 7 will be described. This variation is carried out in a situation of verifying as to whether or not the load can be conveyed from the start point SP (see FIGS. 20A and 20B) to the end point FP.

In this variation, the operator specifies the range of the attitude that the crane can take when conveying the load from the start point SP to the end point FP. Specifically, when the crane conveys the load from the start point SP to the end point FP, the turn angle of the crane attitude conditions changes in the range from the first turn angle (e.g., 0 degrees) corresponding to the first attitude when the load disposed at the start point SP is lifted to the second turn angle (e.g., 90 degrees) corresponding to the second attitude when the load is lowered at the end point FP. The operator specifies the range of this turn angle.

When the BIM assistance system BS receives input of the range of the turn angle, the information acquisition unit 173 acquires as a parameter, in step S502 described above, the turn angle of the range specified by the operator. Then, in step S508 described above, the calculation unit 222 calculates the outrigger jack reaction force for the entire range of the turn angle included in the parameter, and compares the calculated outrigger jack reaction force with the ground strength included in the parameter, thereby determining whether or not the work is possible. If the reaction force of the outrigger jack becomes greater than the ground strength at any turn angle in the range of the specified turn angle, the calculation unit 222 determines that the conveyance work described above cannot be performed. Note that the calculation unit 222 may determine whether or not the above-described work is possible by discretely changing the parameter.

(Variation 2 of Operation Example 7)

A variation 2 of the operation example 7 will be described. This variation is implemented in a situation where the operator requires the presentation of a crane capable of performing a conveyance work.

In this variation, when the server S1 determines that the conveyance work cannot be performed under the attitude condition included in the parameter, the server S1 (specifically, response issuance unit 223) includes, in the response, information on the crane capable of performing the conveyance work. The display assistance control unit 175 of the client terminal T having received such the response displays, on the display unit 12, information for notifying the operator of the crane included in the response.

(Variation 3 of Operation Example 7)

A variation 3 of the operation example 7 will be described. This variation is implemented in a situation where at least the arrangement position of the crane and the load have been decided. In this situation, the operator specifies, as the performance information request, the range (hereinafter referred to as "movable range of the load") in which the load can be moved by the crane placed at the specified position.

In this variation, the attitude of the work machine may not be decided. That is, the parameter included in the request may not include the attitude condition of the work machine. However, if some attitude conditions have been decided, the parameter may include the decided attitude conditions.

In this variation, the calculation unit 222 of the server S1 calculates the reaction force of the outrigger jack by changing the undecided attitude condition at a predetermined interval. The calculation unit 222 determines whether or not the work is possible by comparing the calculated outrigger jack reaction force with the ground strength included in the parameter.

Targeting at all the attitudes that the specified crane can take, the calculation unit 222 calculates the reaction force of the outrigger jack and determines whether or not the work is possible. The calculation unit 222 generates information indicating the movable range of the load on the basis of the determination result.

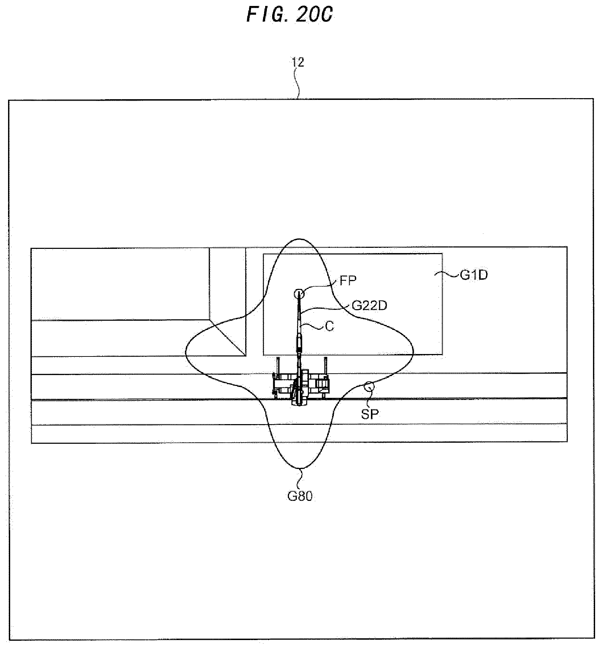

In this variation, the server S1 (specifically, response issuance unit 223) includes information indicating the movable range of the load in the response. Then, the display assistance control unit 175 of the client terminal T having received this response displays, on the display unit 12, information indicating the movable range of the load included in the response. FIG. 20C is a view illustrating the display unit 12 on which an image G80 of the movable range of the load is presented. The image of the movable range of the load may be a two-dimensional image or may be a three-dimensional image.

(Variation 4 of Operation Example 7)

A variation 4 of the operation example 7 will be described. This variation is implemented in a situation where at least the arrangement position of the crane and the attitude condition of the crane have been decided. In this situation, the operator specifies the maximum load of the load that can be lifted as the performance information request.

In this variation, the calculation unit 222 of the server S1 calculates the reaction force of the outrigger jack by changing the load of the load at a predetermined interval. The calculation unit 222 determines whether or not the work is possible by comparing the calculated outrigger jack reaction force with the ground strength included in the parameter. Then, the calculation unit 222 generates information on the maximum load of the load that can be lifted on the basis of the determination result.

In this variation, the server S1 (specifically, response issuance unit 223) includes information on the maximum load of the load in the response. Then, the display assistance control unit 175 of the client terminal T having received this response displays, on the display unit 12, information on the maximum load of the load included in the response.

(Variation 5 of Operation Example 7)

A variation 5 of the operation example 7 will be described. This variation is implemented in a situation where at least the model of the work machine (in this variation, crane) and the load have been decided. In this situation, the operator specifies information on the arrangement position of the work machine (hereinafter, simply referred to as "information on the arrangement position") as the performance information request.

In this variation, the parameter included in the request includes at least the performance information request, the model information of the work machine, the load information, and the information on the ground strength of the whole work site.

The calculation unit 222 of the server S1 calculates information on the arrangement position of the work machine specified by the model information on the basis of the parameter included in the request, the acquired specification data, and the like. The calculation unit 222 may calculate the attitude condition of the work machine when the work machine is installed at the calculated arrangement position.

The server S1 (specifically, response issuance unit 223) includes information on the arrangement position of the work machine in the response. When the calculation unit 222 has calculated the attitude condition of the work machine, the server S1 includes information on the attitude condition of the work machine in the response. Then, the display assistance control unit 175 of the client terminal T having received this response displays, on the display unit 12, information on the arrangement position included in the response. When the attitude condition of the work machine is included in the response, the display assistance control unit 175 reflects the acquired attitude condition on the display of the work machine image displayed on the display unit 12.

(Operation Example 8)

Next, an example of the operation of the BIM assistance system BS will be described with reference to FIGS. 2 and 21 to 23. This operation example is an example in which an image related to the movement route of the load is displayed on the display unit 12.

In the work plan of the crane, after the start point SP of the load, the end point FP, the load, and the model of the work machine are decided, the movement route of the load is decided. Conventionally, the operator decided the movement route of the load in consideration of the position of the load, the attitude of the crane, the load state of the crane, and the surrounding building. However, in order to decide the optimum route, it was necessary to examine the movement route in accordance with various situations. Therefore, the method for deciding the movement route carried out conventionally has been low in work efficiency. Therefore, there has been a demand for a method for efficiently obtaining the optimum movement route of the load in the work plan of the crane.

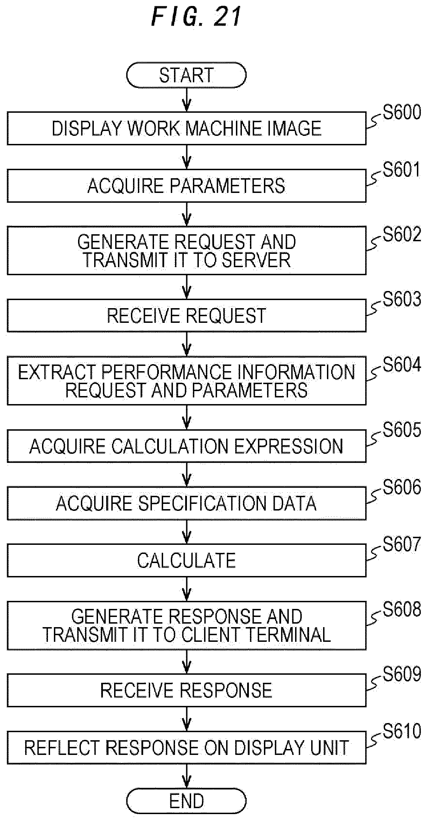

This operation example is carried out in a state where the start point SP of the load, the end point FP of the load, the load, and the model of the work machine have been decided. FIG. 21 is a flowchart presenting the operation of the BIM assistance system BS when the movement route of the load is displayed on the display unit 12 (see A-10 of Table 2). The operation of the BIM assistance system BS in this operation example will be described below.

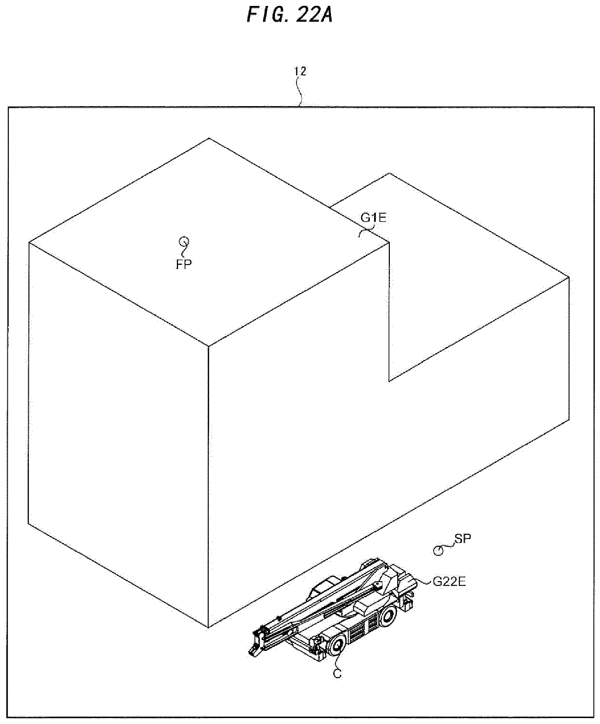

In step S600 of FIG. 21, only a building image G1E illustrated in FIG. 22A is displayed on the display unit 12. That is, in step S600, the work machine image is not displayed on the display unit 12. The building image G1E may be an image created by the operator by using the BIM application A or may be an image displayed by reading the information stored in the storage unit 14.

In step S600, in order to display a work machine image G22E of the basis attitude on the display unit 12, the operator inputs a display instruction of the work machine image from the input unit 11. The operation performed by the operator when displaying the work machine image G22E of the basic attitude on the display unit 12 is the same as that in the operation example 1 described above. By step S600, the start point SP of the load, the end point FP of the load, the load, and the model of the work machine have been decided.

Next, in step S601, the operator performs an operation for displaying the movement route of the load on the display unit 12. For example, the operator inputs a display request (performance information request) for the movement route of the load from the input screen popped up on the display unit 12.

In this operation example, the operator inputs the start point SP of the load and the end point FP of the load by operating the BIM application A. The operator may input a via point (not illustrated) of the load.

Note that in step S601, the operator may input a condition (hereinafter referred to as "priority condition") that is prioritized in the generation of the movement route of the load executed by the calculation unit 222 in step S607 described later. The priority condition includes, for example, "movement route with the shortest movement distance", "movement route with the least movement time", and "movement route with the lowest fuel consumption".

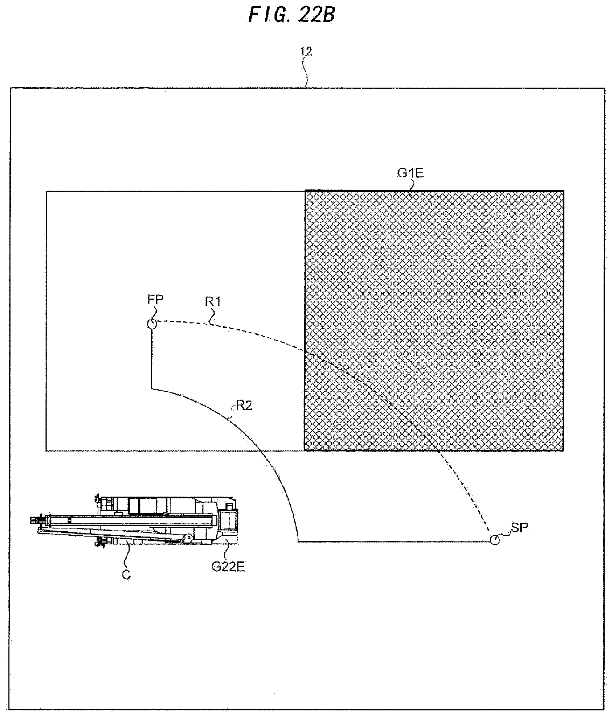

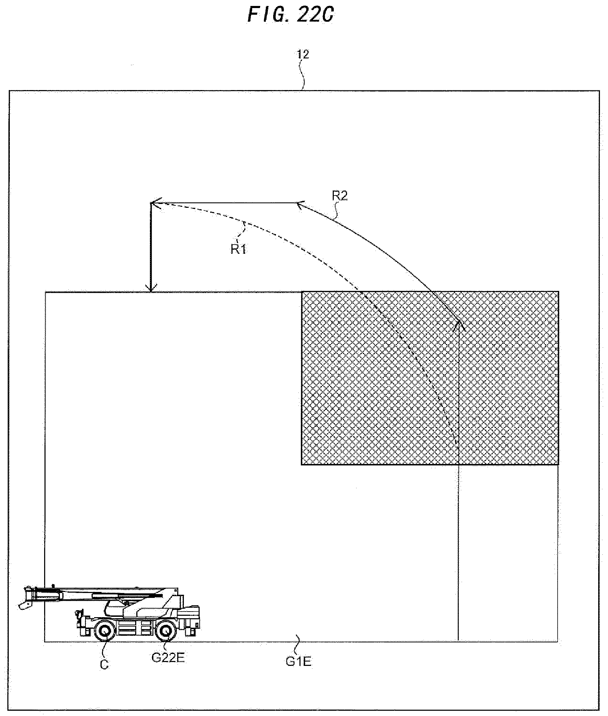

The operator can also specify "movement route not passing through the prohibited zone" as a priority condition. The prohibited zone is a zone provided with diagonal grids in FIGS. 22B and 22C, for example. Information on the prohibited zone is stored in the BIM application A.

Note that the operation of the operator for displaying the movement route of the load on the display unit 12 ends in step S601. The subsequent processing is automatically performed between the client terminal T and the servers S1 to S4. That is, in this operation example, when the operator inputs a display request for the movement route of the load via the BIM application A, the image related to the movement route of the load is automatically displayed on the display unit 12.

In step S601, when the input unit 11 receives the performance information request, the information acquisition unit 173 acquires, from the BIM control unit 161, the parameters (model information, attitude condition, load information, work state information, component information, and other information) corresponding to the acquired performance information request. In this operation example, the parameter includes information on the building image G1E as other information. The parameter includes, as load information, lifting load information, information on the start point of the load, and information on the end point of the load. However, the parameter may include information on the shape of the load as the load information.

In this operation example, the parameter includes the outrigger overhang width as the attitude condition. However, the parameter may not include the attitude condition. The parameter includes hook information and information on the number of wire hooks as component information. However, the parameter may not include the component information.

The parameter automatically acquired by the information acquisition unit 173 in step S601 is the parameter presented in column B of Table 11 below (parameter presented in 10-B of Table 2). Note that in step S601, when the operator specifies the movement route not passing through the prohibited zone as the priority condition, the parameter includes information on the prohibited zone. The information on the prohibited zone is acquired by the information acquisition unit 173 from the BIM application A in step S601.

[Table 11]

| | A (performance information request) | B (parameters) | C (performance information) |
|---|---|---|---|
| 10 | Movement route of hoisting load | Work machine ID (model, specification number, or serial number) | Movement route of hoisting load |
| | | Outrigger overhang width | |
| | | Hook information | |
| | | Number of wire hooks | |
| | | Lifting load | |
| | | Information on building image | |
| | | Start point of hoisting load | |
| | | End point of hoisting load | |
| | | Counterweight information | |

Information on the building image is stored in the BIM application A. Therefore, in step S601, the information acquisition unit 173 acquires information on the building image from the BIM application A. Note that the information on the building image acquired by the information acquisition unit 173 in step S601 may be information having been input from the information input unit 77 by the operator.

In step S601, the information acquisition unit 173 sends the acquired information to the request issuance unit 174.

In step S602, the request issuance unit 174 acquires, from the third storage unit 143, the server specifying information (e.g., the URI of the server) for specifying the server corresponding to the work machine image (i.e., the work machine image G22E of FIGS. 22A to 22C) specified by the acquired model information.

Then, the request issuance unit 174 generates a request including the acquired server specifying information, performance information request, and parameters, and sends it to the communication control unit 171. The request is transmitted via the communication unit 13 to the server (e.g., the server S1) specified by the server specifying information.

The processing of the server S1 having received a request from the client terminal T will be described below.

In step S603, the communication unit 21 receives the request. Then, the communication unit 21 sends the request to the request acquisition unit 221.

In step S604, the request acquisition unit 221 extracts the performance information request and parameter from the acquired request. Then, the request acquisition unit 221 sends the extracted information to the calculation unit 222.

In step S605, the calculation unit 222 acquires, from the storage unit 23, the calculation expression corresponding to the performance information request and model information acquired from the request acquisition unit 221. In this operation example, the calculation expression acquired by the calculation unit 222 is a calculation expression necessary for generating the movement route of the load.

In step S606, the calculation unit 222 acquires, from the storage unit 23, the specification data corresponding to the work machine specified by the acquired model information.

In step S607, the calculation unit 222 calculates the movement route of the load on the basis of the parameter acquired from the client terminal T and the calculation expression and specification data acquired from the storage unit 23.

In this operation example, the attitude condition of the work machine has not been decided. Therefore, in step S607, the calculation unit changes the attitude condition of the work machine in the range of the attitude condition that can be taken by the work machine specified by the model information, and calculates the movement route of the load. The calculation unit 222 calculates the movement route of the load in which the building image and the crane C and the load do not interfere with each other on the basis of information on the building image included in the parameter. Note that in a case where a priority condition is input from the operator in step S601, the calculation unit 222 generates a movement route on the basis of the condition specified by the priority condition.

The calculation unit 222 sends the information on the calculated movement route of the load to the response issuance unit 223.

In step S608, the response issuance unit 223 generates a response including information on the movement route of the load acquired from the calculation unit 222. Then, the response issuance unit 223 sends the generated response to the communication unit 21. The communication unit 21 transmits the acquired response to the client terminal T.

Next, the processing of the client terminal T having received the response from the server S1 will be described.

In step S609, the communication unit 13 receives a response from the server S1. Then, the communication unit 13 sends the received response to the second control unit 17. The response is sent to the display assistance control unit 175 via the communication control unit 171.

In step S610, the display assistance control unit 175 reflects the calculation result of the server S1 included in the response (in this operation example, information on the movement route of the load) on the display of the display unit 12.

FIGS. 22B and 22C present an example of the display mode of the display unit 12 on which an image of the movement route of the load is presented. An image R1 of the movement route of the load is an image of the movement route of the load displayed on the display unit 12 when the "movement route with the shortest movement distance" is specified as the priority condition by the operator. An image R2 of the movement route of the load is a movement route of the load displayed on the display unit 12 when the "movement route not passing through the prohibited zone" is specified as the priority condition by the operator.

Note that in the operation example 8 described above, the server S1 may transmit, to the client terminal T, a response including the attitude condition of the work machine corresponding to the calculated movement route of the load, together with the movement route of the load.

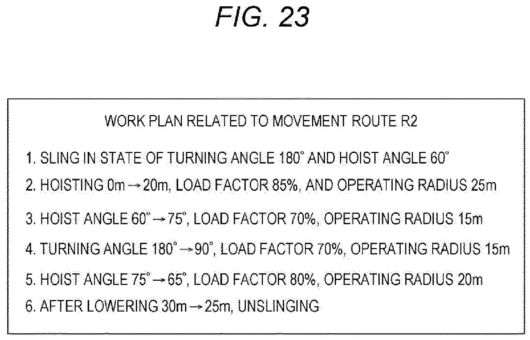

The server S1 may generate a work plan on the basis of the information on the calculated movement route of the load. In this case, the server S1 transmits a response including information on the generated work plan to the client terminal T. The work plan includes, for example, the turn angle, hoist angle, type of work (e.g., sling work and unsling work), hoist amount, load factor, and operating radius. FIG. 23 illustrates an example of the work plan.

Note that the work plan may be generated by the BIM application A. In this case, the server S1 transmits a response including information for generating the work plan to the BIM application A. The BIM application A generates a work plan as illustrated in FIG. 23 on the basis of information for generating the acquired work plan.

(Action/Effect of Operation Example 8)

According to this operation example as described above, if deciding at least the start point SP of the load, the end point FP of the load, the load, and the model of the work machine, the operator can acquire the movement route of the load satisfying the priority condition. Thus, according to this operation example, the operator can efficiently obtain the movement route of the load. Therefore, this operation example can significantly improve the work efficiency of the work plan.

(Operation Example 9)

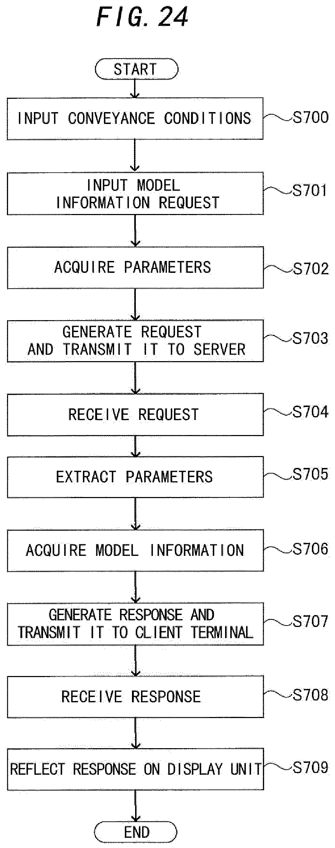

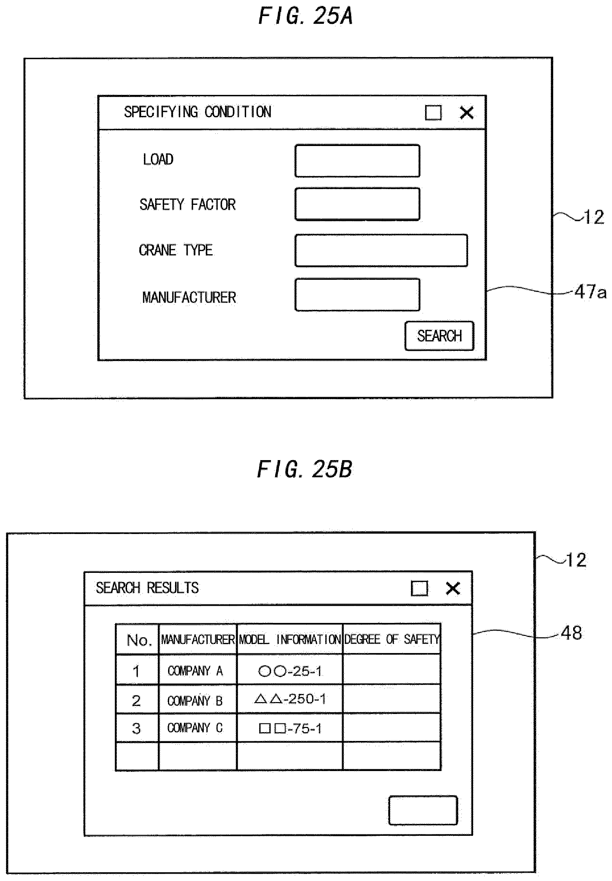

Next, an example of the operation performed by the operator and the operation of the BIM assistance system BS is described with reference to FIGS. 24 to 26. This operation example is an example of displaying a list 48 of model information (see FIG. 25B) on the display unit 12.

In the work plan of the crane, the operator must determine the conveyance conditions under which the crane is to convey the load, and then select the crane that has the capability to convey the load under these conveyance conditions. For example, in the work plan of the crane, the operator determines the conveyance conditions such as the arrangement point CP of the crane, the start point SP of the load, the end point FP of the load, the conveyance route of the load, and the weight of the load, and then selects the crane that has the capability to convey the load under these conveyance conditions.

Conventionally, the BIM operator selects a crane from a list of work machines stored in the BIM by referring to specification data or rated total load tables of cranes provided by the work machine manufacturer. However, selecting the most suitable crane for conveying the load is a difficult and time-consuming task. For this reason, an efficient method of selecting the most suitable crane for conveying the load has been desired in the work plan of the crane.

This operation example is performed in a situation in which the conveyance conditions, such as the arrangement point CP of the crane, the start point SP of the load, the end point FP of the load, the conveyance route of the load, and the weight of the load, have been determined and the crane has not yet been decided. FIG. 24 is a flowchart presenting the operation of the operator and the operation of the BIM assistance system BS in the case of displaying a list of model information of cranes which satisfy the conveyance conditions on the display unit 12. The operation of the operator and the operation of the BIM assistance system BS in this operation example will be described below.

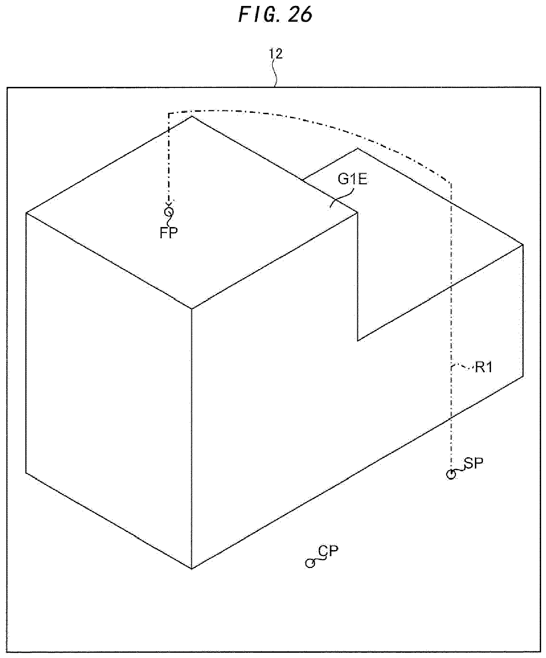

In step S700 of FIG. 24, only a building image G1E illustrated in FIG. 26 is displayed on the display unit 12. That is, in step S700, the work machine image is not displayed on the display unit 12. In other words, the work machine to be used is not determined in step S700. The building image G1E may be an image created by the operator by using the BIM application A or may be an image displayed by reading the information stored in the storage unit 14.

In step S700, the operator inputs the conveyance conditions under which the load is conveyed by the crane.

For example, the operator inputs the conveyance conditions such as the arrangement point CP of the crane, the start point SP of the load, the end point FP of the load, the conveyance route of the load, and the weight of the load. The arrangement point CP of the crane corresponds to an example of the arrangement position of the work machine. The start point SP of the load corresponds to an example of the position of the conveyance source of the load. The end point FP of the load corresponds to an example of the position of the conveyance destination of the load.

The operator inputs the arrangement point CP of the crane, the start point SP of the load, the end point FP of the load, and the conveyance route of the load, for example, via a mouse, stylus, or other input device.

The operator also inputs the weight of the load from the input screen 47a (see FIG. 25A) displayed on the display unit 12. The operator may also input the safety factor threshold from the input screen 47a. The operator may also input the conditions regarding the crane type from the input screen 47a. The conditions regarding the crane type correspond to an example of work machine type and model conditions, which may be, for example, a rough terrain crane or an all-terrain crane, etc.

The operator may also input the conditions regarding the work machine manufacturer from the input screen 47a. The conditions regarding the work machine manufacturer correspond to an example of model conditions.

In step S701, the operator performs an operation for displaying the list of the model information of the crane on the display unit 12. The operator inputs the display request (model information request) of the model information of the crane from the input screen (not illustrated) displayed on the display unit 12, for example.

If the input unit 11 receives the model information request in step S701, the information acquisition unit 173 acquires the parameters (conveyance conditions and/or model conditions) necessary for the model information request from the BIM control unit 161 in step S702.

In the present operation example, the parameters include the conveyance conditions such as information on the arrangement point CP of the crane, the start point SP of the load, the end point FP of the load, the conveyance route of the load, and the weight of the load. The conveyance conditions may include information on the safety factor threshold. The parameters may include model conditions (conditions regarding the crane type and/or conditions regarding the work machine manufacturer). Then, the information acquisition unit 173 sends the acquired information to the request issuance unit 174.

In step S703, the request issuance unit 174 acquires, from the third storage unit 143, server specifying information (e.g., URI of the server) for specifying the server.

Further, in step S700, the request issuance unit 174 acquires, from the third storage unit 143, the server specifying information (e.g., URI of the server) of all the servers if the conditions regarding the work machine manufacturer have not been input. On the other hand, in step S700, if the conditions regarding the work machine manufacturer have been input, the request issuance unit 174 acquires, from the third storage unit 143, the server specifying information of the servers corresponding to the inputted work machine manufacturer.

Then, the request issuance unit 174 generates a request including the acquired server specifying information, model information request, and parameters, and sends the generated request to the communication control unit 171. The request is transmitted via the communication unit 13 to the server (e.g., the server S1) specified by the server specifying information.

The processing of the server S1 having received a request from the client terminal T will be described below.

In step S704, the communication unit 21 receives the request. Then, the communication unit 21 sends the request to the request acquisition unit 221.

In step S705, the request acquisition unit 221 extracts the performance information request and parameter from the acquired request. Then, the request acquisition unit 221 sends the extracted information to the calculation unit 222.

In step S706, the calculation unit 222 acquires the model information of the work machine that has the capability to convey the load under the conveyance conditions included in the request with reference to the specification data of the work machine acquired from the storage unit 23. If model conditions (conditions regarding the work machine type) are included in the parameters, the calculation unit 222 acquires the model information of the work machine that corresponds to the model conditions. The calculation unit 222 acquires the model information of the work machine, for example, by the third calculation described above. Then, the calculation unit 222 sends the acquired model information to the response issuance unit 223.

In step S707, the response issuance unit 223 generates a response including the model information of the work machine acquired from the calculation unit 222. Then, the response issuance unit 223 sends the generated response to the communication unit 21. The communication unit 21 transmits the acquired response to the client terminal T.

Next, the processing of the client terminal T having received the response from the server S1 will be described.

In step S708, the communication unit 13 receives a response from the servers (the servers S1 to S4). Then, the communication unit 13 sends the received response to the second control unit 17. The response is sent to the display assistance control unit 175 via the communication control unit 171.

In step S709, the display assistance control unit 175 reflects the calculation result of the servers (S1 to S4)

included in the response (in this operation example, the model information of the work machine) on the display of the display unit 12. Specifically, the display assistance control unit 175 generates the list 48 of the model information of the work machine, as shown in FIG. 25B, and causes the display unit 12 to display the list 48.

The list 48 shows, from left to right, the information on the work machine manufacturer, the model information of the work machine, and the degree of safety. The degree of safety may be regarded as the measure of safety of the performance of the work machine with respect to the conveyance conditions. A work machine with a higher degree of safety means that the work machine has more margin of performance with respect to the conveyance conditions.

The operator (user) can find the work machine whose performance satisfies the conveyance conditions by looking at the list 48. The operator selects the desired work machine from the list 48. The operator can also arrange the model information in the order of increasing degree of safety, for example, by operating the list 48.

Here, if the request includes information on the image of the building, whether or not there is interference between the work machine and the building is determined in the server. In this case, the work machines included in the list 48 are work machines that have the capability to convey the load under the conveyance conditions without interfering with the surrounding building (the building image G1E in FIG. 24).

On the other hand, if the request does not include information on the building, the work machines included in the list 48 may include a work machine that interferes with the surrounding building (the building image G1E in FIG. 24) depending on the attitude of the work machine when conveying the load.

Therefore, in this operation example, in step S709 and subsequent steps (not illustrated), the assistance control unit 172 may select a work machine (model information), which has the capability to convey the load without interfering with the building (e.g., the building image G1E) displayed around the work machine (the arrangement point CP of the work machine) on the display unit 12 under the conveyance conditions inputted in step S700, from the work machines (model information) included in the response acquired from the server.

Therefore, the assistance control unit 172 determines, with respect to all the work machines (model information) included in the response acquired from the server, whether or not there is any interference between the work machine (the arrangement point CP of the work machine) and the building.

Specifically, the assistance control unit 172 selects one work machine from the work machines (model information) included in the response. Next, the assistance control unit 172 determines the attitude that the work machine can take when conveying the load from the start point SP of the load to the end point FP of the load.

The assistance control unit 172 then determines whether or not there is interference with the building with respect to all possible attitudes that the work machine can take during conveyance. By making this determination with respect to all the work machines included in the response, the assistance control unit 172 extracts from the work machines included in the response only those work machines that do not interfere with the building and causes the display unit 12 to display them.

In addition, the assistance control unit 172 (display assistance control unit 175) displays the work machine image selected by the operator from the list 48 at the arrangement point CP of the crane on the display unit 12.

(Addition of Operation Example 9)

In the aforementioned operation example 9, the case in which a conveyance route is determined as a conveyance condition is explained. It is preferable if the conveyance route is determined, as it allows a work machine to be selected in consideration of the conveyance route. However, the conveyance route does not have to be determined.

If the conveyance route is not determined, the conveyance conditions include the arrangement point CP of the crane, the start point SP of the load, the end point FP of the load, and the weight of the load. The client terminal T sends a request including these conveyance conditions to the server. In other words, the server acquires the model information of the work machine that can convey the load under the conveyance conditions included in the request, without considering the conveyance route. Then, the server sends the response including the acquired model information to the client terminal T. The operator may examine the movement route by causing the display unit 12 to display the work machine selected from the list of work machines and operating the displayed work machine.

(Action/Effect of Operation Example 9)

According to this operation example described above, the operator, by determining the conveyance conditions, can acquire the model information of the work machine that has the capability to convey the load under these conveyance conditions from the server. The operator then selects the desired work machine from the model information acquired from the server. Thus, this operation example allows the operator to efficiently select the most suitable crane for conveying the load.

(Operation Example 10)

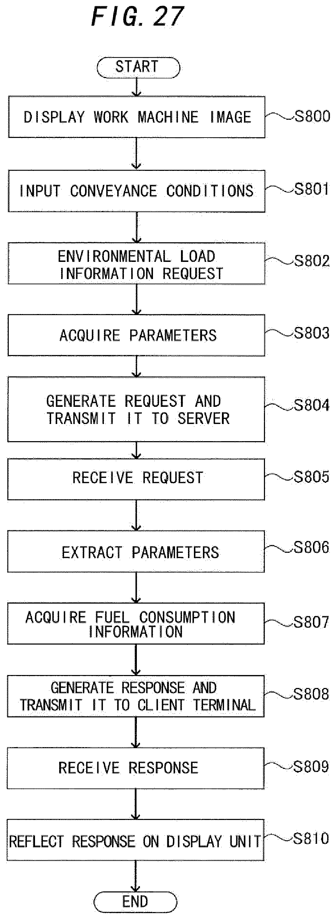

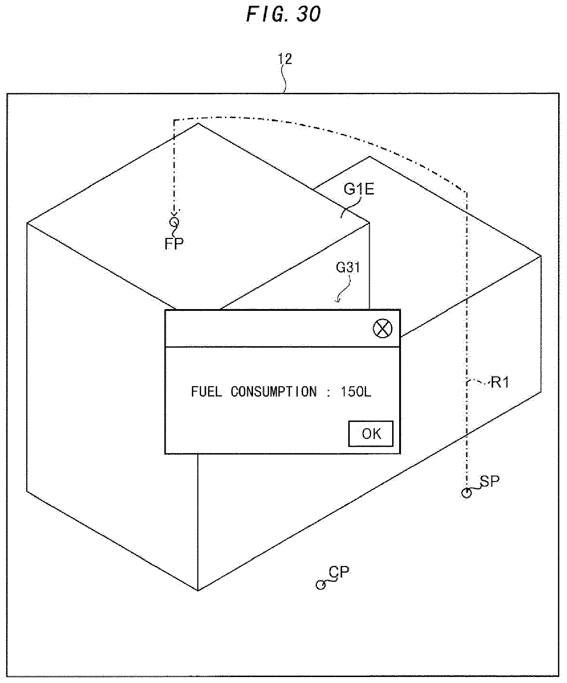

An example of the operation performed by the operator and the operation of the BIM assistance system BS is described with reference to FIGS. 27 to 30. This operation example is an example of displaying the image G31 (see FIG. 30) of the fuel consumption information of the work machine, which is the environmental load information, on the display unit 12.

In the work plan of the crane, the operator must determine the conveyance conditions under which the crane is to convey the load, and then select the crane that has the capability to convey the load under these conveyance conditions. For example, in the work plan of the crane, the operator determines the conveyance conditions such as the arrangement point CP of the crane, the start point SP of the load, the end point FP of the load, the conveyance route of the load, and the weight of the load, and then selects the crane that has the capability to convey the load under these conveyance conditions.

Conventionally, a BIM operator can get a rough idea of the fuel consumption of the crane from the crane specifications provided by the work machine manufacturer. However, the BIM operator cannot know the detailed fuel consumption of the crane in a conveyance work. For this reason, a method of knowing the detailed fuel consumption of the crane in a conveyance work has been desired in the work plan of the crane. Further, this operation example is not limited to cranes, and may be applied to various types of work machines.

This operation example is performed in a situation in which the conveyance conditions, such as the model information of the work machine, the arrangement point CP of the crane, the start point SP of the load, the end point FP of the load, the conveyance route of the load, and the weight of the load, have been determined. FIG. 27 is a flowchart presenting the operation of the operator and the operation of the BIM assistance system BS at the time when displaying the fuel consumption of the work machine in the case of conveying the load under the set conveyance conditions on the display unit 12. The operation of the operator and the operation of the BIM assistance system BS in this operation example will be described below.

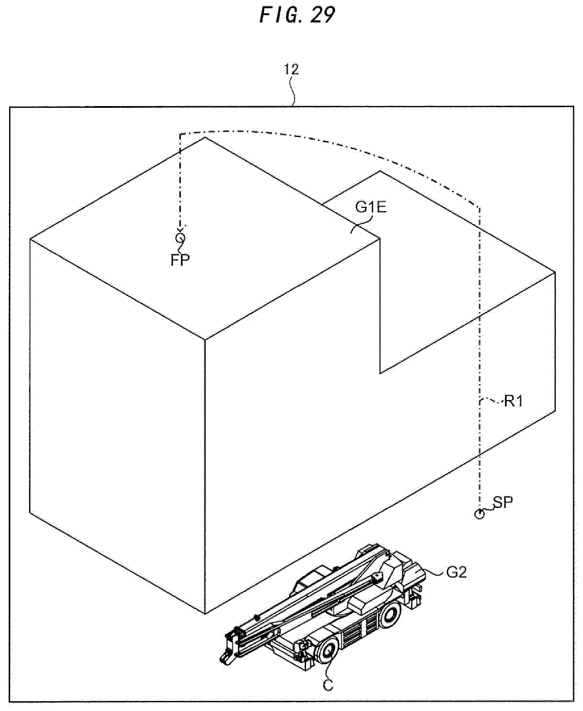

In step S800 of FIG. 27, only a building image G1E illustrated in FIG. 29 is displayed on the display unit 12. That is, in step S800, the work machine image is not displayed on the display unit 12. The building image G1E may be an image created by the operator by using the BIM application A or may be an image displayed by reading the information stored in the storage unit 14.

In step S800, in order to display a work machine image G2 of the basis attitude on the display unit 12, the operator inputs a display instruction of the work machine image from the input unit 11. The operation performed by the operator when displaying the work machine image G2 of the basic attitude on the display unit 12 is the same as that in the operation example 1 described above.

In step S801, the operator inputs the conveyance conditions such as the arrangement point CP of the crane, the start point SP of the load, the end point FP of the load, the conveyance route of the load, and the weight of the load. The arrangement point CP of the crane corresponds to an example of the arrangement position of the work machine. The start point SP of the load corresponds to an example of the position of the conveyance source of the load. The end point FP of the load corresponds to an example of the position of the conveyance destination of the load.

The operator inputs the arrangement point CP of the crane, the start point SP of the load, the end point FP of the load, and the conveyance route of the load, for example, via a mouse, stylus, or other input device.

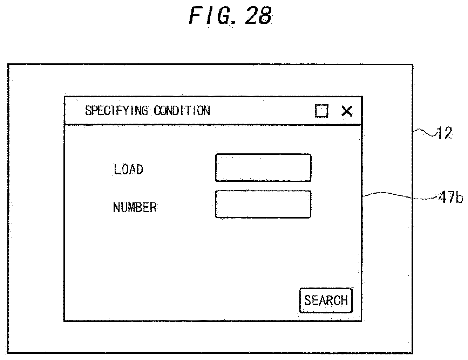

The operator also inputs the weight of the load from the input screen 47b (see FIG. 28) displayed on the display unit 12. The operator may also input information on the number of conveyance times from the input screen 47b. In this operation example, the information on the number of conveyance times is the number of loads. The information on the number of conveyance times may be the number of conveyance times.

In step S802, the operator performs an operation for displaying the fuel consumption information of the crane on the display unit 12. The operator inputs the display request (environmental load information request) of the fuel consumption information of the crane from the input screen (not illustrated) displayed on the display unit 12, for example.

If the input unit 11 receives the environmental load information request in step S802, the information acquisition unit 173 acquires the parameters (conveyance conditions) necessary for the environmental load information request from the BIM control unit 161 in step S803.

The parameters include the conveyance conditions such as model information of the crane, information on the arrangement point CP of the crane, the start point SP of the load, the end point FP of the load, the conveyance route of the load, and the weight of the load. The conveyance conditions may include information on the number of conveyance times. Then, the information acquisition unit 173 sends the acquired information to the request issuance unit 174.

In step S804, the request issuance unit 174 acquires, from the third storage unit 143, server specifying information (e.g., URI of the server) for specifying the server. The request issuance unit 174 acquires, from the third storage unit 143, server specifying information of the server of the work machine manufacturer corresponding to the model information of the crane.

Then, the request issuance unit 174 generates a request including the acquired server specifying information, environmental load information request, and parameters, and sends the generated request to the communication control unit 171. The request is transmitted via the communication unit 13 to the server (e.g., the server S1) specified by the server specifying information.

The processing of the server S1 having received a request from the client terminal T will be described below.

In step S805, the communication unit 21 receives the request. Then, the communication unit 21 sends the request to the request acquisition unit 221.

In step S806, the request acquisition unit 221 extracts the environmental load information request and parameter from the acquired request. Then, the request acquisition unit 221 sends the extracted information to the calculation unit 222.

In step S807, the calculation unit 222 acquires the fuel consumption information of the work machine in the case where the work machine conveys a load under the conveyance conditions included in the parameters. The method for the calculation unit 222 to acquire the fuel consumption information of the work machine is as already described. Then, the calculation unit 222 sends the acquired fuel consumption information of the work machine to the response issuance unit 223.

In addition, the calculation unit 222 may acquire, in step S807, information on the attitude that the work machine can take when conveying a load under the conveyance conditions included in the request.

In step S808, the response issuance unit 223 generates a response including the fuel consumption information of the work machine acquired from the calculation unit 222. Then, the response issuance unit 223 sends the generated response to the communication unit 21. The communication unit 21 transmits the acquired response to the client terminal T.

Note that in step S807, if the calculation unit 222 has acquired information on the attitude of the work machine, the response issuance unit 223 may generate a response that further includes the information on the attitude of the work machine that has been acquired by the calculation unit 222. Then, the response issuance unit 223 may transmit the generated response to the client terminal T via the communication unit 21.

Next, the processing of the client terminal T having received the response from the server S1 will be described.

In step S809, the communication unit 13 receives a response from the servers (the servers S1 to S4). Then, the communication unit 13 sends the received response to the second control unit 17. The response is sent to the display assistance control unit 175 via the communication control unit 171.

In step S810, the display assistance control unit 175 reflects the calculation result of the servers (S1 to S4) included in the response (in this operation example, the fuel consumption information of the work machine) on the display of the display unit 12. Specifically, the display assistance control unit 175 generates the image G31 of the fuel consumption information of the work machine as shown in FIG. 30, and causes the display unit 12 to display the image G31 (reflect the image G31 on the display of the display unit 12).

Also, although not illustrated, if the response includes information on the attitude of the work machine, the display assistance control unit 175 may display the information on the attitude of the work machine included in the response on the display unit 12. The operator can know the attitude that the work machine should take to convey the load from the information on the attitude of the work machine included in the response.

(Action/Effect of Operation Example 10)

According to this operation example described above, the operator can know the detailed fuel consumption of the work machine in a conveyance work. This allows the operator to plan the work in consideration of the timing of refueling. Also, if the response includes information on the attitude of the work machine, the operator does not need to determine the attitude of the work machine in the conveyance work, thereby improving work efficiency.

(Operation Example 11)

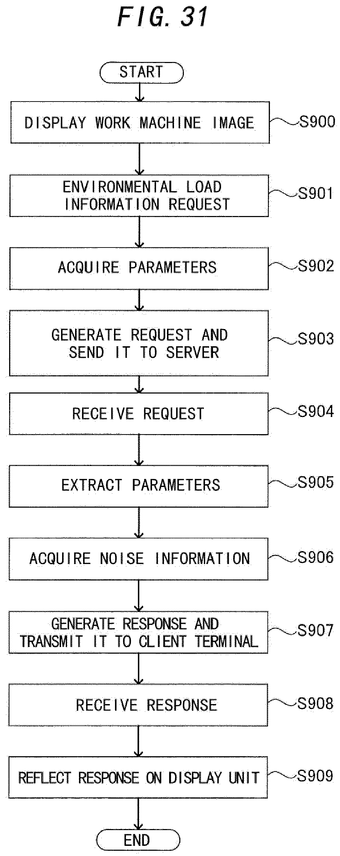

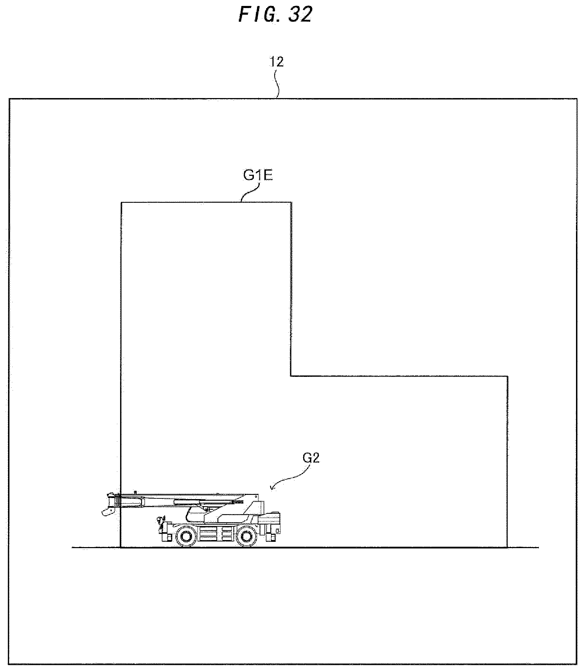

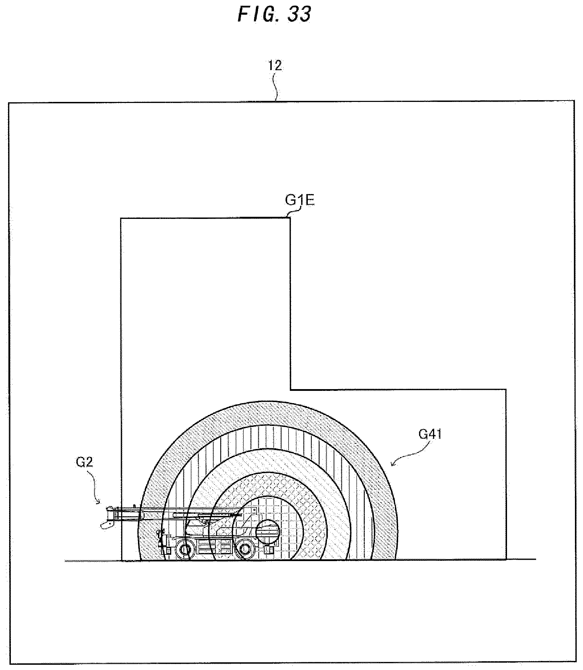

An example of the operation performed by the operator and the operation of the BIM assistance system BS is described with reference to FIGS. 31 to 33. This operation example is an example of displaying the noise distribution image G41 (see FIG. 33), which is the environmental load information, on the display unit 12. The noise distribution image G41 is, for example, a distribution of noise magnitude.

In the work plan of the crane, the operator must determine the conveyance conditions under which the crane is to convey the load, and then select the crane that has the capability to convey the load under these conveyance conditions. For example, in the work plan of the crane, the operator determines the conveyance conditions such as the arrangement point CP of the crane, the start point SP of the load, the end point FP of the load, the conveyance route of the load, and the weight of the load, and then selects the crane that has the capability to convey the load under these conveyance conditions.

Conventionally, the BIM operator cannot know the detailed noise information of the crane. For this reason, a method of knowing the noise information of the crane has been desired in the work plan of the crane. Further, this operation example is not limited to cranes, and may be applied to various types of work machines.

This operation example is performed in a state where at least the work machine is determined and the work machine is arranged at a predetermined position in the display unit 12. FIG. 31 is a flowchart presenting the operation of the operator and the operation of the BIM assistance system BS in the case of displaying the noise information of the selected work machine on the display unit 12. The operation of the operator and the operation of the BIM assistance system BS in this operation example will be described below.

In step S900 of FIG. 31, only a building image G1E illustrated in FIG. 31 is displayed on the display unit 12. That is, in step S900, the work machine image is not displayed on the display unit 12. The building image G1E may be an image created by the operator by using the BIM application A or may be an image displayed by reading the information stored in the storage unit 14.

In step S900, in order to display the work machine image G2 on the display unit 12, the operator inputs a display instruction of the work machine image from the input unit 11. Further, the operation performed by the operator when displaying the work machine image G2 on the display unit 12 is the same as that in the operation example 1 described above.

In step S901, the operator performs an operation for displaying the noise information of the crane on the display unit 12. The operator inputs the display request (environmental load information request) of the noise information of the crane from the input screen (not illustrated) displayed on the display unit 12, for example.

If the input unit 11 receives the environmental load information request in step S901, the information acquisition unit 173 acquires the parameters (model information of the crane) necessary for the environmental load information request from the BIM control unit 161 in step S902. Then, the information acquisition unit 173 sends the acquired information to the request issuance unit 174.

In step S903, the request issuance unit 174 acquires, from the third storage unit 143, server specifying information (e.g., URI of the server) for specifying the server. The request issuance unit 174 acquires, from the third storage unit 143, server specifying information of the server of the work machine manufacturer corresponding to the model information of the crane.

Then, the request issuance unit 174 generates a request including the acquired server specifying information, environmental load information request, and parameters, and sends the generated request to the communication control unit 171. The request is transmitted via the communication unit 13 to the server (e.g., the server S1) specified by the server specifying information.

The processing of the server S1 having received a request from the client terminal T will be described below.

In step S904, the communication unit 21 receives the request. Then, the communication unit 21 sends the request to the request acquisition unit 221.

In step S905, the request acquisition unit 221 extracts the environmental load information request and parameter from the acquired request. Then, the request acquisition unit 221 sends the extracted information to the calculation unit 222.

In step S906, the calculation unit 222 acquires the noise information of the work machine in the case where the work machine corresponding to the model information included in the parameters performs the conveyance. In step S906, the noise information acquired by the calculation unit 222 is the information on the position of the noise source and the information on the noise distribution in the work machine.

The method for the calculation unit 222 to acquire the noise information of the work machine is as already described. Then, the calculation unit 222 sends the acquired noise information of the work machine to the response issuance unit 223.

In step S907, the response issuance unit 223 generates a response including the noise information of the work machine acquired from the calculation unit 222. Then, the response issuance unit 223 sends the generated response to the communication unit 21. The communication unit 21 transmits the acquired response to the client terminal T.

Next, the processing of the client terminal T having received the response from the server S1 will be described.

In step S908, the communication unit 13 receives a response from the servers (the servers S1 to S4). Then, the communication unit 13 sends the received response to the second control unit 17. The response is sent to the display assistance control unit 175 via the communication control unit 171.

In step S909, the display assistance control unit 175 reflects the calculation result of the servers (S1 to S4) included in the response (in this operation example, the noise information of the work machine) on the display of the display unit 12. Specifically, the display assistance control unit 175 generates a noise distribution image G41 of the work machine, as shown in FIG. 33, based on the information on the noise distribution included in the response.

Then, the display assistance control unit 175 displays the generated noise distribution image G41 with respect to the position of the noise source in the work machine image G2 displayed on the display unit 12. In this operation example, the noise source is the muffler of the work machine. Thus, the information on the position of noise source included in the response is the coordinates of the muffler relative to a reference position in the work machine (e.g., the center of gravity of the work machine).

(Addition of Operation Example 11)

The noise source in the work machine is not limited to a single position. For example, when the work machine is a crane, the engine or muffler is the noise source. In other cases, when the work machine is a crane, the actuator or winch may be the noise source.

Thus, when there is a plurality of noise sources, the server may acquire information on the positions of the plurality of noise sources and information on the noise distribution corresponding to this plurality of noise sources. The client terminal T (BIM application A or assistance module M) may also synthesize information on the noise distribution corresponding to the plurality of noise sources acquired from the server. The client terminal T (BIM application A or assistance module M) may display the synthesized information on the noise distribution, for example, with respect to a reference position of the work machine (e.g., position of the center of gravity) on the display unit 12.

(Operation Example 12)

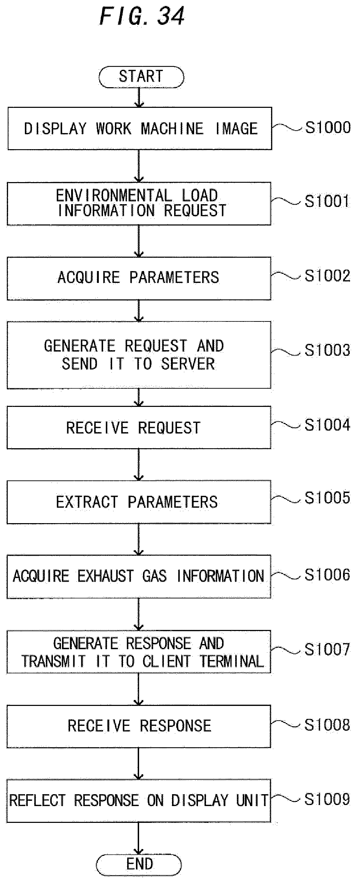

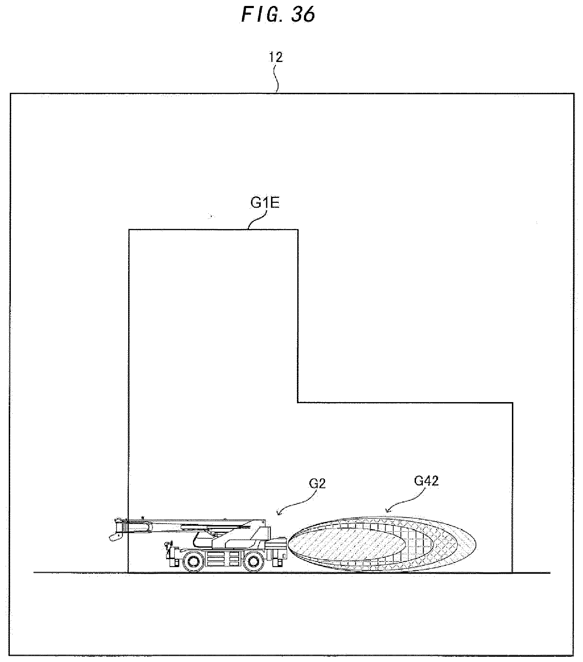

An example of the operation performed by the BIM operator (hereinafter referred to as "operator" in this operation example) and the operation of the BIM assistance system BS is described with reference to FIGS. 34 to 36. This operation example is an example of displaying the exhaust gas distribution image G42 (see FIG. 36), which is the environmental load information, on the display unit 12. The exhaust gas distribution image G42 is, for example, the distribution of the density of exhaust gas.

In the work plan of the crane, the operator must determine the conveyance conditions under which the crane is to convey the load, and then select the crane that has the capability to convey the load under these conveyance conditions. For example, in the work plan of the crane, the operator determines the conveyance conditions such as the arrangement point CP of the crane, the start point SP of the load, the end point FP of the load, the conveyance route of the load, and the weight of the load, and then selects the crane that has the capability to convey the load under these conveyance conditions.

Conventionally, the operator cannot know the detailed exhaust gas information of the crane. For this reason, a method of knowing the exhaust gas information of the crane has been desired in the work plan of the crane. Further, this operation example is not limited to cranes, and may be applied to various types of work machines.

This operation example is performed in a state where at least the work machine is determined and the work machine is arranged at a predetermined position in the display unit 12. FIG. 34 is a flowchart presenting the operation of the operator and the operation of the BIM assistance system BS in the case of displaying the exhaust gas information of the selected work machine on the display unit 12. The operation of the operator and the operation of the BIM assistance system BS in this operation example will be described below.

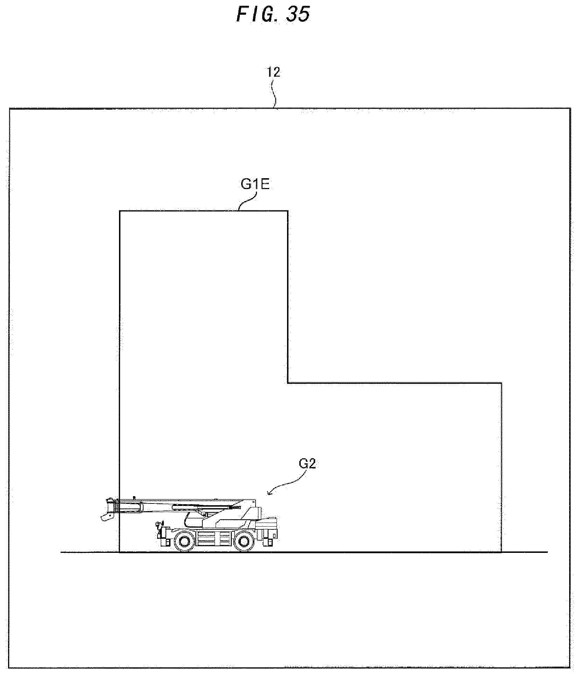

In step S1000 of FIG. 34, only a building image G1E illustrated in FIG. 35 is displayed on the display unit 12. That is, in step S1000, the work machine image is not displayed on the display unit 12. The building image G1E may be an image created by the operator by using the BIM application A or may be an image displayed by reading the information stored in the storage unit 14.

In step S1000, in order to display the work machine image G2 on the display unit 12, the operator inputs a display instruction of the work machine image from the input unit 11. Further, the operation performed by the operator when displaying the work machine image G2 on the display unit 12 is the same as that in the operation example 1 described above.

In step S1001, the operator performs an operation for displaying the exhaust gas information of the crane on the display unit 12. The operator inputs the display request (environmental load information request) of the exhaust gas information of the crane from the input screen (not illustrated) displayed on the display unit 12, for example.

If the input unit 11 receives the environmental load information request in step S1001, the information acquisition unit 173 acquires the parameters (model information of the crane) necessary for the environmental load information request from the BIM control unit 161 in step S1002. Then, the information acquisition unit 173 sends the acquired information to the request issuance unit 174.

In step S1003, the request issuance unit 174 acquires, from the third storage unit 143, server specifying information (e.g., URI of the server) for specifying the server. The request issuance unit 174 acquires, from the third storage unit 143, server specifying information of the server of the work machine manufacturer corresponding to the model information of the crane.

Then, the request issuance unit 174 generates a request including the acquired server specifying information, environmental load information request, and parameters, and sends the generated request to the communication control unit 171. The request is transmitted via the communication unit 13 to the server (e.g., the server S1) specified by the server specifying information.

The processing of the server S1 having received a request from the client terminal T will be described below.

In step S1004, the communication unit 21 receives the request. Then, the communication unit 21 sends the request to the request acquisition unit 221.

In step S1005, the request acquisition unit 221 extracts the environmental load information request and parameter from the acquired request. Then, the request acquisition unit 221 sends the extracted information to the calculation unit 222.

In step S1006, the calculation unit 222 acquires the exhaust gas information of the work machine in the case where the work machine corresponding to the model information included in the parameters performs the conveyance. In step S1006, the exhaust gas information acquired by the calculation unit 222 is the information on the position of the exhaust gas source and the information on the exhaust gas distribution in the work machine.

The method for the calculation unit 222 to acquire the exhaust gas information of the work machine is as already described. Then, the calculation unit 222 sends the acquired exhaust gas information of the work machine to the response issuance unit 223.

In step S1007, the response issuance unit 223 generates a response including the exhaust gas information of the work machine acquired from the calculation unit 222. Then, the response issuance unit 223 sends the generated response to the communication unit 21. The communication unit 21 transmits the acquired response to the client terminal T.

Next, the processing of the client terminal T having received the response from the server S1 will be described.

In step S1008, the communication unit 13 receives a response from the servers (the servers S1 to S4). Then, the communication unit 13 sends the received response to the second control unit 17. The response is sent to the display assistance control unit 175 via the communication control unit 171.

In step S1009, the display assistance control unit 175 reflects the calculation result of the servers (S1 to S4) included in the response (in this operation example, the exhaust gas information of the work machine) on the display of the display unit 12. Specifically, the display assistance control unit 175 generates an exhaust gas distribution image G42 of the work machine, as shown in FIG. 36, based on the information on the exhaust gas distribution included in the response. Then, the display assistance control unit 175 displays the generated exhaust gas distribution image G42 with respect to the position of the exhaust gas source in the work machine image G2 displayed on the display unit 12. In this operation example, the exhaust gas source is the muffler of the work machine. Thus, the information on the position of exhaust gas source included in the response is the coordinates of the muffler relative to a reference position in the work machine (e.g., the center of gravity of the work machine).

(Operation Example 13)

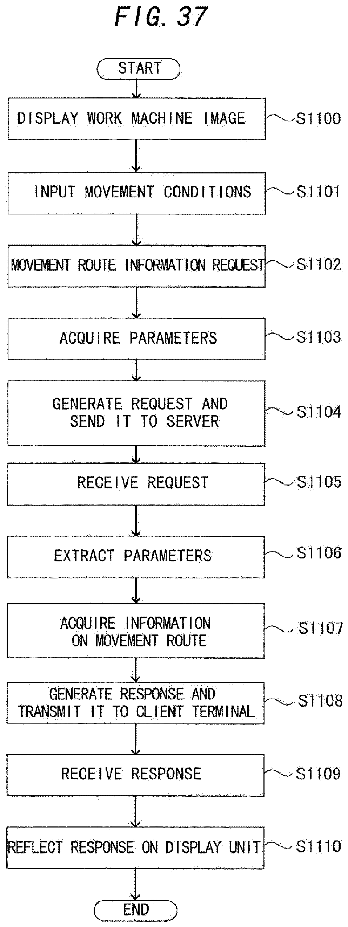

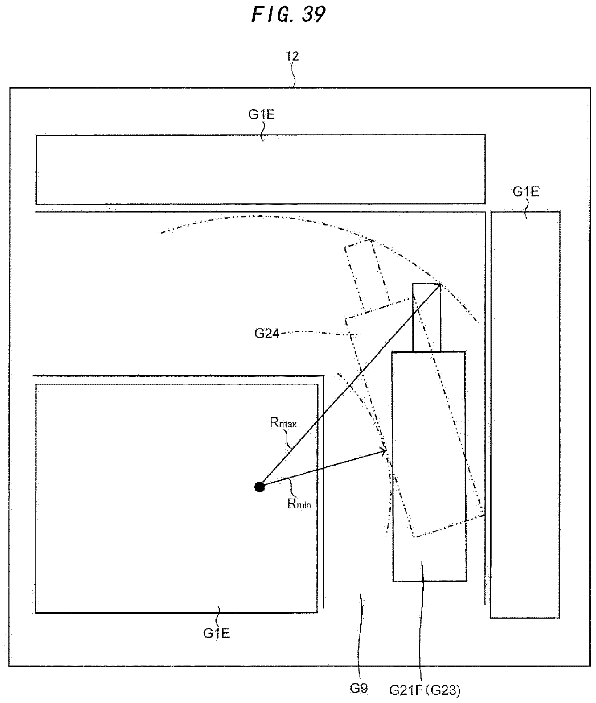

An example of the operation performed by the BIM operator (hereinafter referred to as "operator" in this operation example) and the operation of the BIM assistance system BS is described with reference to FIGS. 37 to 40. This operation example is an example of displaying the post-movement work machine image G24 (see FIG. 39), which is the movement information, on the display unit 12. The post-movement work machine image G24 corresponds to an example of information on the movement route of the work machine.

In the work plan of crane, the crane to be used is selected after determining the arrangement position of crane. The operator may select a crane by the method of the aforementioned operation example 9. The BIM operator then examines the delivery route for delivering the crane to the arrangement position.

Conventionally, the operator examines the crane delivery route by checking the work machine image and the passageway image displayed on the display unit 12 of the client terminal T. Therefore, the operator cannot examine the details regarding the crane delivery route. Therefore, a method that allows detailed examination of the crane delivery route is desired in the work plan of the crane. Further, this operation example is not limited to cranes, and may be applied to various types of work machines.

This operation example is performed in a state where at least the work machine has been determined. FIG. 37 is a flowchart presenting the operation of the operator and the operation of the BIM assistance system BS in the case of displaying the information on the movement route of the crane on the display unit 12. The operation of the operator and the operation of the BIM assistance system BS in this operation example will be described below.

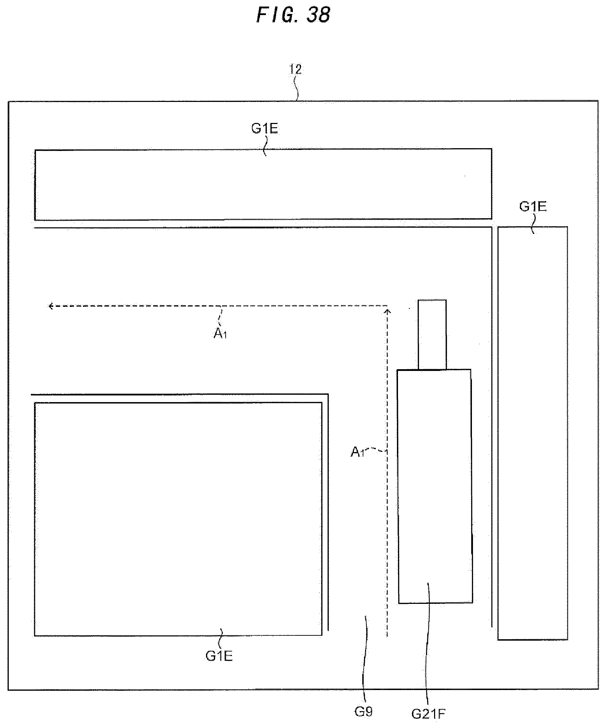

In step S1100 of FIG. 37, only a building image G1E and a passageway image G9 illustrated in FIG. 38 are displayed on the display unit 12. That is, in step S1100, the work machine image is not displayed on the display unit 12. The building image G1E and the passageway image G9 may be an image created by the operator by using the BIM application A or may be an image displayed by reading the information stored in the storage unit 14.

Here, the crane proceeds on the passageway image G9 along the arrow A i to the arrangement position of the crane (not illustrated) . The operator examines whether or not the work machine can pass through the passageway shown in the passageway image G9.

Thus, the operator displays the work machine image G21F at the entrance of the passageway image G9.

Specifically, in step S1100, in order to display the work machine image G21F on the display unit 12, the operator inputs a display instruction of the work machine image from the input unit 11. Further, the operation performed by the operator when displaying the work machine image G21F on the display unit 12 is the same as that in the operation example 1 described above.

In step S1101, the operator inputs movement conditions such as the movement distance of the crane, the movement direction of the crane, the steering angle of the steering wheel of the crane, and the steering mode of the crane. The movement distance of the crane corresponds to an example of information on the movement distance of the work machine. The movement direction of the crane corresponds to an example of information on the movement direction of the work machine. The steering angle of the steering wheel of the crane corresponds to an example of information on the steering amount of the steering wheel of the work machine. The steering mode of the crane corresponds to an example of information on the steering mode of the crane.

The operator inputs, e.g., from the input screen displayed on the display unit 12, movement conditions such as the movement distance of the crane, the movement direction of the crane, the steering angle of the steering wheel of the crane, and the steering mode of the crane.

(Input Example)

Here is an explanation of an input example of movement conditions. The input example of the movement distance of the crane is 1m. In addition, the unit of the movement distance of the crane is not particularly limited. The input example of the movement direction of the crane is forward or backward. The input example of the steering angle of the steering wheel of the crane is, for example, -180°.

Further, the steering angle of the steering wheel is, for example, + for the direction of clockwise rotation and - for the direction opposite to the direction of clockwise rotation. The input example of the steering mode of the crane is, for example, front wheel steering mode, rear wheel steering mode, four-wheel steering mode, or crab steering mode. In addition, the input example of movement conditions is not limited to the above cases, and may be in various input forms.

In step S1101, the operator performs an operation for displaying the movement information of the crane on the display unit 12. The operator inputs the display request (movement route information request) of the movement information of the crane from the input screen (not illustrated) displayed on the display unit 12, for example.

If the input unit 11 receives the movement route information request in step S1101, the information acquisition unit 173 acquires the parameters (model information and movement conditions) necessary for the movement route information request from the BIM control unit 161 in step S1102.

In this operation example, the parameters include the model information and the movement conditions. The movement conditions may include information on the safety factor threshold. The information acquisition unit 173 sends the acquired information to the request issuance unit 174.

In step S1102, the operator performs an operation for displaying the movement conditions of the crane on the display unit 12. The operator inputs the display request (movement route information request) of the movement information of the crane from the input screen (not illustrated) displayed on the display unit 12, for example.

If the input unit 11 receives the movement route information request in step S1102, the information acquisition unit 173 acquires the parameters (model information and movement conditions) necessary for the movement route information request from the BIM control unit 161 in step S1103.

In this operation example, the parameters include the model information of the crane, the movement distance of the crane, the movement direction of the crane, the steering angle of the steering wheel of the crane, and the steering mode of the crane.

In step S1104, the request issuance unit 174 acquires, from the third storage unit 143, server specifying information (e.g., URI of the server) for specifying the server. The request issuance unit 174 acquires, from the third storage unit 143, server specifying information of the server corresponding to the model information of the crane.

Then, the request issuance unit 174 generates a request including the acquired server specifying information, movement route information request, and parameters, and sends the generated request to the communication control unit 171. The request is transmitted via the communication unit 13 to the server (e.g., the server S1) specified by the server specifying information.

The processing of the server S1 having received a request from the client terminal T will be described below.

In step S1105, the communication unit 21 receives the request. Then, the communication unit 21 sends the request to the request acquisition unit 221.

In step S1106, the request acquisition unit 221 extracts the performance information request and parameter from the acquired request. Then, the request acquisition unit 221 sends the extracted information to the calculation unit 222.

In step S1107, the calculation unit 222 acquires the post-movement position of the work machine and the post-movement direction of the work machine in the case where the work machine moves under the movement conditions included in the request with reference to the specification data of the work machine acquired from the storage unit 23. The method for the calculation unit 222 to acquire the post-movement position of the work machine and the post-movement direction of the work machine is as already described.

In step S1107, the calculation unit 222 may acquire the minimum turning radius of the portion which has the smallest turning radius in the work machine. The calculation unit 222 may acquire the maximum turning radius of the portion which has the largest turning radius in the work machine. Such information on the minimum turning radius and information on the maximum turning radius are also included in the information on the movement route.

In step S1108, the response issuance unit 223 generates a response including the movement information of the work machine acquired from the calculation unit 222. Then, the response issuance unit 223 sends the generated response to the communication unit 21. The communication unit 21 transmits the acquired response to the client terminal T.

Next, the processing of the client terminal T having received the response from the server S1 will be described.

In step S1109, the communication unit 13 receives a response from the servers (the servers S1 to S4). Then, the communication unit 13 sends the received response to the second control unit 17. The response is sent to the display assistance control unit 175 via the communication control unit 171.

In step S1110, the display assistance control unit 175 reflects the calculation result of the servers (S1 to S4) included in the response (in this operation example, information on the movement route of the work machine) on the display of the display unit 12. Specifically, the display assistance control unit 175 generates the post-movement work machine image G24, which is generated based on the movement information of the work machine as shown in FIG. 39, and causes the display unit 12 to display the post-movement work machine image G24.

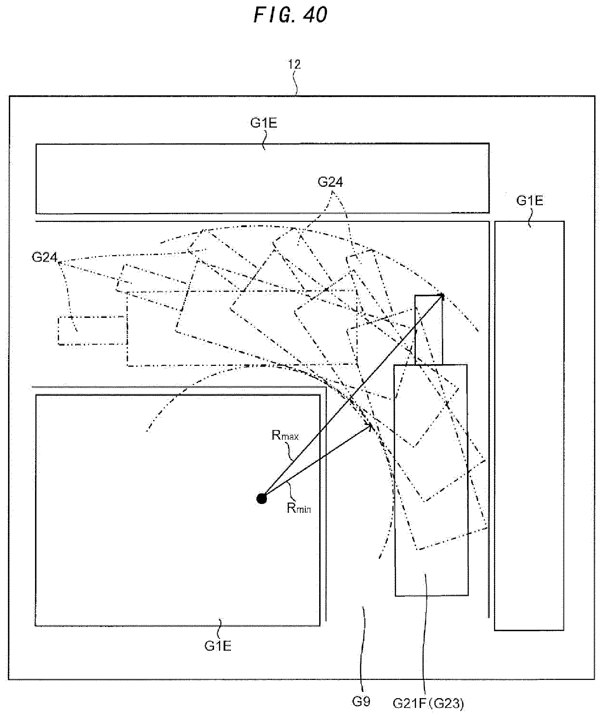

In this operation example, as shown in FIG. 39, the display assistance control unit 175 causes the display unit 12 to display the pre-movement work machine image G23 and the post-movement work machine image G24. The display assistance control unit 175 may cause the display unit 12 to display the post-movement work machine image G24 without displaying the pre-movement work machine image G23. By repeating the above operation, the display unit 12 displays the movement trajectory of the work machine as shown in FIG. 40.

The display assistance control unit 175 displays the minimum turning radius $R_{min}$ and maximum turning radius $R_{max}$ on the display unit 12 when the response includes information on the minimum turning radius and information on the maximum turning radius.

The operator can determine whether the work machine can pass through the passageway by checking the movement trajectory displayed on the display unit 12.

The BIM application A or the assistance module M (the assistance control unit 172) may determine whether the work machine interferes with the building displayed around the work machine on the display unit 12 when the work machine moves from the pre-movement position to the post-movement position, and notify the user of the result of this determination (hereinafter referred to as "interference notification").

The BIM application A or the assistance module M (the assistance control unit 172) may determine the interference between the work machine and the building according to the overlap of the work machine image (the post-movement work machine image G24) and the building image G1E displayed on the display unit 12. The operator can easily determine whether or not the work machine can pass through the passageway by checking the interference notification.

In the case of a work machine with a basic attitude (work machine with the boom fully down), if there is interference between the work machine and the building, the operator would change the attitude of the work machine by inputting the attitude conditions of the work machine from the input unit 11. Then, the aforementioned operation example 13 is performed. For example, if the tip end portion of the boom interferes with a building, the operator would raise the boom of the crane and then perform the operation example 13.

Then, the assistance module M (the assistance control unit 172) may determine whether the work machine interferes with the building displayed around the work machine on the display unit 12 when the work machine, which has changed the attitude, moves from the pre-movement position to the post-movement position, and notify the user of the result of this determination.

(Addition of Operation Example 13)

The aforementioned operation example 13 is a method of specifying the movement distance and the steering angle of the steering wheel of the crane for each movement. Therefore, in order to display the movement trajectory of the work machine shown in FIG. 40 on the display unit 12, the client terminal needs to send a plurality of requests to the server.

As a variation of this operation example 13, a method of specifying the movement distance and the steering angle of the steering wheel of the crane for a plurality of movements in one request may be adopted.

In this variation, the operator specifies the movement distance of the crane in one of the plurality of movements and the increasing amount of steering angle of the steering wheel. Specifically, the operator specifies that the crane advances by 1 meter in each movement and the steering angle of the steering wheel is increased by 15° for each meter of advancement. Then, the client terminal sends a request including such movement conditions to the server. The server acquires information on the movement route which satisfies the movement conditions and sends a response including the acquired information on the movement route to the server. In such a variation, the movement trajectory of the work machine as shown in FIG. 40 can be displayed by sending only one request.

(Action/Effect of Operation Example 13)

This operation example with the above configuration enables detailed and easy examination of the delivery route of the crane to be used.

[Action/Effect of Present Embodiment]

As described above, the BIM assistance system BS according to the present embodiment can present detailed information on the work machine to the operator. The operator having received the presentation of such detailed information can make a detailed construction plan in consideration of the work machine.

[Reference Example]

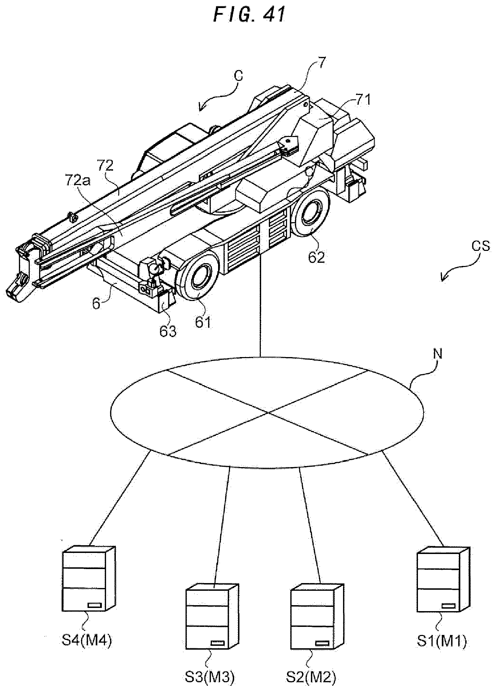

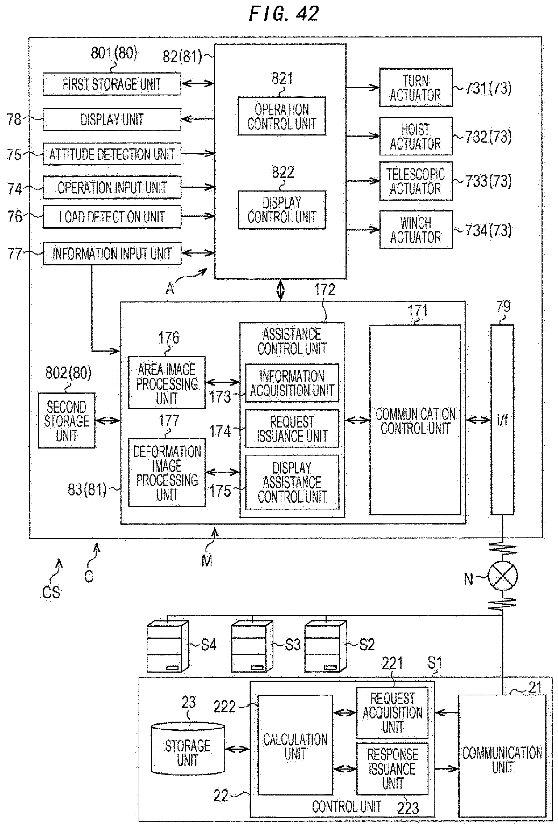

A crane assistance system CS of the reference example according to the present invention will be described with reference to FIGS. 41 to 43. FIG. 41 is a view illustrating the configuration of the crane assistance system CS. FIG. 42 is a block diagram illustrating the configuration of the crane assistance system CS. Note that the present reference example adopts the crane C as an example of the work machine. However, the work machine is not limited to a crane, and may be various work machines. Specifically, the work machine includes a crane, bulldozer, hydraulic excavator, concrete pump vehicle, aerial work vehicle, dump truck, trailer, and a lifter.

<Outline of Crane Assistance System>

The system configuration of the crane assistance system CS according to the present reference example will be described below with reference to FIGS. 41 and 42. The crane assistance system CS corresponds to an example of a performance information calculation system.
The crane assistance system CS includes the crane C and the plurality of servers S1 to S4 (also referred to as "performance information calculation server") as the hardware configuration. Note that the crane assistance system CS of the present reference example is a system in which the crane C and the servers S1 to S4 are connected via the network N. The number of cranes and servers in the crane assistance system CS is not limited to the illustrated case.

<Crane>

The configuration of the crane C will be described below. The crane C is a mobile crane (e.g., rough terrain crane). However, the crane C is not limited to a mobile crane, and may be various cranes.
As a basic configuration, the crane C includes a configuration that a general rough terrain crane has. As a rough concept, the crane C includes a travel body 6 and a turn body 7.
Specifically, the travel body 6 includes a pair of right and left front tires 61 and rear tires 62. The travel body 6 includes an outrigger 63 that is grounded to stabilize when performing a conveyance work of a load.
Specifically, the turn body 7 includes a turn table 71, a boom 72, and a jib 72a. The turn table 71 is supported by the travel body 6 in a turnable state. The boom 72 is an expandable and contractable telescopic boom. The boom 72 is supported by the turn table 71 in a hoistable state. Such the boom 72 turns when the turn table 71 rotates about the turn shaft. The jib 72a is supported at the tip of the boom 72 in a used state. The jib 72a is stored on the side of the boom 72 in an unused state (state of the crane C in FIG. 41).
A wire rope (not illustrated) is hung over the boom 72. The turn table 71 is provided with a winch (not illustrated) wound with the wire rope. The wire rope is suspended from the tip of the boom 72 or the jib 72a via a sheave (not illustrated). A hook (not illustrated) is fixed to the tip of the wire rope.
The turn table 71, the boom 72, the jib 72a, the wire rope, and the hook correspond to an example of operated function portions and are driven by an actuator.
The crane C includes, as actuators that drive the operated function portion, a turn actuator 731, a hoist actuator 732, a telescopic actuator 733, and a winch actuator 734 (see FIG. 42). Hereinafter, the turn actuator 731, the hoist actuator 732, the telescopic actuator 733, and the winch actuator 734 will be collectively referred to as "actuator 73".

The turn actuator 731 is, for example, a hydraulic motor, and rotates the turn table 71 about the turn shaft. When the turn table 71 rotates, the boom 72 rotates together with the turn table 71. Therefore, the turn actuator 731 may be regarded as an actuator for turning the boom 72.

The hoist actuator 732 is, for example, a hydraulic telescopic cylinder, and raises or lowers the boom 72 in accordance with expansion and contraction of the hoist actuator 732. Therefore, the hoist actuator 732 may be regarded as an actuator for raising or lowering the boom 72.

The telescopic actuator 733 is, for example, a hydraulic telescopic cylinder, and extends or reduces the boom 72 in accordance with expansion and contraction of the telescopic actuator 733. Therefore, the telescopic actuator 733 may be regarded as an actuator for extending or reducing the boom 72.

The winch actuator 734 is, for example, a hydraulic motor, and rotates the winch in a first direction (also referred to as "feed direction") or a second direction (also referred to as "wind direction"). When the winch rotates, the wire rope is fed or wound with the rotation of the winch. The hook rises or falls in accordance with feeding or winding of the wire rope. Therefore, the winch actuator 734 may be regarded as an actuator for raising or falling the hook.

The crane C includes an operation input unit 74, an attitude detection unit 75, a load detection unit 76, the information input unit 77, a display unit 78, a communication unit 79, a storage unit 80, a control unit 81, and the like.

The operation input unit 74 is, for example, an operation lever provided in the operator cab, and receives an operation input from an operator of the crane C (hereinafter simply referred to as "operator" in the description of the present reference example). When receiving an operation input from the operator, the operation input unit 74 outputs an operation signal corresponding to the received operation input to the control unit 81 (specifically, an operation control unit 821 of a first control unit 82). Note that the operation input unit 74 may be provided at an operation terminal connected with the crane C wirelessly or by wire.

The attitude detection unit 75 detects information on the attitude of the crane C. The attitude detection unit 75 sends information on the detected attitude to the control unit 81 (first control unit 82). The information on the attitude is, for example, the hoist angle of the boom, the length of the boom, the turn angle of the boom, the hoist angle of the jib, the length of the jib, the overhang width of the outrigger, and the position of the hook.

The attitude detection unit 75 detects information on the attitude at a predetermined time interval. The attitude detection unit 75 sends the information on the detected attitude to the control unit 81 (first control unit 82) at a predetermined time interval.

The load detection unit 76 detects information on the load. The load detection unit 76 detects information on the load at a predetermined time interval. The load detection unit 76 sends the information on the detected load to the control unit 81 (first control unit 82) at a predetermined time interval.

The information input unit 77 receives input of information from the operator. The information input unit 77 sends the information on the received input to the control unit 81 (first control unit 82 or second control unit 83). An example of the information received by the information input unit 77 will be described below.

The information input unit 77 receives input of a performance information request from the operator. The performance information request includes information specifying performance information of the work machine acquired from the servers S1 to S4 by the crane C. Note that in the present reference example, the performance information of the work machine specified by the performance information request means the performance information of the crane C.

The display unit 78 displays information. The display unit 78 is, for example, a monitor provided in the operator cab.

The communication unit 79 communicates with the servers S1 to S4 via the network N. For this purpose, the communication unit 79 includes a transmission unit and a reception unit (not illustrated) of information. Communication with the servers S1 to S4 is controlled by the communication control unit 171, for example.

The communication unit 79 transmits a request described later toward the servers S1 to S4, and receives a response to this request from the servers S1 to S4.

The storage unit 80 includes a first storage unit 801 and a second storage unit 802. The first storage unit 801 stores model information of the work machine (crane C). The second storage unit 802 stores information specifying the server to send a request. The information specifying the server is also referred to as "server specifying information". The second storage unit 802 stores server specifying information in association with the model of the work machine (e.g., crane).

Specifically, the second storage unit 802 stores an address table in which the model information of a plurality of work machines and the server (server specifying information) corresponding to each model information are associated. Note that the first storage unit 801 and the second storage unit 802 are configured by one piece of hardware (main storage device). However, the first storage unit 801 and the second storage unit 802 may be configured by a plurality of pieces of hardware.

The control unit 81 controls the operation of each of the elements 74 to 80 described above to control the overall operation of the crane C. In terms of the function of the crane assistance system CS, the control unit 81 includes the first control unit 82 and the second control unit 83. The basic configuration of the second control unit 83 is the same as that of the second control unit 17 of the first embodiment described above.

The first control unit 82 corresponds to an example of an operation control unit, and includes the operation control unit 821, a display control unit 822, and the like. The first control unit 82 also corresponds to an example of a control unit of an overload prevention device. That is, the first control unit 82 has a function of implementing the function of the overload prevention device.

The operation control unit 821 controls the operation of the actuator 73 on the basis of the operation signal having been output from the operation input unit 74.

The operation control unit 821 controls the operation of the actuator 73 on the basis of the performance information of the work machine acquired from the assistance module M. For example, when having acquired the rated total load corresponding to the attitude condition of the work machine as the performance information of the work machine from the assistance operation module M, the operation control unit 821 controls the operation of the actuator 73 on the basis of the acquired rated total load.

The display control unit 822 controls the operation of the display unit 78. The display control unit 822 controls the operation of the display unit 78 on the basis of the performance information of the work machine acquired from the assistance module M. For example, when having acquired an area image (see area image G4 of FIG. 10C and area image G4A of FIG. 16E) as performance information of the work machine from the assistance operation module M, the display control unit 822 may display an image of the work machine, an image of the surrounding of the work machine, and an area image on the display unit 78.

The second control unit 83 includes a communication control unit 171, an assistance control unit 172, an area image processing unit 176, a deformation image processing unit 177, and the like. The second control unit 83 implements the function of the assistance module M. The basic configuration of the second control unit 83 is substantially the same as that of the second control unit 17 of the first embodiment described above, and hence a duplicate description will be omitted. Regarding the configuration of the assistance module M, the description of the assistance module M in the first embodiment may be appropriately incorporated. In FIG. 42, of the elements constituting the assistance module M of the present reference example, the elements common to the assistance module M of the first embodiment are given the identical reference signs as the elements of the assistance module M of the first embodiment. Note that of the configuration of the second control unit 83, a configuration different from that of the second control unit 17 of the first embodiment will be described in an operation example described later.

In the present reference example, the assistance module M operates in cooperation with the first control unit 82 of the crane C. The assistance module M is incorporated (as an add-in) in the first control unit 82. Note that the assistance module M may be incorporated in hardware (e.g., controller, tablet, or personal computer) different from the first control unit 82 as long as the hardware operates in cooperation with the first control unit 82. Such the assistance module M acquires performance information of the work machine from the servers S1 to S4 by using a request-response type communication protocol (e.g., HTTPS protocol and MQTTS protocol).

The performance information of the work machine is similar to that of the above-described first embodiment, and includes, for example, the rated total load, moment load factor, maximum lowering angle of the boom, operating radius, deformation image information of the boom, deformation image information of the jib, work area image information of the work machine, outrigger jack reaction force value, attitude information of the work machine, information on whether or not the work is possible in consideration of the ground strength, and information on the movement route of the load (see column C of Table 2 below). The performance information includes a determination result of whether or not the work machine can perform a desired work. When the work machine is a crane, the performance information includes information on the movement route of the load.

The assistance module M acquires the attitude condition of the crane C from the first control unit 82. The assistance module M transmits a request including an attitude condition, a performance information request for specifying performance information of the work machine, and model information of the work machine to the specified server from the servers S1 to S4.

In this case, the assistance module M may specify a server to which a request is transmitted by including server specifying information specifying a server corresponding to the work machine in the request. The server specifying information is the URI of the server, for example.

The assistance module M receives, from the server, a response including performance information specified by the performance information request. Then, the assistance module M sends the received performance information to the first control unit 82.

<Operation Example of Crane Assistance System>

An operation example of the crane assistance system CS will be described below. Note that the basic operation of the crane assistance system CS is substantially the same as that of the operation examples 1 to 8 of the BIM assistance system BS of the first embodiment. An example of a typical operation of the crane assistance system CS will be described below.

(Operation Example 1)

This operation example corresponds to the operation example 1 of the BIM assistance system BS according to the first embodiment. The processing of this operation example is performed between the crane C and the servers S1 to S4. From this point of view, this operation example is different from the operation example 1 of the first embodiment related to the processing performed between the BIM application A (see FIG. 2) and the servers S1 to S4. That is, in the operation example 1 of the first embodiment, the assistance module M operates in cooperation with the operation control unit of the BIM application A. On the other hand, in this operation example, the assistance module M operates in cooperation with the operation control unit of the crane C. From this point of view, this operation example is different from the operation example 1 of the first embodiment. However, the basic operation of the assistance module M of this operation example is substantially the same as the operation of the assistance module M of the operation example 1 of the first embodiment. Although not described in detail, the description of the operation examples 2 to 8 of the first embodiment may be appropriately incorporated as the description of the operation example of the crane assistance system CS of the present reference example.

This operation example is carried out when acquiring, from the server, the rated total load for use in the calculation performed by the overload prevention device of the crane C, for example. At the time of work on the crane C, the overload prevention device of the crane C acquires the rated total load in accordance with the attitude of the crane C, and performs processing of determining the safety of the work on the basis of the acquired rated total load and the load.

Conventionally, the crane C has acquired the rated total load corresponding to the attitude of the crane C on the basis of the rated total load table stored in the storage unit. When the rated total load corresponding to the attitude of the crane C is not included in the rated total load table, the crane C calculated the rated total load by performing interpolation calculation. Since such calculation for calculating the rated total load is constantly performed, a high-performance calculator is mounted on the crane C. The high-performance calculator is expensive, which has been a factor of increase of the manufacturing cost of the crane C.

The rated total load table and the interpolation calculation expression for interpolation calculation are sometimes updated, and the maintenance worker has had to update the rated total load table and the interpolation calculation expression for each work machine. In conveyance work of the load, a work so-called double hoisting, which is to convey one load by a plurality of cranes in cooperation, is sometimes performed. When work machines having different rated total load tables and interpolation calculation expressions perform double hoist, there is a possibility that the calculation result by the overload prevention device is different for each work machine, and the work efficiency is reduced.

According to this operation example, since the rated total load is acquired from the server, the crane C does not need to include the rated total load table and interpolation calculation expression. Therefore, update of the rated total load table and interpolation calculation expression is unnecessary. The plurality of cranes C each acquire, from the server, the rated total load calculated on the basis of the common rated total load table and interpolation calculation expression. Therefore, the calculation result by the overload prevention device is not different for each work machine.

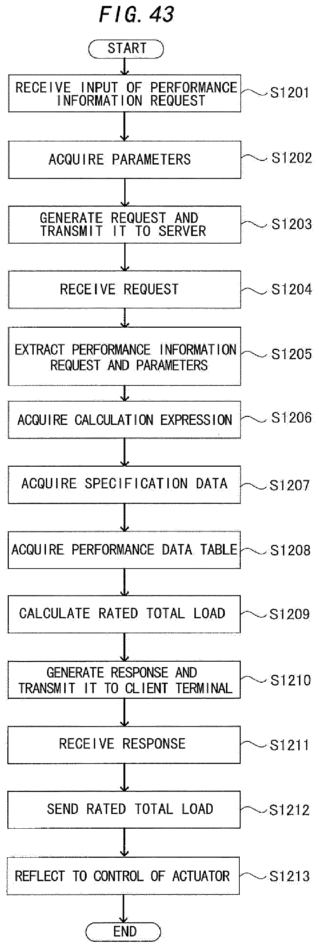

FIG. 43 is a flowchart presenting the operation of the crane assistance system CS in the case of displaying the rated total load on the display unit 78 and/or in the case of controlling the operation of the crane C on the basis of the rated total load acquired from the server.

In step S1201 of FIG. 43, the operator inputs a performance information request specifying the rated total load (performance information) from the information input unit 77. In other words, the information input unit 77 receives input of a performance information request specifying the rated total load (performance information) from the operator. The information input unit 77 sends information on the performance information request having been input from the operator to the control unit 81. Then, the crane C becomes in a state of transmitting a request for requesting the rated total load to the server S1 at a predetermined time interval.

In step S1202, when having acquired the performance information request from the information input unit 77, the information acquisition unit 173 acquires, from the first control unit 82, a parameter corresponding to the acquired performance information request. In step S1202, the information acquisition unit 173 is only required to acquire, from the first control unit 82, at least a parameter necessary for the calculation of the performance information specified by the performance information request.

When acquired the performance information request from the information input unit 77, the information acquisition unit 173 continues to acquire the parameter from the first control unit 82 (specifically, operation control unit 821) at a predetermined time interval. In this case, acquisition of the parameter is continued until the signal indicating that the request for the performance information ends (hereinafter simply referred to as "end signal") is acquired from the information input unit 77.

In other words, when having acquired, from the information input unit 77, a signal indicating that the request for the performance information starts (hereinafter simply referred to as "start signal"), the information acquisition unit 173 intermittently continues acquisition of the parameter until the end signal is acquired from the information input unit 77. Therefore, the control processing of steps S1202 to S1213 in this operation example is repeated until the end signal is acquired from the information input unit 77.

For example, if the time interval at which the attitude detection unit 75 detects information on the attitude of the crane C is 10 msec, the time interval at which the information acquisition unit 173 detects the parameter may be equal to or greater than 10 msec, preferably 50 msec to 100 msec.

The parameter automatically acquired by the information acquisition unit 173 in step S1202 is the parameter presented in column B of Table 12 below.

[Table 12]

| | A (performance information request) | B (parameters) | C (performance information) |
|---|---|---|---|
| 1 | Display request for rated total load | Work machine ID (model, specification number, or serial number) | Rated total load |
| | | Work state (on-tire work and outrigger work) | |
| | | Outrigger overhang width | |
| | | Boom information (type, hoist angle, length, and turn angle) | |
| | | Jib information (type, hoist angle, and jib length) | |
| | | Hook information | |
| | | Number of wire hooks | |
| | | Counterweight information | |

The parameter acquired by the information acquisition unit 173 in step S1202 is data stored in the first storage unit 801 and data detected by the attitude detection unit 75. In any case, the parameter acquired by the information acquisition unit 173 in step S1202 is the data stored in the crane C and the data acquired by the crane C.

In step S1203, the request issuance unit 174 acquires, from the second storage unit 802, server specifying information (e.g., URI of the server) for specifying the server corresponding to the model information of the crane C.

Then, the request issuance unit 174 generates a request including the acquired server specifying information, performance information request, and parameters, and sends it to the communication control unit 171. The request is transmitted via the communication unit 13 to the server (e.g., the server S1) specified by the server specifying information.

Note that the request generated in step S1203 is in the form of request message of HTTPS protocol. Such request includes the URI, performance information request, and parameter.

The processing of the server S1 having received the request from the crane C will be described below. The operation of the server S1 is the similar to that of the server S1 in the first operation example of the first embodiment described above.

In step S1204, the communication unit 21 receives the request. Then, the communication unit 21 sends the request to the request acquisition unit 221.

In step S1205, the request acquisition unit 221 extracts the performance information request and parameter from the acquired request. Then, the request acquisition unit 221 sends the extracted information to the calculation unit 222.

In step S1206, the calculation unit 222 acquires, from the storage unit 23, the calculation expression corresponding to the performance information request and model information acquired from the request acquisition unit 221. In step S1206, the calculation expression acquired by the calculation unit 222 is an interpolation calculation expression for performing the above-described interpolation calculation.

In step S1207, the calculation unit 222 acquires, from the storage unit 23, the specification data corresponding to the work machine specified by the acquired model information.

In step S1208, the calculation unit 222 acquires, from the storage unit 23, the performance data table corresponding to the attitude condition and/or work state information acquired from the request acquisition unit 221. At this time, the calculation unit 222 may acquire, from the storage unit 23, a plurality of performance data tables corresponding to the acquired attitude condition and/or work state information.

Note that in step S1208, the calculation unit 222 may acquire, from the storage unit 23, the performance data table on the basis of the specification data acquired in step S1207 together with the attitude condition and/or work state information.

In step S1209, the calculation unit 222 calculates the rated total load on the basis of the parameter acquired from the crane C, the calculation expression (interpolation calculation expression), the performance data table, and the specification data, which are acquired from the storage unit 23.

In step S1209, when the calculation unit 222 can directly acquire, from the performance data table, the rated total load corresponding to the parameter included in the request, the calculation expression (interpolation calculation expression) may not be used in step S1209. However, if the rated total load corresponding to the parameter included in the request cannot be directly obtained from the performance data table, the calculation unit 222 acquires the rated total load by performing the above-described interpolation calculation using the calculation expression (interpolation calculation expression). Then, the calculation unit 222 sends the calculation result to the response issuance unit 223. Note that the interpolation calculation is a calculation for interpolating values between adjacent data in the performance data table.

In step S1210, the response issuance unit 223 generates a response on the basis of the calculation result acquired from the calculation unit 222. Then, the response issuance unit 223 transmits the generated response to the crane C via the communication unit 21.

The above is the processing of the server S1 having received the request from the crane C. Next, the processing of the crane C (assistance module M) having received the response from the server S1 will be described.

In step S1211, the communication unit 13 receives a response from the server S1. Then, the communication unit 13 sends the received response to the second control unit 83. The response is sent to the assistance control unit 172 via the communication control unit 171.

In step S1212, the assistance control unit 172 analyzes the response acquired from the communication control unit 171, and sends the calculation result (in this operation example, rated total load) of the server S1 included in the response to the first control unit 82.

In step S1213, the first control unit 82 (specifically, operation control unit 821) reflects the acquired rated total load to the control of the actuator 73. For example, the first control unit 82 calculates a load factor corresponding to the attitude of the crane C on the basis of the rated total load acquired from the server S1, and limits the operation of the crane C to the dangerous side when the load factor approaches a predetermined value (e.g., 100%). Note that the dangerous side means that the attitude of the crane C changes so that the load factor increases. In contrast, the safe side means that the attitude of the crane C changes so that the load factor decreases.

<Addition of Reference Example>

In step S1213, the first control unit 82 (specifically, display assistance control unit 175) may reflect the acquired rated total load on the display of the display unit 78.

In step S1202, the information acquisition unit 173 may acquire information on the attitude condition included in the parameter from an attitude detection device (not illustrated) provided outside the crane C. The attitude detection device includes, for example, an imaging unit (e.g., camera) that photographs the crane C, and an image analysis unit that analyzes an image generated by an imaging device to acquire the attitude condition of the crane C. In this case, the attitude detection unit 75 of the crane C may be omitted.

<Action/Effect of Present Reference Example>

According to the present reference example having the above configuration, it is not necessary for the crane C to include a high-performance calculator for calculating performance information. Thus, the manufacturing cost of the crane C can be reduced. It is not necessary for the crane C to include a rated total load table and an interpolation calculation expression for calculating performance information. Therefore, the work of updating the rated total load table and the interpolation calculation expression for each crane C becomes unnecessary. Therefore, the maintenance cost for updating can be reduced. Since the cranes C of the same model acquire the rated total load from a common server, the calculation results by the overload prevention device are not different between the cranes C. Therefore, work efficiency and safety can be improved. Furthermore, the server can perform advanced calculations that cannot be performed by the calculator mounted on the work machine, such as calculation related to interference check between the building and work machine created from 3D-CAD data and point group data, and calculation of information used for emphasis control with another work machine.

[Addition]

The present invention can take the following aspects.

<Aspect A.1>

A performance information calculation server including:

a request acquisition unit that acquires a request including an attitude condition that defines an attitude of an image of a work machine, a performance information request that specifies performance information of the work machine, and model information from a terminal on which an image generation application operates;
a storage unit that stores a calculation expression used for calculation of the performance information, and specification data of the work machine;
a calculation unit that executes calculation of the performance information having been specified by the performance information request on the basis of the attitude condition, the performance information request, and the model information that have been acquired from the request, and the calculation expression and the specification data that have been acquired from the storage unit; and
a response presentation unit that presents a response including a result of the calculation to the terminal.

<Aspect A.2>

The performance information calculation server according to the aspect A.1, wherein

the calculation unit
selects the calculation expression to be used for the calculation on the basis of the performance information request included in the acquired request,
selects the specification data to be used for the calculation on the basis of the model information included in the acquired request, and
executes the calculation on the basis of the attitude condition that has been acquired, and the calculation expression and the specification data that have been selected.

<Aspect A.3>

The performance information calculation server according to the aspect A.1, wherein

the storage unit stores performance data associated with an attitude condition of the work machine, and
the calculation unit
selects the calculation expression to be used for the calculation on the basis of the performance information request included in the acquired request,
selects the specification data and the performance data to be used for the calculation on the basis of the model information and the attitude condition included in the acquired request, and
executes interpolation calculation for calculating the performance information on the basis of the attitude condition that has been acquired, and the calculation expression, the specification data, and the performance data that have been selected.

<Aspect A.4>

The performance information calculation server according to the aspect A.1, wherein

the storage unit stores a performance table in which the attitude condition and performance data are associated, and
the calculation unit
selects the calculation expression to be used for the calculation on the basis of the performance information request included in the acquired request,
selects the specification data and the performance table to be used for the calculation on the basis of the model information and the attitude condition included in the acquired request, and
calculates the performance information by executing interpolation calculation for interpolating data between data of the performance table on the basis of the attitude condition that has been acquired, and the calculation expression, the specification data, and the performance table that have been selected.

<Aspect A.5>

The performance information calculation server according to the aspect A.1, wherein the calculation unit acquires only an attitude condition necessary for the calculation from the request when the request includes an attitude condition unnecessary for the calculation.

<Aspect A.6>

The performance information calculation server according to the aspect A.1, wherein the request acquisition unit and the response presentation unit communicate with the terminal via an HTTPS protocol.

<Aspect A.7>

The performance information calculation server according to the aspect A.1, wherein the calculation unit determines whether or not the work machine in the image can carry out a predetermined work in an attitude of the work machine defined by the acquired attitude condition on the basis of the performance information acquired by calculation, and presents a response including a determination result to the terminal.

<Aspect A.8>

A client terminal that can be selectively connected to the plurality of performance information calculation servers according to the aspect A.1, the client terminal including:

an input unit that receives selection of a work machine to be displayed on a display unit from among a plurality of work machines;
a storage unit that stores an address table in which model information of the plurality of work machines and the performance information calculation server corresponding to the model information are associated; and
a control unit that selects the performance information calculation server corresponding to the work machine having been selected with reference to the address table, sends a request including an attitude condition defining an attitude of the selected work machine to the selected performance information calculation server, and receives a response including performance information of the selected work machine from the performance information calculation server.

<Aspect A.9>

A method for acquiring performance information that is executed at a terminal that can be selectively connected to the plurality of performance information calculation servers according to the aspect A.1, the method for acquiring performance information, wherein

the terminal has an address table that associates model information of a plurality of work machines with the performance information calculation server corresponding to the model information, respectively, and
the method for acquiring performance information includes
a step of receiving selection of a work machine to be displayed on a display unit,
a step of selecting the performance information calculation server corresponding to the selected work machine with reference to the address table,
a step of transmitting a request including an attitude condition defining an attitude of the selected work machine to the selected performance information calculation server, and
a step of receiving a response including the performance information from the performance information calculation server.

<Aspect A.10>

A method for providing performance information that is executed by a performance information calculation server, the method for providing performance information, wherein

the performance information calculation server stores in advance a calculation expression for calculating performance information of a work machine and specification data of the work machine, and
the method for providing performance information including
a step of acquiring a request including an attitude condition defining an attitude of a display image of the work machine, a performance information request specifying required performance information, and model information from a terminal on which an image generation application operates,
a step of executing calculation of the performance information having been specified by the performance information request on the basis of the attitude condition, the performance information request, and the model information that have been acquired from the request, and the calculation expression and the specification data that have been stored, and
a step of presenting a response including a result of the calculation to the terminal.

<Aspect A.11>

The method for providing performance information according to the aspect A.10, wherein

a step of executing the calculation includes
selecting the calculation expression to be used for the calculation on the basis of the performance information request included in the acquired request,
selecting specification data to be used for the calculation on the basis of the model information included in the acquired request, and
executing the calculation on the basis of the attitude condition that has been acquired, and the calculation expression and the specification data that have been selected.

<Aspect A.12>

The method for providing performance information according to the aspect A.10, wherein

the performance information calculation server stores performance data associated with an attitude condition of the work machine, and
a step of executing the calculation includes
selecting the calculation expression to be used for the calculation on the basis of the performance information request included in the acquired request,
selecting the specification data and the performance data to be used for the calculation on the basis of the model information and the attitude condition included in the acquired request, and
executing an interpolation calculation for calculating the performance information on the basis of the attitude condition that has been acquired, and the calculation expression, the specification data, and the performance data that have been selected.

<Aspect A.13>

The method for providing performance information according to the aspect A.10, wherein

the performance information calculation server stores a performance table in which an attitude condition of the work machine and performance data are associated, and
a step of executing the calculation includes
selecting the calculation expression to be used for the calculation on the basis of the performance information request included in the acquired request,
selecting the specification data and the performance table to be used for the calculation on the basis of the model information and the attitude condition included in the acquired request, and
calculating the performance information by executing an interpolation calculation for interpolating data between data of the performance table on the basis of the attitude condition that has been acquired, and the calculation expression, the specification data, and the performance table that have been selected.

<Aspect A.14>

The method for providing performance information according to the aspect A.10, wherein a communication protocol used in a step of acquiring the request from the terminal and a step of presenting the response to the terminal is an HTTPS protocol.
The present invention can further take the following aspects.

<Aspect B.1>

An image generation application assistance module that operates in cooperation with an image generation application that generates an image of a work machine, the image generation application assistance module including:

an attitude condition acquisition unit that acquires an attitude condition defining an attitude of the work machine in the image;

a performance information acquisition unit that transmits a request including the acquired attitude condition, a performance information request for specifying performance information of the work machine, and model information of the work machine to a performance information calculation server, and receives a response including the performance information having been specified by the performance information request from the performance information calculation server; and

a drawing assistance unit that reflects the received performance information on an image to be displayed.

<Aspect B.2>

The image generation application assistance module according to the aspect B.1, wherein

the attitude condition acquisition unit acquires only the attitude condition necessary for calculation of the performance information to be specified by the performance information request, and

the performance information acquisition unit transmits a request including an attitude condition necessary for the calculation to the performance information calculation server.

<Aspect B.3>

The image generation application assistance module according to the aspect B.1, wherein

the attitude condition acquisition unit acquires a predetermined type of the attitude condition regardless of the performance information to be specified by the performance information request, and

the performance information acquisition unit transmits a request including the acquired attitude condition to the performance information calculation server.

<Aspect B.4>

The image generation application assistance module according to the aspect B.1, wherein the performance information acquisition unit acquires the attitude condition, the performance information request, and the model information from the image generation application on the basis of an operation input by an operator, and generates the request.

<Aspect B.5>

The image generation application assistance module according to the aspect B.1, wherein

the performance information acquisition unit receives, from the performance information calculation server, a response including a determination result as to whether or not the work machine having an attitude defined by the attitude condition included in the request can carry out a predetermined work, and

the drawing assistance unit displays, on a display unit, information on the determination result.

<Aspect B.6>

The image generation application assistance module according to the aspect B.1 further including:

an address table in which model information of the plurality of work machines and the performance information calculation server corresponding to the model information are associated, wherein

the performance information acquisition unit selects the performance information calculation server corresponding to the model information included in the request with reference to the address table, and acquires the response including the performance information having been specified in the performance information request from the selected performance information calculation server.

<Aspect B.7>

An image generation application including

an image generation module that generates an image of a work machine;

an attitude condition acquisition unit that acquires an attitude condition defining an attitude of the work machine in the image;

a performance information acquisition unit that transmits a request including the acquired attitude condition, a performance information request for specifying performance information of the work machine, and model information to a performance information calculation server, and receives a response including the performance information having been specified by the performance information request from the performance information calculation server; and

a drawing assistance unit that reflects the received performance information on an image to be displayed or displays the received performance information on a display unit.

<Aspect B.8>

The image generation application according to the aspect B.7, wherein

the attitude condition acquisition unit acquires only the attitude condition necessary for calculation of the performance information to be specified by the performance information request, and

the performance information acquisition unit transmits a request including an attitude condition necessary for the calculation to the performance information calculation server.

<Aspect B.9>

The image generation application according to the aspect B.7, wherein

the attitude condition acquisition unit acquires a predetermined type of the attitude condition regardless of the performance information to be specified by the performance information request, and

the performance information acquisition unit transmits a request including the acquired attitude condition to the performance information calculation server.

<Aspect B.10>

The image generation application according to the aspect B.7, wherein the performance information acquisition unit acquires the attitude condition, the performance information request, and the model information from the image generation application on the basis of an operation input by an operator, and generates the request.

<Aspect B.11>

The image generation application according to the aspect B.7, wherein

the performance information acquisition unit receives, from the performance information calculation server, a response including a determination result as to whether or not the work machine having an attitude defined by the attitude condition included in the request can carry out a predetermined work, and

the drawing assistance unit displays, on a display unit, whether or not the carrying out is possible.

<Aspect B.12>

The image generation application according to the aspect B.7 further including:

an address table in which model information of the plurality of work machines and the performance information calculation server corresponding to the model information are associated, wherein

the performance information acquisition unit selects the performance information calculation server corresponding to the model information included in the request with reference to the address table, and acquires the response including the performance information having been specified in the performance information request from the selected performance information calculation server.

<Aspect C.1>

A performance information calculation system including:

a terminal on which an image generation application that generates an image of a work machine operates, and a performance information calculation server that provides the image generation application with performance information of the work machine, wherein

the terminal

transmits a request including an attitude condition that defines an attitude of a work machine in the image generated by the image generation application, a performance information request for specifying the performance information, and model information to the performance information calculation server, and

the performance information calculation server

stores a calculation expression for calculating the performance information, and specification data of the work machine and

calculates the performance information having been specified by the performance information request by using the attitude condition, the performance information request, and the model information, which are included in the acquired request, and the calculation expression and the specification data that have been stored, and transmits a response including a calculation result to the terminal.

<Aspect C.2>

The performance information calculation system according to the aspect C.1, wherein

the performance information calculation server stores performance data associated with an attitude condition of the work machine,

selects a calculation expression to be used for the calculation on the basis of the performance information request included in the acquired request, and

selects the specification data and the performance data used for the calculation on the basis of the model information and the attitude condition included in the acquired request, and executes interpolation calculation for calculating the performance information.

<Aspect C.3>

A method for providing performance information that is executed by a performance information calculation system including a terminal on which an image generation application that generates an image of a work machine operates, and a performance information calculation server that calculates performance information of the work machine, the method for providing performance information, wherein

the terminal executes

processing of causing a display unit to display an image of the work machine,

processing of acquiring an attitude condition of an image of the work machine,

processing of transmitting a request including a performance information request specifying the performance information, the acquired attitude condition, and model information of the work machine to a performance information calculation server, and

processing of receiving a response including the performance information having been specified by the performance information request from the performance information calculation server, and

the performance information calculation server executes

processing of calculating the performance information having been specified by the performance information request on the basis of the performance information request, the attitude condition, and the model information, which are included in the received request, and a calculation expression and specification data of the work machine, which are stored in advance, and

processing of transmitting a response including a calculation result to the terminal.

<Aspect C.4>

The performance information calculation system according to the aspect C.1, wherein

the performance information calculation server stores performance data associated with an attitude condition of the work machine, and

the performance information calculation server

selecting a calculation expression to be used for the calculation on the basis of the performance information request included in the acquired request in processing of calculating the performance information, selecting the specification data and the performance data to be used for the calculation on the basis of the model information and the attitude condition included in the acquired request, and executes an interpolation calculation for calculating the performance information.

<Aspect D.1>

An image generation application assistance module that operates in cooperation with an image generation application that generates an image of a work machine, the image generation application assistance module including:

an attitude condition acquisition unit that acquires an attitude condition defining an attitude of a work machine in the image;
a performance information acquisition unit that transmits a request including the acquired attitude condition, a performance information request for specifying performance information of the work machine, and model information of the work machine to a performance information calculation server, and receives a response including the performance information having been specified by the performance information request from the performance information calculation server; and
a deformation image generation unit that generates a deformation image related to an image of the work machine on the basis of the received performance information.

<Aspect D.2>

The image generation application assistance module according to the aspect D.1, wherein the deformation image generation unit generates, as the deformation image, an image in which an arm of a work machine in the image is deformed.

<Aspect D.3>

The image generation application assistance module according to the aspect D.2 further including a notification unit that notifies a warning when the deformation image interferes with an image of another object.

<Aspect D.4>

The image generation application assistance module according to the aspect D.1, wherein the deformation image generation unit generates, as the deformation image, an image indicating the work machine or a movable area of the work machine including a load.

<Aspect D.5>

The image generation application assistance module according to the aspect D.4 further including a notification unit that notifies a warning when the deformation image interferes with an image of another object.
The disclosures in the description, drawings and abstract contained in the Japanese application of Japanese Patent Application No. 2020-18327 filed on Feb. 5, 2020 are all incorporated herein by reference.

Industrial Applicability

The present invention can be preferably used for design and work planning of a building in consideration of the work of a work machine such as a crane.

Reference Signs List

BS BIM assistance system
A BIM application
M Assistance module
M1 to M4 Manufacturer
SP Start point
FP End point

C Crane

R1, R2 Image of movement route of load

T Client terminal

11 Input unit

12 Display unit

13 Communication unit

14 Storage unit

141 First storage unit

142 Second storage unit

143 Third storage unit

15 Control unit

16 First control unit

161 BIM control unit

162 Display control unit

17 Second control unit

171 Communication control unit

172 Assistance control unit

173 Information acquisition unit

174 Request issuance unit

175 Display assistance control unit

176 Area image processing unit

177 Deformation image processing unit

G1, G1A, G1B, G1C, G1D, G1E Building image

G2, G21, G2A, G21A, G2B, G21C, G22C, G22D, G22E Work machine image

G21D, G21E, G21F Work machine image

G23 Pre-movement work machine image

G24 Post-movement work machine image

G3 Notification image

G31 Image of fuel consumption information

G4, G4AArea image

G41 Noise distribution image

G42 Exhaust gas distribution image

G5, G5ADeformation image

G6, G6AWork site image

G72 Building

G73 Fence

G74 Outdoor unit

G75 Power pole

G76 Tree

G77 Opposite lane

G78 Steel structure

G79, G79A, G79B Image of boom

G79a Image of base end side boom

G79b, G79c Image of intermediate boom

G79d Image of tip end side boom

G80 Image of movable range of load

G9 Passageway image

S1, S2, S3, S4 Server

21 Communication unit

22 Control unit

221 Request acquisition unit

222 Calculation unit

223 Response issuance unit

23 Storage unit

24 Performance data table

31, 31a, 31b, 31c Request

32 Server specifying information

33 Performance information request

33a Model information request

33b Environmental load information request

33c Movement route information request

34, 34a, 34b, 34c Parameter

35 Calculation expression

36 Specification data

37 Performance information

37a Model information

37b Environmental load information

37c Information on movement route

38, 38a, 38b, 38c Response

4 Toolbar

41a, 41b Icon

42 Crane selection screen

42a Mode selection section

43 Condition selection section

43a First selection section

43b Second selection section

43c Third selection section

43d Fourth selection section

43e Fifth selection section

43f Sixth selection section

43g Seventh selection section

43h Eighth selection section

43i Ninth selection section

44 List display section

45 Crane adjustment screen

46 Attitude adjustment section

46a First adjustment section

46b Second adjustment section

46c Third adjustment section

46d Fourth adjustment section

46e First input section

46f Second input section

46g Third input section

46h Fourth input section

47a, 47b Input screen

48 List

6 Travel body

61 Front tire

62 Rear tire

63 Outrigger

7 Turn body

71 Turn table

72 Boom

72a Jib

73 Actuator

731 Turn actuator

732 Hoist actuator

733 Telescopic actuator

734 Winch actuator

74 Operation input unit

75 Attitude detection unit

76 Load detection unit

77 Information input unit

78 Display unit

79 Communication unit

80 Storage unit

801 First storage unit
802 Second storage unit
81 Control unit
82 First control unit
821 Operation control unit
822 Display control unit
83 Second control unit
N Network
1001, 2001 Processor
1002 Input device
1003 Output device
1004, 2002 Memory
1005, 2003 Storage
1006, 2004 Communication interface (Communication IF)
1007, 2005 Power supply circuit
1008, 2006 Bus

**Claims**

1. A performance information server, comprising:

   a request acquisition unit that acquires, from a work machine display operation application operating on a terminal capable of displaying an image including a work machine, a request including a conveyance condition under which the work machine conveys a load;
   a storage unit that stores specification data of the work machine in mapping with model information of a work machine;
   a control unit that acquires model information of a work machine having a capability to convey the load under the conveyance condition by referring to the specification data; and
   a response presentation unit that presents a response including the model information acquired by the control unit to the work machine display operation application.

2. The performance information server according to claim 1, wherein:
   the conveyance condition includes information on a weight of the load, information on a position of a conveyance source of the load, information on a position of a conveyance destination of the load, and information on an arrangement position of a work machine.

3. The performance information server according to claim 2, wherein:

   the request acquisition unit acquires the request that further includes information on an image of a building as the conveyance condition; and
   the control unit acquires the model information of a work machine having a capability to convey the load without interfering with the building under the conveyance condition by referring to the specification data.

4. The performance information server according to claim 2 or 3, wherein:

   the request acquisition unit acquires the request that further includes information on a conveyance route of the load as the conveyance condition; and
   the control unit acquires the model information of a work machine having a capability to convey the load through the conveyance route under the conveyance condition by referring to the specification data.

5. The performance information server according to any one of claims 2 to 4, wherein:

   the request acquisition unit acquires the request further including a threshold regarding a safety factor, which is a value obtained by dividing a rated total load of the work machine by a weight of the load; and
   the control unit acquires the model information of a work machine, which has a capability to convey the load with a safety factor during conveyance being at or above the threshold of the safety factor included in the request under the conveyance condition, by referring to the specification data.

**6.** The performance information server according to any one of claims 2 to 5, wherein:

the request acquisition unit acquires the request further including at least one of a condition regarding a type of the work machine and a condition regarding a manufacturer of the work machine as a model condition; and the control unit acquires the model information of a work machine, which has a capability to convey the load under the conveyance condition and satifies the model condition, by referring to the specification data.

**7.** A work machine display operation application operating on a terminal capable of displaying an image including a work machine, comprising:

a request issuance function unit that sends a request including a conveyance condition, under which the work machine conveys a load, to a performance information server;
a response acquisition function unit that acquires, from the performance information server, a response including model information of a work machine which has a capability to convey the load under the conveyance condition; and
a control function unit that reflects contents of the response on a display of a display unit of the terminal.

**8.** The work machine display operation application according to claim 7, wherein:
the conveyance condition includes information on a weight of the load, information on a position of a conveyance source of the load, information on a position of a conveyance destination of the load, and information on an arrangement position of a work machine.

**9.** The work machine display operation application according to claim 8, wherein:

the request issuance function unit sends the request, which further includes information on an image of a building displayed on a display unit of the terminal as the conveyance condition, to the performance information server; and
the response acquisition function unit acquires, from the performance information server, a response including the model information of a work machine which has a capability to convey the load without interfering with the building under the conveyance condition.

**10.** The work machine display operation application according to claim 8 or 9, wherein:
the control function unit selects, from work machines corresponding to model information included in the response, a work machine that has a capability to convey the load without interfering with a building displayed on a display unit of the terminal under the conveyance condition.

**11.** The work machine display operation application according to any one of claims 8 to 10, wherein:

the request issuance function unit sends the request, which further includes information on a conveyance route of the load as the conveyance condition, to the performance information server; and
the response acquisition function unit acquires, from the performance information server, the response including the model information of a work machine which has a capability to convey the load through the conveyance route under the conveyance condition.

**12.** The work machine display operation application according to any one of claims 8 to 11, wherein:

the request issuance function unit sequentially sends the request to a plurality of the performance information servers connected to the terminal; and
the response acquisition function unit acquires the response from each of the plurality of performance information servers.

**13.** The work machine display operation application according to any one of claims 8 to 12, wherein:
the control function unit causes the display unit to display model information included in the response as a list, and causes an image of a work machine corresponding to model information selected by a user from the list to be displayed at the arrangement position on the display unit.

**14.** A method for providing model information that is executed by a performance information server connected to a terminal where a work machine display operation application capable of displaying an image of a work machine on a display unit operates,
wherein the performance information server pre-stores specification data of a work machine in mapping with model information of a work machine, the method comprising:

acquiring a request including a conveyance condition, under which the work machine conveys a load, from the work machine display operation application;
acquiring model information of a work machine, which has a capability to convey the load under the conveyance condition, by referring to the specification data; and
presenting a response including the acquired model information to the work machine display operation application.

15. A method for acquiring model information that is executed by a work machine display operation application capable of displaying an image of a work machine on a display unit, comprising:

receiving input of a conveyance condition under which the work machine conveys a load;
sending a request including the conveyance condition to a performance information server connected to the work machine display operation application; and
receiving a response, which includes model information of a work machine having a capability to convey the load under the conveyance condition, from the performance information server.

16. A model information acquisition system, comprising:

a work machine display operation application operating on a terminal capable of displaying an image including a work machine; and a performance information server connected to the terminal, wherein
the work machine display operation application
receives input of a conveyance condition under which the work machine conveys a load, and
sends a request including the conveyance condition to the performance information server; and
the performance information server
pre-stores specification data of the work machine in mapping with model information of a work machine,
acquires the request from the work machine display operation application,
acquires the model information of a work machine having a capability to convey the load under the conveyance condition by referring to the specification data, and
presents a response including the acquired model information to the work machine display operation application.

# FIG. 1

## FIG. 2

# FIG. 3

T

**CLIENT TERMINAL**

1008

1001
PROCESSOR

1006
COMMUNICATION IF

1007
POWER SUPPLY CIRCUIT

1002
INPUT DEVICE

1003
OUTPUT DEVICE

1004
MEMORY

1005
STORAGE

# FIG. 4

SERVER

2006

2001 PROCESSOR

2004 COMMUNICATION IF

2002 MEMORY

2005 POWER SUPPLY CIRCUIT

2003 STORAGE

S1

# FIG. 5

24

| OUTRIGGER MAXIMUM OVERHANG (6.6m) | | | | |
|---|---|---|---|---|
| BOOM LENGTH<br><br>OPERATING RADIUS | 9.35m | 16.4m | 23.45m | 30.5m |
| 2.5m | 25.0t | 18.0t | 12.5t | |
| 3.0m | 25.0t | 18.0t | 12.5t | |
| 3.5m | 25.0t | 18.0t | 12.5t | 8.0t |
| 4.0m | 23.5t | 18.0t | 12.5t | 8.0t |
| 4.5m | 21.5t | 18.0t | 12.5t | 8.0t |
| 5.0m | 19.6t | 18.0t | 12.5t | 8.0t |
| 5.5m | 17.8t | 17.0t | 12.5t | 8.0t |
| 6.0m | 16.3t | 16.0t | 12.5t | 8.0t |
| 6.5m | 15.1t | 15.0t | 12.25t | 8.0t |
| 7.0m | | 14.0t | 11.5t | 8.0t |
| 8.0m | | 11.4t | 10.2t | 8.0t |
| 9.0m | | 9.3t | 9.0t | 8.0t |
| 10.0m | | 7.8t | 7.6t | 7.15t |
| 11.0m | | 6.5t | 6.65t | 6.4t |

# FIG. 6A

FIG. 6B

## FIG. 6C

FIG. 6D

T

31c

S1

SERVER

REQUEST

SERVER SPECIFYING
INFORMATION — 32

CLIENT
TERMINAL

MOVEMENT
INFORMATION REQUEST
— 33c

PARAMETERS — 34c

23 —

STORAGE UNIT

SPECIFICATION
DATA

38c

RESPONSE

TERMINAL SPECIFYING
INFORMATION

INFORMATION ON
MOVEMENT ROUTE

37c

CALCULATION UNIT — 222

## FIG. 7A

```
                    START

        DISPLAY WORK MACHINE IMAGE              S100

      DISPLAY WORK MACHINE IMAG                 S101
       WITH CHANGED ATTITUDE

          ACQUIRE PARAMETERS                    S102

         GENERATE REQUEST AND                   S103
        TRANSMIT IT TO SERVER

            RECEIVE REQUEST                     S104

     EXTRACT PERFORMANCE INFORMATION            S105
        REQUEST AND PARAMETERS

      ACQUIRE CALCULATION EXPRESSION            S106

       ACQUIRE SPECIFICATION DATA               S107

      ACQUIRE PERFORMANCE DATA TABLE            S108

        CALCULATE RATED TOTAL LOAD              S109

         GENERATE RESPONSE AND                  S110
      TRANSMIT IT TO CLIENT TERMINAL

           RECEIVE RESPONSE                     S111

      REFLECT RESPONSE ON DISPLAY UNIT          S112

                     END
```

## FIG. 7B

FILE  BUILDING  STRUCTURE  EQUIPMENT  INSERT  NOTE  ANALYSIS

41a

41b

CRANE
PLACEMENT

PLACED CRANE
ADJUSTMENT

SETTINGS

4

CRANE IMAGE OPERATION ASSISTANCE TOOL

## FIG. 7C

42

| CRANE SELECTION | SETTINGS | | | | | | | | |
|---|---|---|---|---|---|---|---|---|---|

CRANE SELECTION FILTER

SIMPLE  DETAILS  —42a

UNIT SELECTION
● METRIC SYSTEM
○ IMPERIAL SYSTEM

CRANE TYPE — TYPE A — 43a

CRANE MANUFACTURER — MANUFACTURER A — 43b

JIB TYPE — 43c

MAXIMUM LIFTING WEIGHT — 400 TO 500t — 43d

MAXIMUM LIFT ABOVE GROUND LEVEL — 43e

MAXIMUM OPERATING RADIUS — 43f

MAXIMUM BOOM LENGTH — 43g

COUNTERWEIGHT — 43h

HOOK — 43i

REMARKS

43

DISPLAY SETTINGS

| MODEL NUMBER | CRANE TYPE | CRANE MANUFACTURER | JIB TYPE | MAXIMUM LIFTING WEIGHT | MAXIMUM LIFT ABOVE GROUND LEVEL | MAXIMUM OPERATING RADIUS | COUNTERWEIGHT | HOOK | TOTAL LENGTH |
|---|---|---|---|---|---|---|---|---|---|
| AA-BBBB | TYPE A | MANUFACTURER A | BOOM | | | | | | |

44

CANCEL  APPLY (PLACE)

## F I G. 7D

CRANE SELECTION FILTER

| SIMPLE | DETAILS |

| | |
|---|---|
| CRANE TYPE | TYPE A ▾ |
| CRANE MANUFACTURER | |
| JIB TYPE | TYPE A |
| MAXIMUM LIFTING WEIGHT | TYPE B |
| MAXIMUM LIFT ABOVE GROUND LEVEL | TYPE C |
| | TYPE D |
| | TYPE E |
| | TYPE F |
| | TYPE G |
| MAXIMUM OPERATING RADIUS | |
| MAXIMUM BOOM LENGTH | ▾ |
| COUNTERWEIGHT | ▾ |
| HOOK | ▾ |
| REMARKS | |

UNIT SELECTION
◉ METRIC SYSTEM
○ IMPERIAL SYSTEM

## F I G. 7E

CRANE SELECTION FILTER

| SIMPLE | DETAILS |

| | |
|---|---|
| CRANE TYPE | TYPE A ▾ |
| CRANE MANUFACTURER | MANUFACTURER A ▾ |
| JIB TYPE | MANUFACTURER A |
| MAXIMUM LIFTING WEIGHT | MANUFACTURER B |
| MAXIMUM LIFT ABOVE GROUND LEVEL | MANUFACTURER C |
| | MANUFACTURER D |
| MAXIMUM OPERATING RADIUS | MANUFACTURER E |
| | MANUFACTURER F |
| | MANUFACTURER G |
| MAXIMUM BOOM LENGTH | ▾ |
| COUNTERWEIGHT | ▾ |
| HOOK | ▾ |
| REMARKS | |

UNIT SELECTION
◉ METRIC SYSTEM
○ IMPERIAL SYSTEM

## F I G. 7F

45

PLACED CRANE LIST

AA-BBBB ▾

LIFTING MEMBER SELECTION

CRANE ADJUSTMENT

| MAIN BODY | 46a | 46e |
|---|---|---|
| | | 20 ⬍ DEGREES |
| ROTATING TABLE | 46b | 46f |
| | | 40 ⬍ DEGREES |
| BOOM LENGTH | 46c | 46g |
| | | 20 ⬍ m |
| BOOM ANGLE | 46d | 46h |
| | | 60 ⬍ DEGREES |

## FIG. 8A

## FIG. 8B

## FIG. 8C

RATED TOTAL LOAD UNDER
SPECIFIED CONDITION

15t

OK

# F I G. 9

START

| DISPLAY WORK MACHINE IMAGE | S200 |

| DISPLAY WORK MACHINE IMAGE WITH CHANGED ATTITUDE | S201 |

| ACQUIRE PARAMETERS | S202 |

| GENERATE REQUEST AND TRANSMIT IT TO SERVER | S203 |

| RECEIVE REQUEST | S204 |

| EXTRACT PERFORMANCE INFORMATION REQUEST AND PARAMETERS | S205 |

| ACQUIRE CALCULATION EXPRESSION | S206 |

| ACQUIRE SPECIFICATION DATA | S207 |

| ACQUIRE PERFORMANCE DATA TABLE | S208 |

| CALCULATE AREA IMAGE INFORMATION | S209 |

| GENERATE RESPONSE AND TRANSMIT IT TO CLIENT TERMINAL | S210 |

| RECEIVE RESPONSE | S211 |

| GENERATE AREA IMAGE | S212 |

| REFLECT AREA IMAGE ON DISPLAY UNIT | S213 |

END

## FIG. 10A

## FIG. 10B

# FIG. 10C

# F I G. 11

```
                    ┌──────────┐
                    │  START   │
                    └──────────┘
                         │
                         ▼
        ┌─────────────────────────────────────┐   S300
        │     DISPLAY WORK MACHINE IMAGE       │
        └─────────────────────────────────────┘
                         │
                         ▼
        ┌─────────────────────────────────────┐   S301
        │     DISPLAY WORK MACHINE IMAGE       │
        │        WITH CHANGED ATTITUDE         │
        └─────────────────────────────────────┘
                         │
                         ▼
        ┌─────────────────────────────────────┐   S302
        │          ACQUIRE PARAMETERS          │
        └─────────────────────────────────────┘
                         │
                         ▼
        ┌─────────────────────────────────────┐   S303
        │        GENERATE REQUEST AND          │
        │         TRANSMIT IT TO SERVER        │
        └─────────────────────────────────────┘
                         │
                         ▼
        ┌─────────────────────────────────────┐   S304
        │           RECEIVE REQUEST            │
        └─────────────────────────────────────┘
                         │
                         ▼
        ┌─────────────────────────────────────┐   S305
        │   EXTRACT PERFORMANCE INFORMATION    │
        │        REQUEST AND PARAMETERS        │
        └─────────────────────────────────────┘
                         │
                         ▼
        ┌─────────────────────────────────────┐   S306
        │     ACQUIRE CALCULATION EXPRESSION   │
        └─────────────────────────────────────┘
                         │
                         ▼
        ┌─────────────────────────────────────┐   S307
        │        ACQUIRE SPECIFICATION DATA    │
        └─────────────────────────────────────┘
                         │
                         ▼
        ┌─────────────────────────────────────┐   S308
        │  CALCULATE DEFORMATION IMAGE INFORMATION │
        └─────────────────────────────────────┘
                         │
                         ▼
        ┌─────────────────────────────────────┐   S309
        │        GENERATE RESPONSE AND         │
        │     TRANSMIT IT TO CLIENT TERMINAL   │
        └─────────────────────────────────────┘
                         │
                         ▼
        ┌─────────────────────────────────────┐   S310
        │           RECEIVE RESPONSE           │
        └─────────────────────────────────────┘
                         │
                         ▼
        ┌─────────────────────────────────────┐   S311
        │       GENERATE DEFORMATION IMAGE     │
        └─────────────────────────────────────┘
                         │
                         ▼
        ┌─────────────────────────────────────┐   S312
        │  REFLECT DEFORMATION IMAGE ON DISPLAY UNIT │
        └─────────────────────────────────────┘
                         │
                         ▼
                    ┌──────────┐
                    │   END    │
                    └──────────┘
```

## F I G. 12A

## F I G. 12B

EP 4 102 446 A1

## FIG. 13A

## FIG. 13B

## FIG. 13C

100

# FIG. 14

```
        ( START )
            │
            ▼
┌─────────────────────────────┐
│  DISPLAY WORK MACHINE IMAGE │──S400
└─────────────────────────────┘
            │
            ▼
┌─────────────────────────────┐
│ DISPLAY WORK MACHINE IMAGE  │──S401
│     WITH CHANGED ATTITUDE   │
└─────────────────────────────┘
            │
            ▼
┌─────────────────────────────┐
│      ACQUIRE PARAMETERS     │──S402
└─────────────────────────────┘
            │
            ▼
┌─────────────────────────────┐
│     GENERATE REQUEST AND    │──S403
│     TRANSMIT IT TO SERVER   │
└─────────────────────────────┘
            │
            ▼
┌─────────────────────────────┐
│        RECEIVE REQUEST      │──S404
└─────────────────────────────┘
            │
            ▼
┌─────────────────────────────┐
│ EXTRACT PERFORMANCE         │──S405
│ INFORMATION REQUEST AND     │
│ PARAMETERS                  │
└─────────────────────────────┘
            │
            ▼
┌─────────────────────────────┐
│ ACQUIRE CALCULATION         │──S406
│ EXPRESSION                  │
└─────────────────────────────┘
            │
            ▼
┌─────────────────────────────┐
│  ACQUIRE SPECIFICATION DATA │──S407
└─────────────────────────────┘
            │
            ▼
┌─────────────────────────────┐
│ ACQUIRE PERFORMANCE DATA    │──S408
│ TABLE                       │
└─────────────────────────────┘
            │
            ▼
┌─────────────────────────────┐
│ CALCULATE MAXIMUM LOWERING  │──S409
│ ANGLE AND MAXIMUM OPERATING │
│ RADIUS                      │
└─────────────────────────────┘
            │
            ▼
┌─────────────────────────────┐
│    GENERATE RESPONSE AND    │──S410
│ TRANSMIT IT TO CLIENT       │
│ TERMINAL                    │
└─────────────────────────────┘
            │
            ▼
┌─────────────────────────────┐
│       RECEIVE RESPONSE      │──S411
└─────────────────────────────┘
            │
            ▼
┌─────────────────────────────┐
│ REFLECT RESPONSE ON         │──S412
│ DISPLAY UNIT                │
└─────────────────────────────┘
            │
            ▼
         (  END  )
```

## F I G. 15A

## F I G. 15B

## FIG. 16A

EP 4 102 446 A1

FIG. 16B

G6

G72
G73
G76
G75
G21D

12

## FIG. 16C

## FIG. 16D

## FIG. 16E

FIG. 17A

FIG. 17B

## F I G. 17C

FIG. 17D

## F I G. 17E

12

G6A

G78

G21E

# *FIG. 18A*

*FIG. 18B*

12

G6A

G78

G21E

G5A

$X_1$

$X_1$

## FIG. 18C

FIG. 18D

*FIG. 18E*

## FIG. 19

START

DISPLAY WORK MACHINE IMAGE — S500

DISPLAY WORK MACHINE IMAGE WITH CHANGED ATTITUDE — S501

ACQUIRE PARAMETERS — S502

GENERATE REQUEST AND TRANSMIT IT TO SERVER — S503

RECEIVE REQUEST — S504

EXTRACT PERFORMANCE INFORMATION REQUEST AND PARAMETERS — S505

ACQUIRE CALCULATION EXPRESSION — S506

ACQUIRE SPECIFICATION DATA — S507

CALCULATE — S508

GENERATE RESPONSE AND TRANSMIT IT TO CLIENT TERMINAL — S509

RECEIVE RESPONSE — S510

REFLECT RESPONSE ON DISPLAY UNIT — S511

END

FIG. 20A

FIG. 20B

12

G1D

FP

G22D
C

SP

*FIG. 20C*

# FIG. 21

```
            ┌─────────────┐
            │    START    │
            └──────┬──────┘
                   ▼
┌──────────────────────────────────────┐  S600
│     DISPLAY WORK MACHINE IMAGE        │
└──────────────────┬───────────────────┘
                   ▼
┌──────────────────────────────────────┐  S601
│         ACQUIRE PARAMETERS            │
└──────────────────┬───────────────────┘
                   ▼
┌──────────────────────────────────────┐  S602
│       GENERATE REQUEST AND            │
│       TRANSMIT IT TO SERVER           │
└──────────────────┬───────────────────┘
                   ▼
┌──────────────────────────────────────┐  S603
│          RECEIVE REQUEST              │
└──────────────────┬───────────────────┘
                   ▼
┌──────────────────────────────────────┐  S604
│ EXTRACT PERFORMANCE INFORMATION       │
│    REQUEST AND PARAMETERS             │
└──────────────────┬───────────────────┘
                   ▼
┌──────────────────────────────────────┐  S605
│    ACQUIRE CALCULATION EXPRESSION     │
└──────────────────┬───────────────────┘
                   ▼
┌──────────────────────────────────────┐  S606
│      ACQUIRE SPECIFICATION DATA       │
└──────────────────┬───────────────────┘
                   ▼
┌──────────────────────────────────────┐  S607
│            CALCULATE                  │
└──────────────────┬───────────────────┘
                   ▼
┌──────────────────────────────────────┐  S608
│       GENERATE RESPONSE AND           │
│    TRANSMIT IT TO CLIENT TERMINAL     │
└──────────────────┬───────────────────┘
                   ▼
┌──────────────────────────────────────┐  S609
│          RECEIVE RESPONSE             │
└──────────────────┬───────────────────┘
                   ▼
┌──────────────────────────────────────┐  S610
│    REFLECT RESPONSE ON DISPLAY UNIT   │
└──────────────────┬───────────────────┘
                   ▼
            ┌─────────────┐
            │     END     │
            └─────────────┘
```

# F I G. 22A

# FIG. 22B

FIG. 22C

## FIG. 23

WORK PLAN RELATED TO MOVEMENT ROUTE R2

1. SLING IN STATE OF TURNING ANGLE 180° AND HOIST ANGLE 60°
2. HOISTING 0m → 20m, LOAD FACTOR 85%, AND OPERATING RADIUS 25m
3. HOIST ANGLE 60° → 75°, LOAD FACTOR 70%, OPERATING RADIUS 15m
4. TURNING ANGLE 180° → 90°, LOAD FACTOR 70%, OPERATING RADIUS 15m
5. HOIST ANGLE 75° → 65°, LOAD FACTOR 80%, OPERATING RADIUS 20m
6. AFTER LOWERING 30m → 25m, UNSLINGING

# FIG. 24

```
                    ( START )
                        │
                        ▼
        ┌──────────────────────────────┐
        │  INPUT CONVEYANCE CONDITIONS  │──── S700
        └──────────────────────────────┘
                        │
                        ▼
        ┌──────────────────────────────┐
        │         INPUT MODEL           │
        │     INFORMATION REQUEST       │──── S701
        └──────────────────────────────┘
                        │
                        ▼
        ┌──────────────────────────────┐
        │       ACQUIRE PARAMETERS      │──── S702
        └──────────────────────────────┘
                        │
                        ▼
        ┌──────────────────────────────┐
        │       GENERATE REQUEST        │
        │   AND TRANSMIT IT TO SERVER   │──── S703
        └──────────────────────────────┘
                        │
                        ▼
        ┌──────────────────────────────┐
        │        RECEIVE REQUEST        │──── S704
        └──────────────────────────────┘
                        │
                        ▼
        ┌──────────────────────────────┐
        │       EXTRACT PARAMETERS      │──── S705
        └──────────────────────────────┘
                        │
                        ▼
        ┌──────────────────────────────┐
        │    ACQUIRE MODEL INFORMATION  │──── S706
        └──────────────────────────────┘
                        │
                        ▼
        ┌──────────────────────────────┐
        │     GENERATE RESPONSE AND     │
        │ TRANSMIT IT TO CLIENT TERMINAL│──── S707
        └──────────────────────────────┘
                        │
                        ▼
        ┌──────────────────────────────┐
        │       RECEIVE RESPONSE        │──── S708
        └──────────────────────────────┘
                        │
                        ▼
        ┌──────────────────────────────┐
        │ REFLECT RESPONSE ON DISPLAY UNIT │── S709
        └──────────────────────────────┘
                        │
                        ▼
                    (  END  )
```

## FIG. 25A

SPECIFYING CONDITION  □ ✕

LOAD

SAFETY FACTOR

CRANE TYPE

MANUFACTURER

SEARCH

~12

~47a

## FIG. 25B

SEARCH RESULTS  □ ✕

~12

~48

| No. | MANUFACTURER | MODEL INFORMATION | DEGREE OF SAFETY |
|-----|--------------|-------------------|------------------|
| 1 | COMPANY A | ○○-25-1 | |
| 2 | COMPANY B | △△-250-1 | |
| 3 | COMPANY C | □□-75-1 | |
| | | | |

## FIG. 26

## FIG. 27

START

DISPLAY WORK MACHINE IMAGE — S800

INPUT CONVEYANCE CONDITIONS — S801

ENVIRONMENTAL LOAD INFORMATION REQUEST — S802

ACQUIRE PARAMETERS — S803

GENERATE REQUEST AND TRANSMIT IT TO SERVER — S804

RECEIVE REQUEST — S805

EXTRACT PARAMETERS — S806

ACQUIRE FUEL CONSUMPTION INFORMATION — S807

GENERATE RESPONSE AND TRANSMIT IT TO CLIENT TERMINAL — S808

RECEIVE RESPONSE — S809

REFLECT RESPONSE ON DISPLAY UNIT — S810

END

*F I G. 28*

SPECIFYING CONDITION    □  ✕

LOAD

NUMBER

SEARCH

~12

~47b

# FIG. 29

FIG. 30

12

G1E

G31

FP

FUEL CONSUMPTION : 150L

OK

R1

SP

CP

# FIG. 31

```
        ( START )
            |
            v
DISPLAY WORK MACHINE IMAGE        ~S900
            |
            v
   ENVIRONMENTAL LOAD             ~S901
   INFORMATION REQUEST
            |
            v
   ACQUIRE PARAMETERS             ~S902
            |
            v
   GENERATE REQUEST AND           ~S903
   SEND IT TO SERVER
            |
            v
     RECEIVE REQUEST              ~S904
            |
            v
   EXTRACT PARAMETERS             ~S905
            |
            v
 ACQUIRE NOISE INFORMATION        ~S906
            |
            v
  GENERATE RESPONSE AND           ~S907
 TRANSMIT IT TO CLIENT TERMINAL
            |
            v
    RECEIVE RESPONSE              ~S908
            |
            v
REFLECT RESPONSE ON DISPLAY UNIT  ~S909
            |
            v
         ( END )
```

FIG. 32

# FIG. 33

## FIG. 34

```
                    ( START )
                         │
                         ▼
        ┌──────────────────────────────────┐
        │  DISPLAY WORK MACHINE IMAGE      │ ～ S1000
        └──────────────────────────────────┘
                         │
                         ▼
        ┌──────────────────────────────────┐
        │      ENVIRONMENTAL LOAD          │ ～ S1001
        │      INFORMATION REQUEST         │
        └──────────────────────────────────┘
                         │
                         ▼
        ┌──────────────────────────────────┐
        │       ACQUIRE PARAMETERS         │ ～ S1002
        └──────────────────────────────────┘
                         │
                         ▼
        ┌──────────────────────────────────┐
        │      GENERATE REQUEST AND        │ ～ S1003
        │       SEND IT TO SERVER          │
        └──────────────────────────────────┘
                         │
                         ▼
        ┌──────────────────────────────────┐
        │        RECEIVE REQUEST           │ ～ S1004
        └──────────────────────────────────┘
                         │
                         ▼
        ┌──────────────────────────────────┐
        │       EXTRACT PARAMETERS         │ ～ S1005
        └──────────────────────────────────┘
                         │
                         ▼
        ┌──────────────────────────────────┐
        │  ACQUIRE EXHAUST GAS INFORMATION │ ～ S1006
        └──────────────────────────────────┘
                         │
                         ▼
        ┌──────────────────────────────────┐
        │     GENERATE RESPONSE AND        │ ～ S1007
        │  TRANSMIT IT TO CLIENT TERMINAL  │
        └──────────────────────────────────┘
                         │
                         ▼
        ┌──────────────────────────────────┐
        │       RECEIVE RESPONSE           │ ～ S1008
        └──────────────────────────────────┘
                         │
                         ▼
        ┌──────────────────────────────────┐
        │  REFLECT RESPONSE ON DISPLAY UNIT│ ～ S1009
        └──────────────────────────────────┘
                         │
                         ▼
                     ( END )
```

FIG. 35

12

G1E

G2

FIG. 36

# FIG. 37

```
         ( START )
             │
             ▼
┌─────────────────────────────┐
│ DISPLAY WORK MACHINE IMAGE  │──── S1100
└─────────────────────────────┘
             │
             ▼
┌─────────────────────────────┐
│   INPUT MOVEMENT CONDITIONS │──── S1101
└─────────────────────────────┘
             │
             ▼
┌─────────────────────────────────┐
│ MOVEMENT ROUTE INFORMATION REQUEST │──── S1102
└─────────────────────────────────┘
             │
             ▼
┌─────────────────────────────┐
│      ACQUIRE PARAMETERS     │──── S1103
└─────────────────────────────┘
             │
             ▼
┌─────────────────────────────┐
│     GENERATE REQUEST AND    │──── S1104
│       SEND IT TO SERVER     │
└─────────────────────────────┘
             │
             ▼
┌─────────────────────────────┐
│       RECEIVE REQUEST       │──── S1105
└─────────────────────────────┘
             │
             ▼
┌─────────────────────────────┐
│      EXTRACT PARAMETERS     │──── S1106
└─────────────────────────────┘
             │
             ▼
┌─────────────────────────────┐
│      ACQUIRE INFORMATION    │──── S1107
│       ON MOVEMENT ROUTE     │
└─────────────────────────────┘
             │
             ▼
┌─────────────────────────────────┐
│     GENERATE RESPONSE AND       │──── S1108
│  TRANSMIT IT TO CLIENT TERMINAL │
└─────────────────────────────────┘
             │
             ▼
┌─────────────────────────────┐
│       RECEIVE RESPONSE      │──── S1109
└─────────────────────────────┘
             │
             ▼
┌─────────────────────────────────┐
│ REFLECT RESPONSE ON DISPLAY UNIT │──── S1110
└─────────────────────────────────┘
             │
             ▼
         (  END  )
```

## FIG. 38

*FIG. 39*

FIG. 40

# FIG. 41

## FIG. 42

## F I G. 43

```
            ┌─────────────┐
            │    START    │
            └──────┬──────┘
                   ↓
 ┌──────────────────────────────────┐
 │ RECEIVE INPUT OF PERFORMANCE     │~S1201
 │ INFORMATION REQUEST              │
 └──────────────┬───────────────────┘
                ↓
 ┌──────────────────────────────────┐
 │       ACQUIRE PARAMETERS         │~S1202
 └──────────────┬───────────────────┘
                ↓
 ┌──────────────────────────────────┐
 │     GENERATE REQUEST AND         │~S1203
 │     TRANSMIT IT TO SERVER        │
 └──────────────┬───────────────────┘
                ↓
 ┌──────────────────────────────────┐
 │        RECEIVE REQUEST           │~S1204
 └──────────────┬───────────────────┘
                ↓
 ┌──────────────────────────────────┐
 │  EXTRACT PERFORMANCE INFORMATION │~S1205
 │  REQUEST AND PARAMETERS          │
 └──────────────┬───────────────────┘
                ↓
 ┌──────────────────────────────────┐
 │  ACQUIRE CALCULATION EXPRESSION  │~S1206
 └──────────────┬───────────────────┘
                ↓
 ┌──────────────────────────────────┐
 │   ACQUIRE SPECIFICATION DATA     │~S1207
 └──────────────┬───────────────────┘
                ↓
 ┌──────────────────────────────────┐
 │  ACQUIRE PERFORMANCE DATA TABLE  │~S1208
 └──────────────┬───────────────────┘
                ↓
 ┌──────────────────────────────────┐
 │   CALCULATE RATED TOTAL LOAD     │~S1209
 └──────────────┬───────────────────┘
                ↓
 ┌──────────────────────────────────┐
 │     GENERATE RESPONSE AND        │~S1210
 │  TRANSMIT IT TO CLIENT TERMINAL  │
 └──────────────┬───────────────────┘
                ↓
 ┌──────────────────────────────────┐
 │        RECEIVE RESPONSE          │~S1211
 └──────────────┬───────────────────┘
                ↓
 ┌──────────────────────────────────┐
 │      SEND RATED TOTAL LOAD       │~S1212
 └──────────────┬───────────────────┘
                ↓
 ┌──────────────────────────────────┐
 │  REFLECT TO CONTROL OF ACTUATOR  │~S1213
 └──────────────┬───────────────────┘
                ↓
            ┌─────────────┐
            │     END     │
            └─────────────┘
```

## INTERNATIONAL SEARCH REPORT

| International application No. |
| --- |
| PCT/JP2021/004066 |

### A. CLASSIFICATION OF SUBJECT MATTER

G06Q 50/08(2012.01)i
FI: G06Q50/08

According to International Patent Classification (IPC) or to both national classification and IPC

### B. FIELDS SEARCHED

Minimum documentation searched (classification system followed by classification symbols)
G06Q50/08

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X<br>A | WO 2017/061516 A1 (KOMATSU LTD.) 13 April 2017 (2017-04-13) paragraphs [0014], [0054], [0056], [0058], [0072]-[0074], [0084], [0089]-[0090], [0107], [0144], [0212], fig. 1, 8-10, 22 | 1, 7, 14-16<br>2-6, 8-13 |
| A | WO 2018/105740 A1 (TADANO LTD.) 14 June 2018 (2018-06-14) paragraphs [0052], [0055]-[0065], fig. 3-5 | 1-16 |
| A | JP 2001-220893 A (OBAYASHI CORPORATION) 17 August 2001 (2001-08-17) entire text | 1-16 |
| A | JP 2004-203497 A (TOYOTA INDUSTRIES CORPORATION) 22 July 2004 (2004-07-22) entire text | 1-16 |

☐ Further documents are listed in the continuation of Box C.   ☒ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 26 April 2021 (26.04.2021) | 11 May 2021 (11.05.2021) |

| Name and mailing address of the ISA/ | Authorized officer |
| --- | --- |
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

INTERNATIONAL SEARCH REPORT

Information on patent family members

International application No.

PCT/JP2021/004066

| Patent Documents referred in the Report | Publication Date | Patent Family | Publication Date |
|---|---|---|---|
| WO 2017/061516 A1 | 13 Apr. 2017 | US 2018/0218301 A1 paragraphs [0047], [0090], [0093], [0095], [0115]-[0117], [0131], [0138]-[0139], [0157], [0197], [0265], fig. 1, 8-10, 22 | |
| WO 2018/105740 A1 | 14 Jun. 2018 | JP 2018-95369 A | |
| JP 2001-220893 A | 17 Aug. 2001 | (Family: none) | |
| JP 2004-203497 A | 22 Jul. 2004 | (Family: none) | |

Form PCT/ISA/210 (patent family annex) (January 2015)

**EP 4 102 446 A1**

**Patent documents cited in the description**

- JP 2006318112 A

- JP 2020018327 A